(19) Europäisches Patentamt
European Patent Office
Office européen des brevets

(11) EP 4 726 101 A1

(12) # EUROPEAN PATENT APPLICATION
published in accordance with Art. 153(4) EPC

(43) Date of publication:
**15.04.2026 Bulletin 2026/16**

(21) Application number: **25809905.0**

(22) Date of filing: **09.05.2025**

(51) International Patent Classification (IPC):
***D06M 15/263*** (2006.01) ***C09D 133/00*** (2006.01)
***C09D 183/04*** (2006.01) ***C09K 3/18*** (2006.01)
***D06M 13/17*** (2006.01) ***D06M 13/224*** (2006.01)
***D06M 15/53*** (2006.01) ***D06M 15/643*** (2006.01)

(52) Cooperative Patent Classification (CPC):
**C09D 133/00; C09D 183/04; C09K 3/18; D06M 13/17; D06M 13/224; D06M 15/248; D06M 15/263; D06M 15/53; D06M 15/643**

(86) International application number:
**PCT/JP2025/017094**

(87) International publication number:
**WO 2025/234489 (13.11.2025 Gazette 2025/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.05.2024 CN 202410578745**

(71) Applicant: **Daikin Industries, Ltd.**
**Osaka-shi, Osaka 530-0001 (JP)**

(72) Inventors:
- **HORIKAWA, Nozomi**
  **Osaka-Shi, Osaka 530-0001 (JP)**
- **IOKI, Masato**
  **Osaka-Shi, Osaka 530-0001 (JP)**
- **ISHII, Daiki**
  **Osaka-Shi, Osaka 530-0001 (JP)**
- **FUKUMOTO, Kanako**
  **Osaka-Shi, Osaka 530-0001 (JP)**
- **KUBOTA, Hiroki**
  **Changshu, Jiangsu 215522 (CN)**
- **CAO, Jie**
  **Changshu, Jiangsu 215522 (CN)**
- **ZHU, Wenxu**
  **Changshu, Jiangsu 215522 (CN)**

(74) Representative: **Hoffmann Eitle**
**Patent- und Rechtsanwälte PartmbB**
**Arabellastraße 30**
**81925 München (DE)**

(54) **WATER REPELLENT COMPOSITION AND METHOD FOR PRODUCING SAME**

(57) Provided is a water-repellent composition which impart good water-repellency and good chalk mark resistance to a substrate (particularly a textile product). The water-repellent composition comprising a polymer (A) comprising a repeating unit derived from a hydrocarbon group-containing monomer (a) having a hydrocarbon group having 2 to 40 carbon atoms, and a silicone compound (B) composed of a non-resin-type silicone and a resin-type silicone,
wherein in the GPC chart of the silicone compound (B), a peak top is present in the region of molecular weight of 1,500 or more,
a component of the silicone compound with a molecular weight of 1,500 or more comprises a non-resin-type silicone other than an amino-modified silicone, and
an amount of the silicone compound (B) is 1 to 49% by weight based on a sum of the amount of the polymer (A) and the amount of the silicone compound (B).

EP 4 726 101 A1

## Description

Technical Field

The present disclosure relates to a water-repellent composition, and a method for producing the same.

Background Art

Non-fluorinated water-repellent agents are being developed as water-repellent agents for imparting water-repellency to substrates (particularly textile products).

Citation List

Patent Literature

Patent Literature 1: WO 2020/130002
Patent Literature 2: WO 2019/131456
Patent Literature 3: JP 2017-226946 A

Summary of Invention

Technical Problem

When a water-repellent agent is used in a textile product, not only water-repellency but also chalk mark resistance is required. Chalk mark resistance has not been the focus, nor suggested in conventional water-repellent agents.
An object of the present disclosure is to provide a water-repellent composition that can impart good water-repellency and good chalk mark resistance to a substrate (particularly a textile product).

Solution to Problem

The present disclosure includes the following embodiments:

[Item 1] A water-repellent composition comprising a polymer

(A) comprising a repeating unit derived from a hydrocarbon group-containing monomer (a) having a hydrocarbon group having 2 to 40 carbon atoms, and a silicone compound (B) composed of a non-resin-type silicone and a resin-type silicone,
wherein in the GPC chart of the silicone compound
(B), a peak top is present in the region of molecular weight of 1,500 or more,

a component of the silicone compound with a molecular weight of 1,500 or more comprises a non-resin-type silicone other than an amino-modified silicone, and
an amount of the silicone compound (B) is 1 to 49% by weight based on a sum of the amount of the polymer (A) and the amount of the silicone compound (B).

[Item 2] The water-repellent composition according to item 1, wherein the hydrocarbon group in the hydrocarbon group-containing monomer (a) is a linear alkyl group having 10 or more carbon atoms.
[Item 3] The water-repellent composition according to item 1 or 2, wherein the hydrocarbon group-containing monomer (a) is a monomer represented by
the formula:

$$CH_2=C(-X^a)-C(=O)-Y^a(R^a)_k$$

wherein $R^a$ is each independently a hydrocarbon group having 2 or more and 40 or less carbon atoms,

$X^a$ is a hydrogen atom, a monovalent organic group or a halogen atom,
$Y^a$ is a group composed of at least one selected from a divalent to tetravalent hydrocarbon group having 1 carbon atom, $-C_6H_4-$, -O-, -C(=O)-, $-S(=O)_2-$ and -NH-, and
k is 1 to 3.

[Item 4] The water-repellent composition according to any one of items 1 to 3, wherein an amount of the silicone compound (B) is 15 to 45% by weight based on the sum of the amount of the polymer (A) and the amount of the silicone compound (B).
[Item 5] The water-repellent composition according to any one of items 1 to 4, comprising a surfactant.
[Item 6] The water-repellent composition according to item 5, wherein the surfactant comprises a nonionic surfactant.
[Item 7] The water-repellent composition according to any one of items 1 to 6, further comprising an isocyanate derivative.
[Item 8] The water-repellent composition according to any one of items 1 to 7, which is a water dispersion.
[Item 9] A method for producing a textile product, comprising applying the water-repellent composition according to any one of items 1 to 8 to a fiber substrate.
[Item 10] The method for producing a textile product according to item 9, comprising, prior to applying the water-repellent composition to the fiber substrate, imparting to the fiber one or more functional groups selected from the group consisting of:

a monovalent group represented by $-SO_3M^1$, wherein $M^1$ represents a monovalent cation;
a monovalent group represented by $-COOM^2$, wherein $M^2$ represents a monovalent cation; and
a monovalent group represented by $-O-P(O)(OX^1)(OX^2)$, wherein $X^1$ and $X^2$ each independently represent a hydrogen atom or an alkyl group having 1 to 22 carbon atoms.

[Item 11] A textile product, wherein the polymer (A) and the silicone compound (B) in the water-repellent composition according to any one of items 1 to 8 are adhered to a fiber substrate.
[Item 12] The textile product according to item 11, to which a compound having one or more functional groups selected from the group consisting of:
a monovalent group represented by $-SO_3M^1$, wherein $M^1$ represents a monovalent cation;

a monovalent group represented by $-COOM^2$, wherein $M^2$ represents a monovalent cation; and
a monovalent group represented by $-O-P(O)(OX^1)(OX^2)$,
wherein $X^1$ and $X^2$ each independently represent a hydrogen atom or an alkyl group having 1 to 22 carbon atoms, is adhered.

Advantageous Effect of Invention

The water-repellent composition in the present disclosure can impart good water-repellency and good chalk mark resistance to a substrate (particularly a textile product).

Description of Embodiments

<Definition of Terms>

As used herein, the "n valent group" refers to a group having n bonds, i.e., a group forming n bonds. The "n valent organic group" refers to a n valent group containing carbon. Such organic groups are not limited, but can be hydrocarbon groups or derivatives thereof. The derivative of the hydrocarbon group refers to a group that has one or more of N, O, S, Si, amide, sulfonyl, siloxane, carbonyl, carbonyloxy, halogen and the like at the end or in the molecular chain of a hydrocarbon group.
As used herein, the "hydrocarbon group" refers to a group containing carbon and hydrogen and a group in which a hydrogen atom is removed from the hydrocarbon. Examples of the hydrocarbon group include, but are not limited to, $C_{1-20}$ hydrocarbon groups, such as an aliphatic hydrocarbon group and an aromatic hydrocarbon group. The above "aliphatic hydrocarbon group" may be either linear, branched, or cyclic, and may be either saturated or unsaturated. The hydrocarbon group may include one or more ring structures. In an explicit term, the hydrocarbon group may be substituted by one or more substituents.
Whether or not the phrases "independently at each occurrence", "independently with each other", "each independently" or similar expressions are explicitly described herein, unless otherwise described that they are exceptions, when a plurality of terms (symbols) that can occur in a chemical structure is defined, such definition is applied

independently to each occurrence.

The chemical structures described herein should be understood not to encompass chemical structures that are recognized by those skilled in the art as being chemically impossible or extremely unstable.

<Water-Repellent Composition>

The water-repellent composition in the present disclosure comprises a polymer (A) comprising a repeating unit derived from a hydrocarbon group-containing monomer (a) having a hydrocarbon group having 2 to 40 carbon atoms comprising, and a silicone compound (B) composed of a non-resin-type silicone and a resin-type silicone. The silicone compound (B) is composed of a resin-type silicone and a non-resin-type silicone. In the GPC chart of the silicone compound (B), a peak top is present in the region of molecular weight of 1,500 or more, and a component of the silicone compound with a molecular weight of 1,500 or more comprises a non-resin-type silicone other than an amino-modified silicone. The amount of the silicone compound (B) is 1 to 49% by weight based on the sum of the amount of the polymer (A) and the amount of the silicone compound (B). The water-repellent composition in the present disclosure is capable of adhering to a substrate (in particular, a textile product) and imparting both good water-repellency and good chalk mark resistance to the substrate.

Having the above features, the water-repellent composition in the present disclosure is capable of imparting liquid-repellency (water-repellency, oil-repellency, oil resistance, and/or water resistance) to a substrate (e.g., fiber substrate and paper substrate). The polymer (A) of the present disclosure may function as at least one selected from the group consisting of a water-repellent agent, an oil-repellent agent, an oil-resistant agent, and a water-resistant agent. The water-repellent composition in the present disclosure can impart good oil resistance (oil-repellency) and/or water resistance (water-repellency) to a substrate, and for example, can impart good both oil resistance and water resistance.

Having the above features, the water-repellent composition in the present disclosure is capable of adhering to a substrate (in particular, a textile product) and imparting good water-repellency and chalk mark resistance to the substrate (in particular, a textile product).

{(A) Polymer}

The polymer (A) of the present disclosure will be described. The polymer (A) comprises a repeating unit derived from a hydrocarbon group-containing monomer (a) having a hydrocarbon group having 2 to 40 carbon atoms. The polymer (A) is a polymer prepared by polymerizing the monomer, and exhibits water-repellency. In this regard, the monomer may be a compound having a polymerizable carbon-carbon double bond (ethylenically unsaturated double bond) (>C=C<), and may be a monomer having a vinyl group, a vinylene group, a vinylidene group, an acryloyl group, a methacryloyl group, or a monomer having a derivative group thereof.

The polymer (A) of the present disclosure is a polymer that adheres to a substrate (in particular, a fiber substrate) and imparts liquid-repellency, for example, water resistance, oil resistance, water-repellency, oil-repellency and/or antifouling properties, particularly oil resistance, to the substrate.

[Characteristics]

The possible characteristics of the polymer (A) of the present disclosure will be described below.

The polymer (A) has a HD (n-hexadecane) contact angle of 10° or more, 20° or more, 25° or more, 30° or more, 35° or more, 40° or more, 45° or more, 50° or more, 55° or more, 60° or more, or 65° or more, preferably 25° or more, further preferably 30° or more, and may have a HD (n-hexadecane) contact angle of 100° or less, 90° or less, or 75° or less. A HD contact angle of the polymer (A) of the lower limit or more can impart good liquid-repellency (in particular oil-repellency) to a substrate. The HD contact angle is a static contact angle of the polymer (A) to a spin-coated film, which is obtained by dropping 2 $\mu$L of HD on a spin-coated film and measuring the contact angle one second after the droplet reaches the film.

The polymer (A) has a water contact angle of 35° or more, 40° or more, 45° or more, 50° or more, 55° or more, 65° or more, 75° or more, 85° or more, 90° or more, or 100° or more, and may have a water contact angle of 160° or less, 140° or less, 130° or less, 120° or less, 110° or less, 100° or less or 90° or less. A water contact angle of the polymer (A) of the lower limit or more can impart good liquid-repellency (in particular water-repellency) to a substrate. The water contact angle is a static contact angle of the polymer (A) to a spin-coated film, which is obtained by dropping 2 $\mu$L of water on a spin-coated film and measuring the contact angle one second after the droplet reaches the film.

The polymer (A) is preferably a compound with carbon of biobased origin. The biobased content is measured in accordance with ASTM D6866. The polymer (A) may have a biobased content of 20% or more, and is preferably 30% or more, more preferably 50% or more, even more preferably 60% or more, still more preferably 70% or more, and most preferably 80% or more or 90% or more, and for example, 100%. A high biobased content means that the amount of use of fossil resource materials, which are typically petroleum, is small, and a higher biobased content of the polymer (A) is

preferred from that point of view.

The polymer (A) has a biodegradation as of the 180th day of preferably 5% or more. A higher biodegradation is preferred because of small environmental load. The polymer (A) may have a biodegradation as of the 180th day of, for example, 10% or more, 20% or more, 30% or more, 50% or more, 60% or more, 70% or more, 80% or more, or 90% or more, and can be preferably 30% or more, more preferably 50% or more, further preferably 70% or more, and most preferably 80% or more. The polymer (A) has a biodegradation as of the 60th day of preferably 5% or more. A higher biodegradation is preferred because of small environmental load. The polymer (A) may have a biodegradation as of the 60th day of, for example, 10% or more, 15% or more, 20% or more, 25% or more, 30% or more, 35% or more, 40% or more, or 45% or more, and can be preferably 10% or more and more preferably 30% or more. Such a biodegradability can be the biodegradability as specified in JIS K 6953-1 or ASTM D6400.

The polymer (A) may have a melting point of 30°C or more, 40°C or more, 60°C or more, 80°C or more, 100°C or more, or 120°C or more, and is preferably 40°C or more, and may have a melting point of 250°C or less, 225°C or less, 200°C or less, 150°C or less, 130°C or less, 120°C or less, 110°C or less, 100°C or less, 80°C or less, or 50°C or less.

[Structure]

The polymer (A) in the present disclosure may not have any one selected from the group consisting of a fluoroalkyl group having 8 or more carbon atoms, a perfluoroalkyl group having 8 or more carbon atoms, a fluoroalkyl group having 4 or more carbon atoms, a perfluoroalkyl group having 4 or more carbon atoms, a perfluoroalkyl group, a fluoroalkyl group, and a fluorine atom. The polymer (A) can impart liquid-repellency to a substrate, even free of these fluorine-containing groups.

The polymer (A) in the present disclosure does not need to be a fatty acid ester having a glycoside bond. The fatty acid ester having a glycoside bond is typically a compound obtained by adding fatty acid to the hydroxy group of a compound with a glycoside bond-containing structure (typically sugars (monosaccharide or polysaccharide)) via an ester bond.

The polymer (A) in the present disclosure may be a compound having at least one group selected from the group consisting of a hydrocarbon group having 2 or more and 40 or less carbon atoms, and a polysiloxane group. In particular, the polymer (A) may be a compound having at least one group selected from the group consisting of a monovalent hydrocarbon group having 2 or more and 40 or less carbon atoms, and a monovalent polysiloxane group.

(Polysiloxane group)

The polymer (A) may have a polysiloxane group. A polysiloxane group can impart liquid-repellency to the substrate as the hydrocarbon group having 2 or more carbon atoms and optionally having a substituent does.

The polysiloxane group has a polysiloxane structure. In the present description, the polysiloxane group refers to organopolysiloxane modified with an organic group, unless otherwise specified.

The polysiloxane group may have 3 or more, 5 or more, 6 or more, 10 or more, 30 or more, 50 or more, 100 or more, 500 or more, 1,000 or more, 2,000 or more, or 3,000 or more, preferably 10 or more silicon atoms, and 50,000 or less, 25,000 or less, 10,000 or less, 7,500 or less, 5,000 or less, 3,000 or less, 1,500 or less, 1,000 or less, 500 or less, 300 or less, 200 or less, 100 or less, or 50 or less, and for example, 500 or less silicon atoms.

The polysiloxane group may be monovalent and located at the molecular end, or may be divalent or polyvalent and located in the molecule, but is preferably monovalent.

The polysiloxane group may also be represented by the following formula:

$$-[-Si(R^s)_2-O-]_a-$$

wherein

$R^s$ is independently at each occurrence a hydrocarbon group having 1 to 40 carbon atoms or a reactive group, and
a is an integer of 5 or more and 10,000 or less.

$R^s$ is a hydrocarbon group having 1 to 40 carbon atoms or a reactive group.

Examples of hydrocarbon groups having 1 to 40 carbon atoms include a hydrocarbon group having 1 to 5 carbon atoms and a hydrocarbon group having 6 to 40 carbon atoms.

Examples of hydrocarbon groups having 1 to 5 carbon atoms include a hydrocarbon group having 1 to 5 carbon atoms such as a methyl group, an ethyl group, a propyl group, a butyl group and a pentyl group (in particular an aliphatic hydrocarbon group, in particular an alkyl group, for example, a methyl group or an ethyl group, and in particular a methyl group).

The hydrocarbon group having 2 to 40 carbon atoms may be an aromatic hydrocarbon group or an aliphatic hydrocarbon group, and is preferably an aliphatic hydrocarbon group, and in particular a saturated aliphatic hydrocarbon group (an alkyl group). The hydrocarbon group may be cyclic, linear or branched, and preferably linear. The hydrocarbon group may have 6 or more, 8 or more, 10 or more, 12 or more, 14 or more, 16 or more, or 18 or more, preferably 10 or more, more preferably 12 or more carbon atoms, and 40 or less, 35 or less, 30 or less, 25 or less, 20 or less, 15 or less, or 10 or less, preferably 30 or less, and more preferably 25 or less carbon atoms.

Examples of reactive groups include a group having a functional group (for example, a hydroxy group, an amino group, a mercapto group, an epoxy group, a carboxyl group, a halogen-substituted alkyl group, a vinyl group, a (meth) acrylic group, a (meth)acryloyloxy group, a (meth)acrylamide group, and a hydrogen atom directly bonded to a silicon atom). These functional groups may be directly bonded to a silicon atom, or may be bonded to an organic group directly bonded to a silicon atom. The organic group may be a hydrocarbon group, and for example, an alkylene group or a divalent aromatic group. The hydrocarbon group may have 2 or more and 12 or less carbon atoms. An alkylene group having 2 or more and 10 or less carbon atoms is preferred. A divalent aromatic group having 6 or more and 12 or less carbon atoms is preferred. The reactive group may be a group selected from the group consisting of a hydroxy group, an epoxy ring, a carboxyl group, a (meth)acrylic group and an amino group, and for example, may be at least one selected from the group consisting of an epoxy ring, a hydroxy group, a (meth)acrylic group and a carboxyl group.

a is 3 or more, 5 or more, 6 or more, 10 or more, 30 or more, 50 or more, 100 or more, 500 or more, 1,000 or more, 2,000 or more, or 3,000 or more, and preferably 10 or more, and 10,000 or less, 7,500 or less, 5,000 or less, 3,000 or less, 1,500 or less, 1,000 or less, 500 or less, 300 or less, 200 or less, 100 or less, or 50 or less, and preferably 500 or less.

In the polysiloxane group, the amount of $R^s$, which is a hydrocarbon group having 1 to 5 carbon atoms, may be 20 mol% or more, 40 mol% or more, 60 mol% or more, or 80 mol% or more, and preferably 50 mol% or more, and 100 mol% or less, 90 mol% or less, 80 mol% or less, or 70 mol% or less relative to the total amount of $R^s$. For example, 50 mol% or more of the total amount of the $R^s$ group may be a methyl group or an ethyl group, and in particular, a methyl group.

In the polysiloxane group, the amount of $R^s$, which is a hydrocarbon group having 2 to 40 carbon atoms, may be 3 mol% or more, 10 mol% or more, 20 mol% or more, or 30 mol% or more, and 100 mol% or less, 90 mol% or less, 80 mol% or less, or 70 mol% or less relative to the total amount of $R^s$.

In the polysiloxane group, the amount of $R^s$, which is a reactive group, may be 5 mol% or more, 10 mol% or more, 20 mol% or more, or 30 mol% or more, and 50 mol% or less, 40 mol% or less, 30 mol% or less, or 20 mol% or less relative to the total amount of $R^s$. The polysiloxane group does not need to include a reactive group $R^s$.

The $R^s$ group may be introduced randomly or in block, and preferably randomly.

The end structure of the polysiloxane group is not limited, and may be $-R^s$, $-OR^s$, $-Si(R^s)_3$ and the like. $R^s$ in the end structure may or may not have one or more reactive groups. Examples of reactive groups are as described above, and may be at least one selected from the group consisting of an epoxy ring, a hydroxy group, a (meth)acrylic group and a carboxyl group.

The polysiloxane group may have a linker. The matrix structure and the polysiloxane group may be linked by a linker, and examples of linkers are not limited, and include a hydrocarbon group having 1 to 40 (for example, 1 to 20) carbon atoms optionally disconnected via an oxygen atom, and may be, for example, a (poly)oxyalkylene group having 1 to 40 (for example 1 to 20) carbon atoms.

Examples of polysiloxane groups include:

$$-[-Si(R^s)_2-O-]_a-Si(R^s)_3$$

$$-L^{s1}-[-Si(R^s)_2-O-]_a-Si(R^s)_3$$

$$-L^{s1}-O-L^{s1}-[-Si(R^s)_2-O-]_a-R^s$$

$$-L^{s1}-[-Si(R^s)_2-O-]_a-Si(R^s)_3$$

$$-L^{s1}-O-L^{s1}-[-Si(R^s)_2-O-]_a-R^s$$

$$-L^{s1}-[-Si(R^s)_2O-]_a-Si(R^s)_3,$$

$$-L^{s1}-[-Si(R^s)_2-O-]_a-R^s$$

wherein

$R^s$ is independently at each occurrence a hydrocarbon group having 1 to 40 carbon atoms or a reactive group, methyl groups account for 50 mol% or more of the total amount of the $R^s$ group,

$L^{s1}$ is independently at each occurrence a hydrocarbon group having 1 to 20 carbon atoms, and
a is 5 or more and 10,000 or less, and

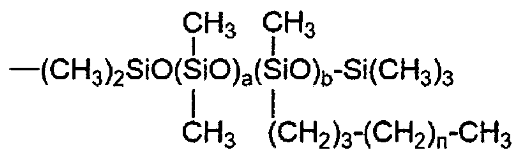

wherein a is an integer of 0 to 150, b is an integer of 1 to 150, (a + b) is 5 to 200 and n is an integer of 0 to 36.

The polysiloxane group may have a silsesquioxane structure or a silica structure to form a branched structure (a silicone resin structure). For example, the branched structure may be formed by a branched structure such as

$-O-Si(R^s)(-O-)_2$

$-O-Si(-O-)_3$

The polymer (A) may have a weight average molecular weight of 3,000 or more, 5,000 or more, 10,000 or more, 30,000 or more, 100,000 or more, 300,000 or more, or 500,000 or more, and 5,000,000 or less, 3,000,000 or less, 1,000,000 or less, 750,000 or less, 500,000 or less, 300,000 or less, 100,000 or less, 75,000 or less, 50,000 or less, 30,000 or less, 10,000 or less, or 5,000 or less. The weight average molecular weight may be measured by GPC in terms of polystyrene.

(a) Hydrocarbon group-containing monomer

The polymer (A) of the present disclosure comprises a repeating unit derived from a hydrocarbon group-containing monomer (a) having a hydrocarbon group having 2 to 40 carbon atoms.
The monomer (a) preferably has a (meth)acrylic group as the ethylenically unsaturated double bond, and for example, may have a (meth)acrylate group or a (meth)acrylamide group as the ethylenically unsaturated double bond.
The monomer (a) has a hydrocarbon group having 2 or more and 40 or less carbon atoms. The hydrocarbon group having 2 or more and 40 or less carbon atoms may have a substituent, but preferably does not have any substituent. Herein the hydrocarbon group is a monovalent group.

(Hydrocarbon group having 2 or more and 40 or less carbon atoms)

The hydrocarbon group which the monomer (a) has may be an aromatic hydrocarbon group or an aliphatic hydrocarbon group, and is preferably an aliphatic hydrocarbon group, and in particular a saturated aliphatic hydrocarbon group (an alkyl group). The hydrocarbon group is branched or linear, and preferably linear. The hydrocarbon group may be saturated or unsaturated. The hydrocarbon group is preferably a saturated aliphatic hydrocarbon group (alkyl group).
The hydrocarbon group is typically monovalent and may be located at the molecular end, and may have one or more methyl groups at the end. In the present description, the hydrocarbon compound (e.g., hydrocarbon wax) should be understood as being composed of only a monovalent hydrocarbon group and a single hydrogen atom. For example, N-alkane (eicosane), which has 20 carbon atoms, consists solely of an alkyl group having 20 carbon atoms and a single hydrogen atom.
The hydrocarbon group may have 2 or more, 4 or more, 6 or more, 8 or more, 10 or more, 12 or more, 14 or more, 16 or more, 18 or more, 20 or more, or 22 or more carbon atoms, and has preferably 10 or more, 12 or more, 14 or more, or 16 or more carbon atoms, and may have 40 or less, 35 or less, 30 or less, 25 or less, 20 or less, 15 or less, or 10 or less carbon atoms, and has preferably 30 or less, 25 or less, or 20 or less carbon atoms. The hydrocarbon group typically has 2 or more and 40 or less carbon atoms, but when the polymer (A) is a hydrocarbon compound (hydrocarbon wax), it may have more than 40 carbon atoms.
The hydrocarbon group may have a substituent, but is preferably non-substituted. Examples of substituents include -OR', $-N(R')_2$, -COOR' and a halogen atom, wherein R' is independently at each occurrence a hydrogen atom or a hydrocarbon group having 1 to 30, 1 to 20, 1 to 10, or 1 to 4 carbon atoms. The substituent may or may not have active hydrogen. The number of substituent may be 6 or less, 5 or less, 4 or less, 3 or less, 2 or less, 1 or less, or 0. In the hydrocarbon group having a substituent, the amount of carbon atom relative to the amount of carbon atom and heteroatom may be 70 mol% or more, 80 mol% or more, 90 mol% or more, 95 mol% or more, or 99 mol% or more, and is preferably be 75 mol% or more, and may be 95 mol% or less, 90 mol% or less, 85 mol% or less, or 80 mol% or less. For example, the

hydrocarbon group may have 1 to 3 (for example, 1) -OR' (particularly -OH) as substituents (for example, other than an end).

The hydrocarbon group-containing monomer (a) is preferably a monomer represented by the formula:

$$CH_2=C(-X^a)-C(=O)-Y^a(R^a)_k$$

wherein $R^a$ is each independently a hydrocarbon group having 2 or more and 40 or less carbon atoms,

$X^a$ is a hydrogen atom, a monovalent organic group or a halogen atom,
$Y^a$ is a group composed of at least one selected from a divalent to tetravalent hydrocarbon group having 1 carbon atom (in particular, $-CH_2-$, $-CH(-)_2$), $-C_6H_4-$, -O-, -C(=O)-, $-S(=O)_2-$ and -NH-, and

k is 1 to 3.

$X^a$ may be a hydrogen atom, a methyl group, a halogen excluding a fluorine atom, a substituted or non-substituted benzyl group, or a substituted or non-substituted phenyl group. Examples of $X^a$ include a hydrogen atom, a methyl group, a chlorine atom, a bromine atom, an iodine atom and a cyano group. $X^a$ is preferably a hydrogen atom, a methyl group or a chlorine atom. $X^a$ is particularly preferably a hydrogen atom.

$Y^a$ is a divalent to tetravalent group. $Y^a$ is preferably a divalent group.
$Y^a$ is preferably a group composed of at least one selected from a hydrocarbon group having 1 carbon atom, $-C_6H_4-$, -O-, -C(=O)-, $-S(=O)_2-$ and -NH-. It is preferable that $Y^a$ is not a hydrocarbon group. Examples of hydrocarbon groups having 1 carbon atom include $-CH_2-$, $-CH(-)_2$ or $-C(-)_3$. A hydrocarbon group having 1 carbon atom may be repeatedly linked to form a hydrocarbon group having 2 or more carbon atoms, such as $-(CH_2)_m-$ (m is an integer from 1 to 5). $Y^a$ may have an NH group.

$Y^a$ may be -Y'-, -Y'-Y'-, -Y'-C(=O)-, -C(=O)-Y'-, - Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-wherein Y' is a direct bond, -O-, -NH- or $-S(=O)_2-$, and R' is $-(CH_2)_m-$ in which m is an integer of 1 to 5, or $-C_6H_4-$ (a phenylene group).

Specific examples of $Y^a$ include -O-, -NH-, -O-C(=O)-, -C(=O)-NH-, -NH-C(=O)-, -O-C(=O)-NH-, -NH-C(=O)-O-, -NH-C(=O)-NH-, $-O-C_6H_4-$, $-O-(CH_2)_m-O-$, $-NH-(CH_2)_m-NH-$, $-O-(CH_2)_m-NH-$, $-NH-(CH_2)_m-O-$, $-O-(CH_2)_m-O-C(=O)-$, $-O-(CH_2)_m-C(=O)-O-$, $-NH-(CH_2)_m-O-C(=O)-$, $-NH-(CH_2)_m-C(=O)-O-$, $-O-(CH_2)_m-O-C(=O)-NH-$, $-O-(CH_2)_m-NH-C(=O)-O-$, $-O-(CH_2)_m-C(=O)-NH-$, $-O-(CH_2)_m-NH-C(=O)-$, $-O-(CH_2)_m-NH-C(=O)-NH-$, $-O-(CH_2)_m-O-C_6H_4-$, $-O-(CH_2)_m-NH-S(=O)_2-$, $-O-(CH_2)_m-S(=O)_2-NH-$, $-NH-(CH_2)_m-O-C(=O)-NH-$, $-NH-(CH_2)_m-NH-C(=O)-O-$, $-NH-(CH_2)_m-C(=O)-NH-$, $-NH-(CH_2)_m-NH-C(=O)-$, $-NH-(CH_2)_m-NH-C(=O)-NH-$, $-NH-(CH_2),-O-C_6H_4-$, $-NH-(CH_2)_m-NH-C_6H_4-$, $-NH-(CH_2)_m-NH-S(=O)_2-$, or $-NH-(CH_2)_m-S(=O)_2-NH-$ wherein m is 1 to 5, in particular 2 or 4.

$Y^a$ is preferably -O-, -NH-, $-O-(CH_2)_m-O-C(=O)-$, $-O-(CH_2)_m-NH-C(=O)-$, $-O-(CH_2)_m-O-C(=O)-NH-$, $-O-(CH_2)_m-NH-C(=O)-O-$, $-O-(CH_2)_m-NH-C(=O)-NH-$, $-O-(CH_2)_m-NH-S(=O)_2-$, $-O-(CH_2)_m-S(=O)_2-NH-$, $-NH-(CH_2)_m-NH-S(=O)_2-$, or $-NH-(CH_2)_m-S(=O)_2-NH-$
wherein m is an integer of 1 to 5, in particular 2 or 4.

$Y^a$ is more preferably -O- or $-O-(CH_2)_m-NH-C(=O)-$, in particular $-O-(CH_2)_m-NH-C(=O)-$.

$R^a$ is each independently a hydrocarbon group having 2 or more and 40 or less carbon atoms, which is as described in the above (hydrocarbon group having 2 or more and 40 or less carbon atoms), and $R^d$ is preferably a linear or branched hydrocarbon group. The hydrocarbon group may be a linear hydrocarbon group. The hydrocarbon group is preferably an aliphatic hydrocarbon group, particularly preferably a saturated aliphatic hydrocarbon group and especially preferably an alkyl group. The hydrocarbon group has preferably 12 to 30, for example, 12 or more and 18 or less, 16 to 26 or 15 to 26, in particular 18 to 22 or 17 to 22 carbon atoms.

Specific examples of monomers (a) include:

(a1) a monomer represented by the formula:

$$CH_2=C(-X^{a1})-C(=O)-Y^{a11}-Z(-Y^{a12}-R^{a1})_n$$

wherein $R^{a1}$ is each independently a hydrocarbon group having 2 or more and 40 or less carbon atoms,
$X^{a1}$ is a hydrogen atom, a monovalent organic group or a halogen atom,
$Y^{a11}$ is -O- or -NH-,
$Y^{a12}$ is each independently a direct bond or a group composed of at least one selected from -O-, -C(=O)-, $-S(=O)_2-$, -NH- and $-CH_2-$,
Z is a direct bond or a divalent or trivalent hydrocarbon group having 1 to 5 carbon atoms, and
n is 1 or 2,

and

(a2) a monomer represented by the formula:

$$CH_2=C(-X^{a2})-C(=O)-Y^{a2}-R^{a2}$$

wherein $R^{a2}$ is a hydrocarbon group having 2 or more and 40 or less carbon atoms,
$X^{a2}$ is a hydrogen atom, a monovalent organic group or a halogen atom, and
$Y^{a2}$ is -O- or -NH-.

(a1) Monomer

The monomer (a1) is different from the monomer (a2).

The monomer (a1) may have a hydrocarbon group having 2 or more and 40 or less carbon atoms and a NH group-containing group. The monomer (a1) may have an amide group, a urea group, a urethane group or a sulfonamide group. The NH group-containing group may be an amide group, a urea group, a urethane group or a sulfonamide group. The hydrocarbon monomer may be a combination of a hydrocarbon monomer having an amide group, a urea group, a urethane group or a sulfone amide group and a hydrocarbon monomer which does not have an amide group, a urea group, a urethane group or a sulfone amide group. By including these groups in the monomer (a1), the effect of the present disclosure can be achieved well.

The monomer (a1) is (meth)acrylate or (meth)acrylamide having a group composed of at least one selected from -O-, -C(=O)-, $-S(=O)_2-$, -NH- and $-CH_2-$.

The monomer (a1) may be a compound represented by the formula:

$$CH_2=C(-X^{a1})-C(=O)-Y^{a11}-Z(-Y^{a12}-R^{a1})_n$$

wherein $R^{a1}$ is each independently a hydrocarbon group having 6 or more and 40 or less carbon atoms,
$X^{a1}$ is a hydrogen atom, a monovalent organic group or a halogen atom,
$Y^{a11}$ is -O- or -NH-,
$Y^{a12}$ is each independently a direct bond or a group composed of at least one selected from -O-, -C(=O)-, $-S(=O)_2-$, -NH- and $-CH_2-$,
Z is a direct bond or a divalent or trivalent hydrocarbon group having 1 to 5 carbon atoms, and
n is 1 or 2.

$Y^{a12}$ and/or Z do not need to be a direct bond. $Y^{a12}$ and Z do not need to be simultaneously a direct bond.

$R^{a1}$ is preferably an aliphatic hydrocarbon group, particularly preferably a saturated aliphatic hydrocarbon group and especially preferably an alkyl group. In $R^{a1}$, the hydrocarbon group has preferably 12 to 30, for example, 16 to 26 or 15 to 26, in particular 18 to 22 or 17 to 22 carbon atoms.

$X^{a1}$ may be a hydrogen atom, a methyl group, a halogen excluding a fluorine atom, a substituted or non-substituted benzyl group, or a substituted or non-substituted phenyl group. Preferred is a hydrogen atom, a methyl group or a chlorine atom.

$Y^{a12}$ may be -Y'-, -Y'-Y'-, -Y'-C(=O)-, -C(=O)-Y'-, -Y'-C(=O)-Y'-, -Y'-R'-, -Y'-R'-Y'-, -Y'-R'-Y'-C(=O)-, - Y'-R'-C(=O)-Y'-, -Y'-R'-Y'-C(=O)-Y'-, or -Y'-R'-Y'-R'-wherein Y' is each independently a direct bond, -O-, -NH- or $-S(=O)_2-$, and R' is $-(CH_2)_m-$ in which m is an integer of 1 to 5, a linear hydrocarbon group having 1 to 5 carbon atoms and having an unsaturated bond, a hydrocarbon group having 1 to 5 carbon atoms and having a branched structure or $-(CH_2)_l-C_6H_4-(CH_2)_l-$ in which l is each independently an integer of 0 to 5 and $-C_6H_4-$ is a phenylene group.

Specific examples of $Y^{a12}$ include a direct bond, - O-, -NH-, -O-C(=O)-, -C(=O)-O-, -C(=O)-NH-, -NH-C(=O)-, $-NH-S(=O)_2-$, $-S(=O)_2-NH-$, -O-C(=O)-NH-, -NH-C(=O)-O-, -NH-C(=O)-NH-, $-O-C_6H_4-$, $-NH-C_6H_4-$, $-O-(CH_2)_m-O-$, $-NH-(CH_2)_m-NH-$, $-O-(CH_2)_m-NH-$, $-NH-(CH_2)_m-O-$, $-O-(CH_2)_m-O-C(=O)-$, $-O-(CH_2)_m-C(=O)-O-$, $-NH-(CH_2)_m-O-C(=O)-$, $-NH-(CH_2)_m-C(=O)-O-$, $-O-(CH_2)_m-O-C(=O)-NH-$, $-O-(CH_2)_m-NH-C(=O)-O-$, $-O-(CH_2)_m-C(=O)-NH-$, $-O-(CH_2)_m-NH-C(=O)-$, $-O-(CH_2)_m-NH-C(=O)-NH-$, $- O-(CH_2)_m-O-C_6H_4-$, $-NH-(CH_2)_m-O-C(=O)-NH-$, $-NH-(CH_2)_m-NH-C(=O)-O-$, $-NH-(CH_2)_m-C(=O)-NH-$, $-NH-(CH_2)_m-NH-C(=O)-$, $-NH-(CH_2)_m-NH-C(=O)-NH-$, $-NH-(CH_2)_m-O-C_6H_4-$, $-NH-(CH_2)_m-NH-C_6H_4-$, wherein m is an integer of 1 to 5.

In particular, $Y^{a12}$ may have an NH group.

$Y^{a12}$ is preferably -O-, -NH-, -O-C(=O)-, -C(=O)-O-, -C(=O)-NH-, -NH-C(=O)-, $-NH-S(=O)_2-$, $-S(=O)_2-NH-$, -O-C(=O)-NH-, -NH-C(=O)-O-, -NH-C(=O)-NH-, or $-O-C_6H_4-$. $Y^{a12}$ is more preferably -NH-C(=O)-, -C(=O)-NH-, -O-C(=O)-NH-, -NH-C(=O)-O- or -NH-C(=O)-NH-. $Y^{a12}$ may not be a direct bond.

Z is a direct bond or a divalent or trivalent hydrocarbon group having 1 to 5 carbon atoms, and may have a linear

structure or a branched structure. Z has preferably 2 to 4, particularly preferably 2 carbon atoms. Specific examples of Z include a direct bond, $-CH_2-$, $-CH_2CH_2-$, $-CH_2CH_2CH_2-$, $-CH_2CH_2CH_2CH_2-$, $-CH_2CH_2CH_2CH_2CH_2-$, $-CH_2CH(-)_2$, $-CH_2(CH-)CH_2-$, $-CH_2CH_2CH(-)_2$, $-CH_2CH_2CH_2CH_2CH(-)_2$, $-CH_2CH_2(CH-)CH_2-$, and $-CH_2CH_2CH_2CH(-)_2$. Z may not be a direct bond.

The monomer (a1) is preferably $CH_2=C(-X^{a1})-C(=O)-O-(CH_2)_m-NH-C(=O)-R^{a1}$, $CH_2=C(-X^{a1})-C(=O)-O-(CH_2)_m-O-C(=O)-NH-R^{a1}$, $CH_2=C(-X^{a1})-C(=O)-O-(CH_2)_m-NH-C(=O)-O-R^{a1}$, $CH_2=C(-X^{a1})-C(=O)-O-(CH_2)_m-NH-C(=O)-NH-R^{a1}$ wherein $R^{a1}$ and $X^{a1}$ are as described above.

The monomer (a1) is particularly preferably $CH_2=C(-X^{a1})-C(=O)-O-(CH_2)_m-NH-C(=O)-R^{a1}$.

The monomer (a1) may be produced by reacting hydroxyalkyl (meth)acrylate or hydroxyalkyl (meth)acrylamide with long chain alkyl isocyanate. Examples of long chain alkyl isocyanate include lauryl isocyanate, myristyl isocyanate, cetyl isocyanate, stearyl isocyanate, oleyl isocyanate and behenyl isocyanate.

The monomer (a1) may also be produced by reacting (meth)acrylate having an isocyanate group in the side chain, such as 2-methacryloyloxyethyl methacrylate, with long chain alkylamine or long chain alkyl alcohol. Example of the long-chain alkylamine includes laurylamine, myristylamine, cetylamine, stearylamine, oleylamine, and behenylamine. Example of the long-chain alkyl alcohol includes lauryl alcohol, myristyl alcohol, cetyl alcohol, stearyl alcohol, oleyl alcohol, and behenyl alcohol.

Preferred examples of monomers (a) are as follows: Stearyl (meth)acrylate, behenyl (meth)acrylate, stearyl α-chloroacrylate, behenyl α-chloroacrylate;

Stearyl (meth)acrylamide, behenyl (meth)acrylamide;

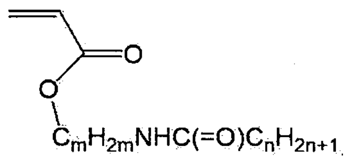

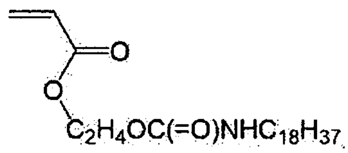

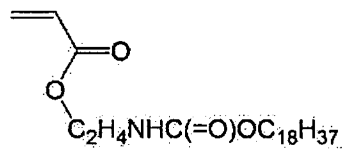

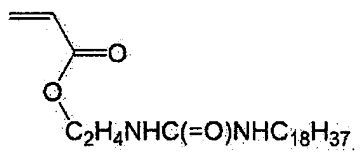

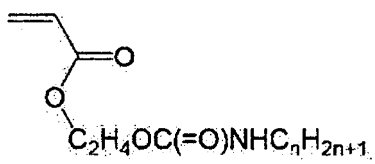

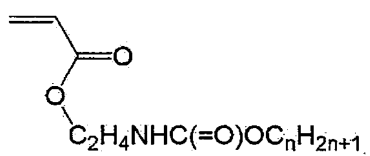

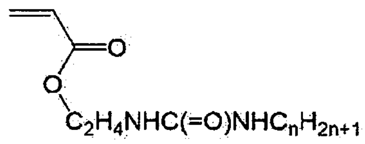

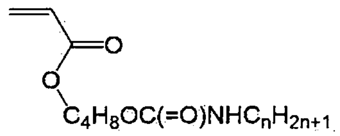

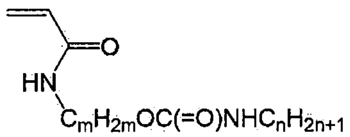

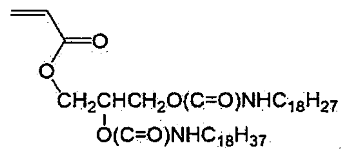

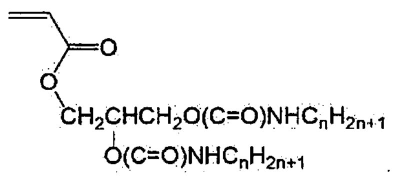

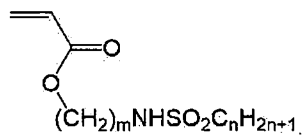

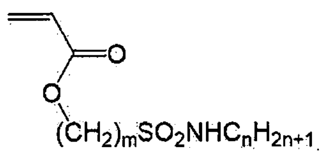

wherein n is a number of 6 to 40 and m is a number of 1 to 5.

The compounds of the above formula are an acrylic compound having a hydrogen atom at the α position, and specific examples thereof may also include a methacrylic compound having a methyl group at the α position and an α-chloroacrylic compound having a chlorine atom at the α position.

The monomer (a1) is preferably an amide-group containing monomer represented by the formula:

$$R^{a12}\text{-}C(=O)\text{-}NH\text{-}R^{a13}\text{-}O\text{-}R^{a11}$$

wherein $R^{a11}$ is an organic residue having an ethylenically unsaturated polymerizable group,
$R^{a12}$ is a hydrocarbon group having 2 or more and 40 or less carbon atoms, and
$R^{a13}$ is a hydrocarbon group having 1 to 5 carbon atoms.

$R^{a11}$ is an organic residue having an ethylenically unsaturated polymerizable group, and is not limited as long as it has a polymer carbon - carbon double bond. Specific examples thereof include an organic residue having an ethylenically unsaturated polymerizable group, such as $-C(=O)CR^{a111}=CH_2$, $-CHR^{a111}=CH_2$ and $-CH_2CHR^{a111}=CH_2$, in which $R^{a111}$ is a hydrogen atom or an alkyl group having 1 to 4 carbon atoms. $R^{a11}$ may have various organic groups other than the

ethylenically unsaturated polymerizable group, including, for example, an organic group such as chain hydrocarbon, cyclic hydrocarbon, a polyoxyalkylene group and a polysiloxane group. These organic groups may be substituted by a substituent. $R^{a11}$ is preferably - $C(=O)CR^{a111}=CH_2$.

$R^{a12}$ is a hydrocarbon group of the monomer (a1) as described above. Examples thereof include a hydrocarbon group having 2 or more and 40 or less carbon atoms, and preferably an alkyl group, and a chain hydrocarbon group and a cyclic hydrocarbon group. Of them, a chain hydrocarbon group is preferred, and a linear saturated hydrocarbon group is particularly preferred. $R^{a12}$ has 6 or more and 40 or less, preferably 11 to 27, and particularly preferably 15 to 23 carbon atoms.

$R^{a13}$ is a hydrocarbon group having 1 to 5 carbon atoms, preferably an alkyl group. The hydrocarbon group having 1 to 5 carbon atoms may be linear or branched, and may have an unsaturated bond, and is preferably linear. $R^{a13}$ has preferably 2 to 4, and particularly preferably 2 carbon atoms. $R^{a13}$ is preferably an alkylene group.

The amide group-containing monomer may be a monomer with only one type of $R^{a12}$ (e.g., a compound with only $R^{a12}$ having 17 carbon atoms), or a monomer in which more than one $R^{a12}$'s are combined (e.g., a mixture of a compound with $R^{a12}$ having 17 carbon atoms and a compound with $R^{a12}$ having 15 carbon atoms).

Examples of amide group-containing monomers include carboxylic acid amide alkyl (meth)acrylate.

Specific examples of amide group-containing monomers include palmitic acid amide ethyl (meth)acrylate, stearic acid amide ethyl (meth)acrylate, behenic acid amide ethyl (meth)acrylate, myristic acid amide ethyl (meth)acrylate, lauric acid amide ethyl (meth)acrylate, isostearic acid ethyl amide (meth)acrylate, oleic acid ethylamide (meth)acrylate, t-butyl cyclohexylcaproic acid amide ethyl (meth)acrylate, adamantanecarboxylic acid ethylamide (meth)acrylate, naphthalenecarboxylic acid amide ethyl (meth)acrylate, anthracenecarboxylic acid amide ethyl (meth)acrylate, palmitic acid amide propyl (meth)acrylate, stearic acid amide propyl (meth)acrylate, palmitic acid amide ethyl vinyl ether, stearic acid amide ethyl vinyl ether, palmitic acid amide ethyl allyl ether, stearic acid amide ethyl allyl ether and a mixture thereof.

It is preferable that the amide group-containing monomer is stearic acid amide ethyl (meth)acrylate. The amide group-containing monomer may be a mixture containing stearic acid amide ethyl (meth)acrylate. The amount of stearic acid amide ethyl (meth)acrylate in the mixture containing stearic acid amide ethyl (meth)acrylate may be, for example, 40% by weight or more, 50% by weight or more, 60% by weight or more, or 70% by weight or more, and 90% by weight or less, 80% by weight or less, or 70% by weight or less based on the total weight of the amide group-containing monomers. The rest of the monomers may be, for example, palmitic acid amide ethyl (meth)acrylate.

(a2) Monomer

The monomer (a2) is a compound represented by the formula:

$$CH_2=C(-X^{a2})-C(=O)-Y^{a2}-R^{a2}$$

wherein $R^{a2}$ is a hydrocarbon group having 2 or more and 40 or less carbon atoms,
$X^{a2}$ is a hydrogen atom, a monovalent organic group or a halogen atom, and
$Y^{a2}$ is -O- or -NH-.

The monomer (a2) is a long chain acrylate ester monomer in which $Y^{a2}$ is -O-, or a long chain acrylamide monomer in which $Y^{a2}$ is -NH-.

$R^{a2}$ is preferably an aliphatic hydrocarbon group, particularly preferably a saturated aliphatic hydrocarbon group and especially preferably an alkyl group. In $R^{a2}$, the hydrocarbon group has preferably 12 to 30, for example, 16 to 26, in particular 18 to 22 carbon atoms. $X^{a2}$ may be a hydrogen atom, a methyl group, a halogen excluding a fluorine atom, a substituted or non-substituted benzyl group, or a substituted or non-substituted phenyl group. Preferred is a hydrogen atom, a methyl group or a chlorine atom.

Preferred specific examples of long chain acrylate ester monomers include lauryl (meth)acrylate, stearyl (meth) acrylate, icosyl (meth)acrylate, behenyl (meth)acrylate, stearyl $\alpha$-chloroacrylate, icosyl $\alpha$-chloroacrylate and behenyl $\alpha$-chloroacrylate.

Preferred specific examples of long chain acrylamide monomers include stearyl (meth)acrylamide, icosyl (meth) acrylamide and behenyl (meth)acrylamide.

The polymer (A) of the present disclosure may further comprise a repeating unit derived from the following monomer.

(b) Hydrophilic group-containing monomer

The polymer (A) of the present disclosure may comprise a repeating unit derived from a hydrophilic group-containing monomer (b). The monomer (b) is different from the monomer (a), and has a hydrophilic group.

The monomer (b) preferably has a (meth)acrylic group as a group having an ethylenically unsaturated double bond, and for example, may have a (meth)acrylate group or a (meth)acrylamide group as the ethylenically unsaturated double bond. The monomer (a) may have one or two, and preferably only one group having an ethylenically unsaturated double bond.

The hydrophilic group is preferably an oxyalkylene-containing group (in which the alkylene group has 2 to 6 carbon atoms), and particularly preferably an oxyethylene group. The monomer (b) is preferably oxyalkylene (meth) acrylate, for example, polyalkylene (or monoalkylene) glycol mono(meth)acrylate and/or polyalkylene (or monoalkylene) glycol di(meth)acrylate, polyalkylene (or monoalkylene) glycol mono(meth)acrylamide.

The monomer (b) is preferably oxyalkylene (meth)acrylate represented by the formula:

$$CH_2=CX^bC(=O)-Y^b-(R^bO)_n-A^b$$

wherein

- $X^b$ is a hydrogen atom or a methyl group,
- $Y^b$ is -O- or -NH-,
- $R^b$ is each independently an alkylene group having 2 to 6 carbon atoms,
- $A^b$ is a hydrogen atom, an unsaturated or saturated hydrocarbon group having 1 to 22 carbon atoms or $CH_2=CX^bC(=O)-$, and
- n is an integer of 1 to 90.

Examples of monomer (b) are preferably those represented by the formula:

$$CH_2=CX^bC(=O)-O-(R^bO)_n-A^{bi} \quad (b1)$$

$$CH_2=CX^bC(=O)-O-(R^bO)_n-C(=O)CX^b=CH_2 \quad (b2),$$

or

$$CH_2=CX^bC(=O)-NH-(R^bO)_n-A^{bi} \quad (b3),$$

wherein

- $X^b$ is each independently a hydrogen atom or a methyl group,
- $A^{bi}$ is each independently a hydrogen atom or an unsaturated or saturated hydrocarbon group having 1 to 22 carbon atoms,
- $R^b$ is each independently an alkylene group having 2 to 6 carbon atoms, and
- n is an integer of 1 to 90.

n is, for example, 1 to 50, in particular 1 to 30, especially 1 to 15 or 2 to 15. Or, n may be, for example, 1.

$R^b$ may be a linear or branched alkylene group, and may be, for example, a group represented by the formula $-(CH_2)_x-$ or $-(CH_2)_{x1}-(CH(CH_3))_{x2}-$ wherein x1 and x2 are 0 to 6, for example, 2 to 5, and the sum of x1 and x2 is 1 to 6, and the order of $-(CH_2)_{x1}-$ and $-(CH(CH_3))_{x2}-$ is not limited to the order in the formula described, and may be random.

In $-(R^bO)_n-$, there may be 2 or more types of Rs (e.g., 2 to 4 types, in particular, 2 types). $-(R^bO)_n-$ may be, for example, a combination of $-(R^1O)_{n1}-$ and $-(R^2O)_{n2}-$wherein $R^1$ and $R^2$ are different from each other and are an alkylene group having 2 to 6 carbon atoms, n1 and n2 are a number of 1 or more, and the sum of n1 and n2 is 2 to 90.

In the formula (b1), (b2) and (b3), $R^b$ is preferably an ethylene group, a propylene group or a butylene group, and particularly preferably a butylene group. In the formula (b1), (b2) and (b3), $R^b$ may be a combination of two or more alkylene groups. In that case, at least one R is preferably an ethylene group, propylene group or a butylene group. Examples of combinations of $R^b$ include a combination of an ethylene group/ a propylene group, a combination of an ethylene group/ a butylene group and a combination of a propylene group/ a butylene group. The monomer (b) may be a mixture of two or more. In that case, at least one of the monomer (b) is preferably a monomer in which $R^b$ in the formula (b1), (b2) and (b3) is an ethylene group, a propylene group or a butylene group. When polyalkylene glycol di(meth)acrylate represented by the formula (b2) is used, using only polyalkylene glycol di(meth)acrylate as the monomer (b) is not preferred, and using it together with the monomer (b1) is preferred. Even in that case, it is preferable to keep the proportion of the compound represented by the formula (b2) at less than 30% by weight in the monomers (b) used.

Specific examples of monomers (b) include, but are not limited to, the following monomers:

$CH_2=CHCOO-CH_2CH_2O-H$

$CH_2=CHCOO-CH_2CH_2CH_2O-H$

$CH_2=CHCOO-CH_2CH(CH_3)O-H$

$CH_2=CHCOO-CH(CH_3)CH_2O-H$

$CH_2=CHCOO-CH_2CH_2CH_2CH_2O-H$

$CH_2=CHCOO-CH_2CH_2CH(CH_3)O-H$

$CH_2=CHCOO-CH_2CH(CH_3)CH_2O-H$

$CH_2=CHCOO-CH(CH_3)CH_2CH_2O-H$

$CH_2=CHCOO-CH_2CH(CH_2CH_3)O-H$

$CH_2=CHCOO-CH_2C(CH_3)_2O-H$

$CH_2=CHCOO-CH(CH_2CH_3)CH_2O-H$

$CH_2=CHCOO-C(CH_3)_2CH_2O-H$

$CH_2=CHCOO-CH(CH_3)CH(CH_3)O-H$

$CH_2=CHCOO-C(CH_3)(CH_2CH_3)O-H$

$CH_2=CHCOO-(CH_2CH_2O)_2-H$

$CH_2=CHCOO-(CH_2CH_2O)_4-H$

$CH_2=CHCOO-(CH_2CH_2O)_5-H$

$CH_2=CHCOO-(CH_2CH_2O)_6-H$

$CH_2=CHCOO-(CH_2CH_2O)_5-CH_3$

$CH_2=CHCOO-(CH_2CH_2O)_9-CH_3$

$CH_2=CHCOO-(CH_2CH_2O)_{23}-CH_3$

$CH_2=CHCOO-(CH_2CH_2O)_{90}-CH_3$

$CH_2=CHCOO-(CH_2CH(CH_3)O)_9-H$

$CH_2=CHCOO-(CH_2CH(CH_3)O)_9-CH_3$

$CH_2=CHCOO-(CH_2CH(CH_3)O)_{12}-CH_3$

$CH_2=CHCOO-(CH_2CH_2O)_3-(CH_2CH(CH_3)O)_2-H$

$CH_2=CHCOO-(CH_2CH_2O)_5-(CH_2CH(CH_3)O)_3-CH_3$

$CH_2=CHCOO-(CH_2CH_2O)_8-(CH_2CH(CH_3)O)_6-CH_2CH(C_2H_5)C_4H_9$

$CH_2=CHCOO-(CH_2CH_2O)_{23}-OOC(CH_3)C=CH_2$

$CH_2=CHCOO-(CH_2CH_2O)_{20}-(CH_2CH(CH_3)O)_5-CH_2-CH=CH_2$

$CH_2=CHCOO-(CH_2CH_2O)_9-H$

$CH_2=C(CH_3)COO-CH_2CH_2O-H$

$CH_2=C(CH_3)COO-CH_2CH_2CH_2O-H$

$CH_2=C(CH_3)COO-CH_2CH(CH_3)O-H$

$CH_2=C(CH_3)COO-CH(CH_3)CH_2O-H$

$CH_2=C(CH_3)COO-CH_2CH_2CH_2CH_2O-H$

$CH_2=C(CH_3)COO-CH_2CH_2CH(CH_3)O-H$

$CH_2=C(CH_3)COO-CH_2CH(CH_3)CH_2O-H$

$CH_2=C(CH_3)COO-CH(CH_3)CH_2CH_2O-H$

$CH_2=C(CH_3)COO-CH_2CH(CH_2CH_3)O-H$

$CH_2=C(CH_3)COO-CH_2C(CH_3)_2O-H$

$CH_2=C(CH_3)COO-CH(CH_2CH_3)CH_2O-H$

$CH_2=C(CH_3)COO-C(CH_3)_2CH_2O-H$

$CH_2=C(CH_3)COO-CH(CH_3)CH(CH_3)O-H$

$CH_2=C(CH_3)COO-C(CH_3)(CH_2CH_3)O-H$

$CH_2=C(CH_3)COO-(CH_2CH_2O)_2-H$

$CH_2=C(CH_3)COO-(CH_2CH_2O)_4-H$

$CH_2=C(CH_3)COO-(CH_2CH_2O)_5-H$

$CH_2=C(CH_3)COO-(CH_2CH_2O)_6-H$

$CH_2=C(CH_3)COO-(CH_2CH_2O)_9-H$

$CH_2=C(CH_3)COO-(CH_2CH_2O)_5-CH_3$

$CH_2=C(CH_3)COO-(CH_2CH_2O)_9-CH_3$

$CH_2=C(CH_3)COO-(CH_2CH_2O)_{23}-CH_3$

$CH_2=C(CH_3)COO-(CH_2CH_{20})_{90}-CH_3$

$CH_2=C(CH_3)COO-(CH_2CH(CH_3)O)_9-H$

$CH_2=C(CH_3)COO-(CH_2CH(CH_3)O)_9-CH_3$

$CH_2=C(CH_3)COO-(CH_2CH(CH_3)O)_{12}-CH_3$

$CH_2=C(CH_3)COO-(CH_2CH_2O)_5-(CH_2CH(CH_3)O)_2-H$

$CH_2=C(CH_3)COO-(CH_2CH_2O)_5-(CH_2CH(CH_3)O)_3-CH_3$

$CH_2=C(CH_3)COO-(CH_2CH_{20})_8-(CH_2CH(CH_3)O)_6-CH_2CH(C_2H_5)C_4H_9$

$CH_2=C(CH_3)COO-(CH_2CH_2O)_{23}-OOC(CH_3)C=CH_2$

$CH_2=C(CH_3)COO-(CH_2CH_2O)_{20}-(CH_2CH(CH_3)O)_5-CH_2-CH=CH_2$

$CH_2=CH-C(=O)-NH-CH_2CH_2O-H$

$CH_2=CH-C(=O)-NH-CH_2CH_2CH_2O-H$

$CH_2=CH-C(=O)-NH-CH_2CH(CH_3)O-H$

$CH_2=CH-C(=O)-NH-CH(CH_3)CH_2O-H$

$CH_2=CH-C(=O)-NH-CH_2CH_2CH_2CH_2O-H$

$CH_2=CH-C(=O)-NH-CH_2CH_2CH(CH_3)O-H$

$CH_2=CH-C(=O)-NH-CH_2CH(CH_3)CH_2O-H$

$CH_2=CH-C(=O)-NH-CH(CH_3)CH_2CH_2O-H$

$CH_2=CH-C(=O)-NH-CH_2CH(CH_2CH_3)O-H$

$CH_2=CH-C(=O)-NH-CH_2C(CH_3)_2O-H$

$CH_2=CH-C(=O)-NH-CH(CH_2CH_3)CH_2O-H$

$CH_2=CH-C(=O)-NH-C(CH_3)_2CH_2O-H$

$CH_2=CH-C(=O)-NH-CH(CH_3)CH(CH_3)O-H$

$CH_2=CH-C(=O)-NH-C(CH_3)(CH_2CH_3)O-H$

$CH_2=CH-C(=O)-NH-(CH_2CH_2O)_2-H$

$CH_2=CH-C(=O)-NH-(CH_2CH_2O)_4-H$

$CH_2=CH-C(=O)-NH-(CH_2CH_2O)_5-H$

$CH_2=CH-C(=O)-NH-(CH_2CH_2O)_6-H$

$CH_2=CH-C(=O)-NH-(CH_2CH_2O)_9-H$

$CH_2=CH-C(=O)-NH-(CH_2CH_2O)_5-CH_3$

$CH_2=CH-C(=O)-NH-(CH_2CH_2O)_9-CH_3$

$CH_2=CH-C(=O)-NH-(CH_2CH_2O)_{23}-CH_3$

$CH_2=CH-C(=O)-NH-(CH_2CH_2O)_{90}-CH_3$

$CH_2=CH-C(=O)-NH-(CH_2CH(CH_3)O)_9-H$

$CH_2=CH-C(=O)-NH-(CH_2CH(CH_3)O)_9-CH_3$

$CH_2=CH-C(=O)-NH-(CH_2CH(CH_3)O)_{12}-CH_3$

$CH_2=CH-C(=O)-NH-(CH_2CH_2O)_5-(CH_2CH(CH_3)O)_2-H$

$CH_2=CH-C(=O)-NH-(CH_2CH_2O)_5-(CH_2CH(CH_3)O)_3-CH_3$

$CH_2=CH-C(=O)-NH-(CH_2CH_2O)_8-(CH_2CH(CH_3)O)_6-CH_2CH(C_2H_5)C_4H_9$

$CH_2=C(CH_3)-C(=O)-NH-CH_2CH_2O-H$

$CH_2=C(CH_3)-C(=O)-NH-CH_2CH_2CH_2O-H$

$CH_2=C(CH_3)-C(=O)-NH-CH_2CH(CH_3)O-H$

$CH_2=C(CH_3)-C(=O)-NH-CH(CH_3)CH_2O-H$

$CH_2=C(CH_3)-C(=O)-NH-CH_2CH_2CH_2CH_2O-H$

$CH_2=C(CH_3)-C(=O)-NH-CH_2CH_2CH(CH_3)O-H$

$CH_2=C(CH_3)-C(=O)-NH-CH_2CH(CH_3)CH_2O-H$

$CH_2=C(CH_3)-C(=O)-NH-CH(CH_3)CH_2CH_2O-H$

$CH_2=C(CH_3)-C(=O)-NH-CH_2CH(CH_2CH_3)O-H$

$CH_2=C(CH_3)-C(=O)-NH-CH_2C(CH_3)_2O-H$

$CH_2=C(CH_3)-C(=O)-NH-CH(CH_2CH_3)CH_2O-H$

$CH_2=C(CH_3)-C(=O)-NH-C(CH_3)_2CH_2O-H$

$CH_2=C(CH_3)-C(=O)-NH-CH(CH_3)CH(CH_3)O-H$

$CH_2=C(CH_3)-C(=O)-NH-C(CH_3)(CH_2CH_3)O-H$

$CH_2=C(CH_3)-C(=O)-NH-(CH_2CH_2O)_2-H$

$CH_2=C(CH_3)-C(=O)-NH-(CH_2CH_2O)_4-H$

$CH_2=C(CH_3)-C(=O)-NH-(CH_2CH_2O)_5-H$

$CH_2=C(CH_3)-C(=O)-NH-(CH_2CH_2O)_6-H$

$CH_2=C(CH_3)-C(=O)-NH-(CH_2CH_2O)_9-H$

$CH_2=C(CH_3)-C(=O)-NH-(CH_2CH_2O)_5-CH_3$

$CH_2=C(CH_3)-C(=O)-NH-(CH_2CH_2O)_9-CH_3$

$CH_2=C(CH_3)-C(=O)-NH-(CH_2CH_2O)_{23}-CH_3$

$CH_2=C(CH_3)-C(=O)-NH-(CH_2CH_2O)_{90}-CH_3$

$CH_2=C(CH_3)-C(=O)-NH-(CH_2CH(CH_3)O)_9-H$

$CH_2=C(CH_3)-C(=O)-NH-(CH_2CH(CH_3)O)_9-CH_3$

$CH_2=C(CH_3)-C(=O)-NH-(CH_2CH(CH_3)O)_{12}-CH_3$

$CH_2=C(CH_3)-C(=O)-NH-(CH_2CH_2O)_5-(CH_2CH(CH_3)O)_2-H$

$CH_2=C(CH_3)-C(=O)-NH-(CH_2CH_2O)_5-(CH_2CH(CH_3)O)_3-CH_3$

$CH_2=C(CH_3)-C(=O)-NH-(CH_2CH_2O)_8-(CH_2CH(CH_3)O)_6-CH_2CH(C_2H_5)C_4H_9$

Acrylate and acrylamide in which $X^2$ is a hydrogen atom are preferred as the monomer (b). The monomer (b) is particularly preferably hydroxyethyl acrylate, hydroxypropyl acrylate, hydroxybutyl acrylate or hydroxyethyl acrylamide.

(c) Ionic group-containing monomer

The polymer (A) of the present disclosure may comprise a repeating unit derived from an ionic group-containing monomer (c). The monomer (c) is preferably a monomer having an ethylenically unsaturated double bond and an ionic group (in particular, an acrylic monomer). The ionic group is an anionic group and/or a cationic group, or a salt thereof.

The monomer (c) preferably has a (meth)acrylic group as the ethylenically unsaturated double bond, and for example, may have a (meth)acrylate group or a (meth)acrylamide group as the ethylenically unsaturated double bond.

Examples of monomers having an anionic group include a monomer having a carboxyl group, a sulfonic acid group or a phosphate group. Specific examples of monomers having an anionic group include (meth)acrylic acid, crotonic acid, maleic acid, fumaric acid, itaconic acid, citraconic acid, vinylsulfonic acid, (meth)allylsulfonic acid, styrene sulfonic acid, phosphoric acid (meth)acrylate, vinylbenzene sulfonic acid, acrylamide t-butylsulfonic acid and a salt thereof.

Examples of salts of the anionic group include alkaline metal salt, alkaline earth metal salt, or an ammonium salt such as methyl ammonium salt, ethanol ammonium salt and triethanol ammonium salt.

In the monomer having a cationic group, examples of cationic groups include an amino group, which is preferably a tertiary amino group and a quaternary amino group. It is preferable that in the tertiary amino group, two groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., a benzyl group ($C_6H_5-CH_2-$)). It is preferable that in the quaternary amino group, three groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., benzyl group ($C_6H_5-CH_2-$)). In the tertiary amino group and the quaternary amino group, the last group bonded to the nitrogen atom may have an ethylenically unsaturated double bond. The cationic group may be in the form of salt.

The cationic group in the form of salt is a salt with an acid (an organic acid or an inorganic acid). An organic acid such as a carboxylic acid having 1 to 20 carbon atoms (in particular, a monocarboxylic acid such as acetic acid, propionic acid, butyric acid and stearic acid) is preferred. Dimethylaminoethyl (meth)acrylate, diethylaminoethyl (meth)acrylate and a salt thereof are preferred.

Specific examples of monomers having a cationic group are as follows:

$CH_2=CHCOO-CH_2CH_2-N(CH_3)_2$ and a salt thereof (e.g., acetate)
$CH_2=CHCOO-CH_2CH_2-N(CH_2CH_3)_2$ and a salt thereof (e.g., acetate)
$CH_2=C(CH_3)COO-CH_2CH_2-N(CH_3)_2$ and a salt thereof (e.g., acetate)
$CH_2=C(CH_3)COO-CH_2CH_2-N(CH_2CH_3)_2$ and a salt thereof (e.g., acetate)
$CH_2=CHC(O)N(H)-CH_2CH_2CH_2-N(-CH_3)_2$ and a salt thereof (e.g., acetate)
$CH_2=CHCOO-CH_2CH_2-N(-CH_3)(-CH_2-C_6H_5)$ and a salt thereof (e.g., acetate)
$CH_2=C(CH_3)COO-CH_2CH_2-N(-CH_2CH_3)(-CH_2-C_6H_5)$ and a salt thereof (e.g., acetate)
$CH_2=CHCOO-CH_2CH_2-N^+(CH_3)_3Cl^-$
$CH_2=CHCOO-CH_2CH_2-N^+(-CH_3)_2(-CH_2-C_6H_5)Cl^-$
$CH_2=C(CH_3)COO-CH_2CH_2-N^+(CH_3)_3Cl^-$
$CH_2=CHCOO-CH_2CH(OH)CH_2-N^+(CH_3)_3Cl^-$
$CH_2=C(CH_3)COO-CH_2CH(OH)CH_2-N^+(CH_3)_3Cl^-$
$CH_2=C(CH_3)COO-CH_2CH(OH)CH_2-N^+(-CH_2CH_3)_2(-CH_2-C_6H_5)Cl^-$
$CH_2=C(CH_3)COO-CH_2CH_2-N^+(CH_3)_3Br^-$
$CH_2=C(CH_3)COO-CH_2CH_2-N^+(CH_3)_3I^-$
$CH_2=C(CH_3)COO-CH_2CH_2-N^+(CH_3)_3O^-SO_3CH_3$
$CH_2=C(CH_3)COO-CH_2CH_2-N^+(CH_3)(-CH_2-C_6H_5)_2Br^-$

Methacrylic acid, acrylic acid and dimethylaminoethyl methacrylate are preferred, and methacrylic acid and dimethylaminoethyl methacrylate are more preferred as the ionic group-containing monomer (c).

(d) Halogenated olefin monomer

The polymer (A) of the present disclosure may have a repeating unit derived from a halogenated olefin monomer (d). The halogenated olefin monomer (d) may not have a fluorine atom. The halogenated olefin monomer (d) is preferably an olefin having 2 to 20 carbon atoms and substituted by 1 to 10 chlorine atoms, bromine atoms or iodine atoms. The halogenated olefin monomer (d) is preferably chlorinated olefin having 2 to 20 carbon atoms, and particularly preferably an olefin having 2 to 5 carbon atoms and 1 to 5 chlorine atoms. Preferred specific examples of halogenated olefin monomers (d) include halogenated vinyl such as vinyl chloride, vinyl bromide and vinyl iodide, and halogenated vinylidene such as vinylidene chloride, vinylidene bromide and vinylidene iodide. Vinyl chloride and vinylidene chloride are preferred because they increase water-repellency, in particular, durability of water-repellency. The presence of the repeating unit derived from a halogenated olefin monomer (d) may improve wash durability provided by the polymer (A).

(e) Crosslinkable monomer

The polymer (A) of the present disclosure may comprise a repeating unit derived from a crosslinkable monomer (e). The crosslinkable monomer (e) has a reactive group and/or an ethylenically unsaturated double bond (preferably a (meth)acrylate group). The crosslinkable monomer (e) may be a monomer which does not include a fluorine atom. The crosslinkable monomer (e) may be a compound having at least two ethylenically unsaturated double bonds (preferably a (meth)acrylate group), or a compound having at least one ethylenically unsaturated double bond and at least one reactive group. Examples of reactive groups include a hydroxyl group, an epoxy group, chloromethyl group, a blocked isocyanate group, an amino group and a carboxyl group.

Examples of crosslinkable monomers may be a vinyl monomer having a reactive group, mono(meth)acrylate, di(meth)acrylate or di(meth)acrylamide having a reactive group.

Examples of crosslinkable monomers include, but are not limited to, diacetone (meth)acrylamide, 3-chloro-2-hydroxypropyl(meth)acrylate, 2-acetoacetoxyethyl (meth)acrylate, butadiene, isoprene, chloroprene, vinyl monochloroacetate, vinyl methacrylate, glycidyl (meth)acrylate, 1,4-butanediol di(meth)acrylate, 1,6-hexanediol di(meth)acrylate, 1,9-nonanediol di(meth)acrylate and neopentylglycol di(meth)acrylate.

(f) Cyclic hydrocarbon group-containing monomer

The polymer (A) of the present disclosure may have a repeating unit derived from a cyclic hydrocarbon group-containing monomer (f). The cyclic hydrocarbon group-containing monomer (f) has a cyclic hydrocarbon group, and may have an ethylenically unsaturated double bond and a cyclic hydrocarbon group. The polymer (A) of the present disclosure may be a styrene polymer having a repeating unit derived from styrene or a styrene derivative.

The cyclic hydrocarbon group-containing monomer (f) preferably has a (meth)acrylic group as the ethylenically unsaturated double bond, and for example, may have a (meth)acrylate group or a (meth)acrylamide group as the ethylenically unsaturated double bond.

The cyclic hydrocarbon group may be alicyclic or aromatic. The cyclic hydrocarbon group may be saturated or unsaturated. The cyclic hydrocarbon group may be a monocyclic group, a polycyclic group, or a bridged-ring group, and is preferably a bridged-ring group. The cyclic hydrocarbon group may have a chain group (e.g., a halogen atom, a linear or branched hydrocarbon group (in particular, a linear or branched hydrocarbon group having 1 to 20 carbon atoms).

The cyclic hydrocarbon group may have 4 or more, 6 or more, or 8 or more, and 30 or less, 26 or less, 22 or less, 18 or less, or 14 or less carbon atoms.

Specific examples of cyclic hydrocarbon groups include a cyclohexyl group, a t-butylcyclohexyl group, an adamantyl group, a 2-methyl-2-adamantyl group, a 2-ethyl-2-adamantyl group, a bornyl group, an isobornyl group, a norbornyl group, a dicyclopentanyl group, a dicyclopentenyl group, a benzyl group, a phenyl group, a naphthyl group, a 2-t-butylphenyl group, a residue formed by eliminating one or more hydrogen atoms from those groups (e.g., a cyclohexylene group, an adamantylene group, a phenylene group and a naphthylene group), and a substituted group thereof.

Specific examples of cyclic hydrocarbon group-containing monomers (f) include cyclohexyl(meth)acrylate, t-butylcyclohexyl(meth)acrylate, benzyl (meth)acrylate, isobornyl (meth)acrylate, dicyclopentanyl(meth)acrylate, dicyclopentenyl (meth)acrylate, dicyclopentanyloxyethyl (meth)acrylate, tricyclopentanyl (meth)acrylate, adamantyl (meth) acrylate, 2-methyl-2-adamantyl (meth)acrylate, 2-ethyl-2-adamantyl (meth)acrylate and a compound in which such acrylate is substituted with acrylamide. These may be used singly or in combination of two or more thereof.

An example of cyclic hydrocarbon group-containing monomers (f) is a styrene compound. The styrene compound may be modified with a chain group (e.g., a halogen atom, a linear or branched hydrocarbon group (in

particular, a linear or branched hydrocarbon group having 1 to 20 carbon atoms)). Specific examples thereof include styrene, 4-t-butylstyrene, 3,5-di-t-butylstyrene, 2,4,6-tri-t-butylstyrene, 4-methylstyrene, 3,5-dimethylstyrene and 2,4,6-trimethylstyrene. The styrene compound may be an α-methylstyrene compound, an α-chlorostyrene compound with a chlorine atom at the α position, or a styrene compound with a hydrogen atom at the α position.

(g) Polysiloxane group-containing monomer

The polymer (A) of the present disclosure may have a repeating unit derived from a polysiloxane group-containing monomer (g). The monomer (g) has one ethylenically unsaturated double bond and a polysiloxane group.

The monomer (g) preferably has a (meth)acrylic group, and for example, may have a (meth)acrylate group or a (meth)acrylamide group as the ethylenically unsaturated double bond.

The polysiloxane group of the monomer (g) is as described in the above (Polysiloxane group). The monomer (g) may have a polydimethylsiloxane group in the side chain.

The ethylenically unsaturated double bond and the polysiloxane group may be bonded by any linker group.

The monomer (g) is preferably a monomer represented by the formula:

$$CH_2=C(-X^g)-C(=O)-Y^g(R)^g_k$$

wherein $R^g$ is a group having a polydimethylsiloxane group, $X^g$ is a hydrogen atom, a monovalent organic group or a halogen atom,

$Y^g$ is a group composed of at least one selected from a divalent to tetravalent hydrocarbon group having 1 carbon atom (in particular, $-CH_2-$, $-CH(-)_2$), $-C_6H_4-$, -O-, -C(=O)-, $-S(=O)_2-$ and -NH-, and

k is 1 to 3.

$X^g$ may be a hydrogen atom, a methyl group, a halogen excluding a fluorine atom, a substituted or non-substituted benzyl group, or a substituted or non-substituted phenyl group. Examples of $X^g$ include a hydrogen atom, a methyl group, a chlorine atom, a bromine atom, an iodine atom and a cyano group. $X^g$ is preferably a hydrogen atom, a methyl group or a chlorine atom. $X^g$ is particularly preferably a hydrogen atom.

$Y^g$ is a divalent to tetravalent group. $Y^g$ is preferably a divalent group.

$Y^g$ is preferably a group composed of at least one selected from a hydrocarbon group having 1 carbon atom, $-C_6H_4-$, -O-, -C(=O)-, $-S(=O)_2-$ and -NH-. It is preferable that $Y^g$ is not a hydrocarbon group. Examples of hydrocarbon groups having 1 carbon atom include $-CH_2-$, $-CH(-)_2$ or $-C(-)_3$. A hydrocarbon group having 1 carbon atom may be repeatedly linked to form a hydrocarbon group having 2 or more carbon atoms, such as $-(CH_2)_m-$ (m is an integer from 1 to 5). $Y^g$ may have an NH group.

$Y^g$ may be -Y'-, -Y'-Y'-, -Y'-C(=O)-, -C(=O)-Y'-, - Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-wherein Y' is a direct bond, -O-, -NH- or $-S(=O)_2-$, and R' is $-(CH_2)_m-$ in which m is an integer of 1 to 5, or $-C_6H_4-$ (a phenylene group).

Specific examples of $Y^g$ include -O-, -NH-, -O-C(=O)-, -C(=O)-NH-, -NH-C(=O)-, -O-C(=O)-NH-, -NH-C(=O)-O-, -NH-C(=O)-NH-, $-O-C_6H_4-$, $-O-(CH_2)_m-O-$, $-NH-(CH_2)_m-NH-$, $-O-(CH_2)_m-NH-$, $-NH-(CH_2)_m-O-$, $-O-(CH_2)_m-O-C(=O)-$, $-O-(CH_2)_m-C(=O)-O-$, $-NH-(CH_2)_m-O-C(=O)-$, $-NH-(CH_2)_m-C(=O)-O-$, $-O-(CH_2)_m-O-C(=O)-NH-$, $-O-(CH_2)_m-NH-C(=O)-O-$, $-O-(CH_2)_m-C(=O)-NH-$, $-O-(CH_2)_m-NH-C(=O)-$, $-O-(CH_2)_m-NH-C(=O)-NH-$, $-O-(CH_2)_m-O-C_6H_4-$, $-O-(CH_2)_m-NH-S(=O)_2-$, $-O-(CH_2)_m-S(=O)_2-NH-$, $-NH-(CH_2)_m-O-C(=O)-NH-$, $-NH-(CH_2)_m-NH-C(=O)-O-$, $-NH-(CH_2)_m-C(=O)-NH-$, $-NH-(CH_2)_m-NH-C(=O)-$, $-NH-(CH_2)_m-NH-C(=O)-NH-$, $-NH-(CH_2)_m-O-C_6H_4-$, $-NH-(CH_2)_m-NH-C_6H_4-$, $-NH-(CH_2)_m-NH-S(=O)_2-$, or $-NH-(CH_2)_m-S(=O)_2-NH-$, wherein m is 1 to 5, in particular 2 or 4.

$Y^g$ is preferably -O-, -NH-, $-O-(CH_2)_m-O-C(=O)-$, $-O-(CH_2)_m-NH-C(=O)-$, $-O-(CH_2)_m-O-C(=O)-NH-$, $-O-(CH_2)_m-NH-C(=O)-O-$, $-O-(CH_2)_m-NH-C(=O)-NH-$, $-O-(CH_2)_m-NH-S(=O)_2-$, $-O-(CH_2)_m-S(=O)_2-NH-$, $-NH-(CH_2)_m-NH-S(=O)_2-$, or $-NH-(CH_2)_m-S(=O)_2-NH-$

wherein m is an integer of 1 to 5, in particular 2 or 4.

$Y^g$ is more preferably -O- or $-O-(CH_2)_m-NH-C(=O)-$, in particular $-O-(CH_2)_m-NH-C(=O)-$.

$R^g$ is a group having a polydimethylsiloxane group. The polydimethylsiloxane group is as described in the above (Polysiloxane group).

Examples of monomers (g) are as follows:

$$CH_2=C(-X^g)-C(=O)-Y^g-[-Si(R^s)_2-O-]_a-Si(R^s)_3$$

$$CH_2=C(-X^g)-C(=O)-Y^g-L^{s1}-[-Si(R^s)_2-O-]_a-Si(R^s)_3$$

$CH_2=C(-X^g)-C(=O)-Y^g-L^{s1}-O-L^{s1}-[-Si(R^s)_2-O-]_a-R^s$

$CH_2=C(-X^g)-C(=O)-Y^g-L^{s1}-[-Si(R^s)_2-O-]_a-Si(R^s)_3$

$CH_2=C(-X^g)-C(=O)-Y^g-L^{s1}-O-L^{s1}-[-Si(R^s)_2-O-]_a-R^s$

$CH_2=C(-X^g)-C(=O)-Y^g-L^{s1}-[-Si(R^s)_2-O-]_a-Si(R^s)_3$

$CH_2=C(-X^g)-C(=O)-Y^g-L^{s1}-[-Si(R^s)_2-O-]_a-R^s$

wherein the respective symbols are as described above.

(h) Other monomers

Other monomers are not limited to those examples, and include acrylonitrile, short-chain alkyl (meth)acrylate, vinyl acetate and vinyl alkyl ether. Other monomers (h) may be used singly or in combination of two or more thereof.

[Composition of polymer]

The combination of the monomers (a) to (g) constituting the repeating unit of the polymer (A) of the present disclosure is not limited, and is for example, as follows (parentheses omitted).
a

a+b

a+b+c

a+c

a+d

a+b+c+d

a+b+c+d+e

a+b+c+d+e+f

a+b+c+d+e+f+g

In the above combinations, the monomer (g) may also be used instead of the monomer (a) or in addition to the monomer (a). Other monomers (h) may also be used together with the above combinations. When the polymer (A) is used for a pulp product, preferably the monomer (a), the monomer (b) and the monomer (c) are used together.

The amount of the repeating unit derived from the monomer (a) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the polymer (A).

The amount of the monomer (a) (in particular the monomer (a1)) may be more than 90% by weight, 92% by weight or more, 94% by weight or more, 96% by weight or more, 98% by weight or more, 99% by weight or more, 99.5% by weight or more, or 100% by weight, and is, for example, 93% by weight or more, preferably more than 97% by weight, and 100% by weight or less, 99% by weight or less, 97% by weight or less, 95% by weight or less, or 93% by weight or less, and in an embodiment more than 90% by weight and 100% by weight or less based on the polymer (A). The amount of the monomer (a1) may be 100% by weight based on the polymer (A).

The amount of the monomer (a1) in the monomer (a) may be 10% by weight or more, 20% by weight or more, 30% by weight or more, 40% by weight or more, 50% by weight or more, 60% by weight or more, 70% by weight or more, or 80%

by weight or more, and is preferably 30% by weight or more, and may be 100% by weight or less, 90% by weight or less, 80% by weight or less, 50% by weight or less, 30% by weight or less.

The amount of the monomer (a2) in the monomer (a) may be 10% by weight or more, 20% by weight or more, 30% by weight or more, 40% by weight or more, 50% by weight or more, 60% by weight or more, 70% by weight or more, or 80% by weight or more, and may be 100% by weight or less, 90% by weight or less, 80% by weight or less, 50% by weight or less, 30% by weight or less.

The amount of the repeating unit derived from the monomer (b) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the polymer (A).

The amount of the repeating unit derived from the monomer (b) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, and 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by mass of the repeating unit derived from the monomer (a).

The amount of the repeating unit derived from the monomer (c) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the polymer (A).

The amount of the repeating unit derived from the monomer (c) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by mass of the repeating unit derived from the monomer (a).

The amount of the repeating unit derived from the monomer (d) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more based on the polymer (A). Furthermore, the amount of the repeating unit derived from the monomer (d) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the polymer (A).

The amount of the repeating unit derived from the monomer (d) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by mass of the repeating unit derived from the monomer (a).

The amount of the repeating unit derived from the monomer (e) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the polymer (A).

The amount of the repeating unit derived from the monomer (e) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by mass of the repeating

unit derived from the monomer (a).

The amount of the repeating unit derived from the monomer (f) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the polymer (A).

The amount of the repeating unit derived from the monomer (f) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by mass of the repeating unit derived from the monomer (a).

The amount of the repeating unit derived from the monomer (g) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the polymer (A).

The amount of the repeating unit derived from the monomer (g) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by mass of the repeating unit derived from the monomer (a).

The amount of the repeating unit derived from the monomer (h) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the polymer (A).

The amount of the repeating unit derived from the monomer (h) may be 0.01 part by weight or more, 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by weight of the repeating unit derived from the monomer (a).

When the monomer (g) is used instead of the monomer (a), the term "100 parts by weight of the repeating unit derived from the monomer (a)" in the above explanation of the amount of the respective monomers may be interchanged with "100 parts by weight of the repeating unit derived from the monomer (g)".

[Polymerization method]

The polymer (A) may be polymerized by a known polymerization method, and conditions of polymerization reaction may be optionally selected. Examples of polymerization methods include solution polymerization, suspension polymerization, emulsion polymerization, and condensation polymerization.

Solution polymerization uses a method in which monomer is dissolved in an organic solvent in the presence of a polymerization initiator, and after nitrogen replacement, the mixture is heated and stirred at 30 to 120°C for 1 to 10 hours. Examples of polymerization initiators include azobisisobutyronitrile, benzoyl peroxide, di-t-butyl peroxide, lauryl peroxide, cumene hydroperoxide, t-butyl peroxypivalate and diisopropyl peroxydicarbonate. 0.01 to 20 parts by weight, for example, 0.01 to 10 parts by weight of polymerization initiator is used based on 100 parts by weight of the monomer.

Organic solvents are inert to monomers and dissolves them. Examples thereof include ester (e.g., ester having 2 to 40 carbon atoms such as ethyl acetate and butyl acetate), ketone (e.g., ketone having 2 to 40 carbon atoms such as methyl ethyl ketone, diisobutyl ketone and methyl isobutyl ketone), alcohol (e.g., alcohol having 1 to 40 carbon atoms such as ethanol, butanol and isopropyl alcohol). Specific examples of solvents include acetone, chloroform, HCFC-225,

isopropyl alcohol, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachlorodifluoroethane and trichlorotrifluoroethane. 10 to 3,000 parts by weight, for example, 50 to 2,000 parts by weight of organic solvent is used based on 100 parts by weight of the total amount of the monomers.

Emulsion polymerization uses a method in which monomer is emulsified in water in the presence of a polymerization initiator and an emulsifier, and after nitrogen replacement, the monomer is polymerized by stirring at 50 to 80°C for 1 to 20 hours. As the polymerization initiator, a water-soluble initiator such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine-dihydrochloride, sodium peroxide, potassium persulfate and ammonium persulfate, and an oil-soluble initiator such as azobisisobutyronitrile, benzoyl peroxide, di-t-butylperoxide, lauryl peroxide, cumene hydroperoxide, t-butyl peroxypivalate and diisopropyl peroxydicarbonate are used. 0.01 to 10 parts by weight of polymerization initiator is used based on 100 parts by weight of the monomer.

In order to obtain an aqueous dispersion of polymer having excellent standing stability, it is desirable to micronize the monomer in water and then polymerize by using an emulsifying apparatus, such as a high-pressure homogenizer or an ultrasonic homogenizer which can apply intense crushing energy. Moreover, the emulsifying agent can be any of various types of anionic, cationic, and nonionic emulsifying agents, and is used in the range of 0.5 to 20 parts by weight, based on 100 parts by weight of the monomer. It is preferable to use an anionic and/or nonionic and/or cationic emulsifier. If monomers are not completely dissolved, it is preferable to add a compatibilizer which dissolves the monomers completely, such as a water-soluble organic solvent or a low molecular weight monomer. Addition of the compatibilizer improves emulsifiability and copolymerizability.

The above organic solvent may be used as the aqueous organic solvent. Examples thereof include acetone, methyl ethyl ketone, ethyl acetate, propylene glycol, dipropylene glycol monomethyl ether, dipropylene glycol, tripropylene glycol and ethanol. 1 to 50 parts by weight, for example, 10 to 40 parts by weight of the organic solvent may be used based on 100 parts by weight of water. Examples of low molecular weight monomers include methyl methacrylate, glycidyl methacrylate and 2,2,2-trifluoroethyl methacrylate. 1 to 50 parts by weight, for example, 10 to 40 parts by weight of the low molecular weight monomer may be used based on 100 parts by weight of the total amount of the monomers.

A chain transfer agent may be used in the polymerization. The molecular weight of the polymer can be changed according to the amount of the chain transfer agent used. Examples of chain transfer agents include a mercaptan group-containing compound, in particular, alkyl mercaptan having 1 to 40 carbon atoms, such as lauryl mercaptan, thioglycol and thioglycerol, and an inorganic salt such as sodium hypophosphite and sodium hydrogen sulfide. 0.01 to 10 parts by weight, for example, 0.1 to 5 parts by weight of the chain transfer agent may be used based on 100 parts by weight of the total amount of the monomers.

{(B) Silicone compound}

The silicone compound (B) of the present disclosure will be described. The silicone compound (B) is a polyorganosiloxane compound having a siloxane bond. The silicone compound (B) may be composed of one type of polyorganosiloxane compound, or may comprise two or more types of polyorganosiloxane compounds. The silicone compound (B) is composed of a resin-type silicone and a non-resin-type silicone.

In the GPC chart of the silicone compound (B), a peak top is present in the region of molecular weight of 1,500 or more. The following analysis may confirm whether the silicone compound (B) has a peak top in the region of molecular weight of 1,500 or more in the GPC chart obtained by GPC measurement. It is determined to have a peak top in the region of molecular weight 1,500 or more by GPC (gel permeation chromatography) (in terms of polystyrene).

For the gel permeation chromatography, an HLC-8420GPC EcoSEC Elite-WS (manufactured by Tosoh Corporation) was used. The column used was a set of two connected TSKgel SuperMultiporeHZ-M columns. An RI detector was used as the detector. The standard substance used was standard polystyrene (SRM 706a NIST).

The analytical sample was prepared by dissolving the resin-type silicone in tetrahydrofuran to obtain a 0.1% by weight solution, which was then passed through a 0.5 μm filter. For the measurement of the average molecular weight, the columns were maintained at 40°C, tetrahydrofuran was used as the eluent, the flow rate was set to 0.35 mL/min, and 10 μL of the analytical sample was injected.

Furthermore, the silicone compound is fractionated by preparative GPC to isolate components with a molecular weight of 1,500 or more. For the gel permeation chromatography, an Agilent 1260 Infinity II LC system (manufactured by Agilent) was used. The columns used were one SHODEX KF-G column and two SHODEX KF-806L columns connected in series. An ELSD detector was used as the detector. The standard substance used was polymethyl methacrylate.

The analytical sample was prepared by dissolving the silicone compound in tetrahydrofuran to obtain a 0.1% by weight solution, which was then passed through a 0.5 μm filter. For the measurement of the average molecular weight, the columns were maintained at 30°C, tetrahydrofuran was used as the eluent, the flow rate was set to 0.50 mL/min, and 100

μL of the analytical sample was injected.

The components with a molecular weight of 1,500 or more were concentrated to isolate the silicone compound components (Mn>1500), and the non-resin-type silicone components are confirmed to be contained in this region by measuring the $^{1}$H-NMR and $^{29}$Si-NMR of the silicone compound components (Mn>1500).

The component of the silicone compound with a molecular weight of 1,500 or more comprises a non-resin-type silicone other than an amino-modified silicone. The component with a molecular weight of 1,500 or more means a component (i.e., resin-type silicone and/or non-resin-type silicone) whose molecular weight per molecule is 1,500 or more. The presence of a resin-type silicone and/or non-resin-type silicone with a molecular weight of 1,500 or more can be confirmed by GPC or the like.

The non-resin-type silicone other than an amino-modified silicone in the component of the silicone compound with a molecular weight of 1,500 or more may be a non-resin-type silicone as described in [Non-Resin-Type Silicone] below.

The description relating to the following silicone compound (B) may be independently applied to each of the resin-type silicone and the non-resin-type silicone.

The silicone compound (B) may have 3 or more, 5 or more, 6 or more, 10 or more, 30 or more, 50 or more, 100 or more, 500 or more, 1,000 or more, 2,000 or more, or 3,000 or more, preferably 10 or more silicon atoms, and 50,000 or less, 25,000 or less, 10,000 or less, 7,500 or less, 5,000 or less, 3,000 or less, 1,500 or less, 1,000 or less, 500 or less, 300 or less, 200 or less, 100 or less, or 50 or less, and for example, 500 or less silicon atoms.

The number average molecular weight of the silicone compound (B) is 250 or more, preferably 300 or more, and more preferably 500 or more. The above number average molecular weight of the silicone compound (B) may be 50,000 or less, and may be 10,000 or less. The number average molecular weight of the silicone compound (B) may be, for example, in the range from 250 to 50,000, or may be in the range from 250 to 10,000, for example, 1,000 to 7,000 or 2,000 to 6,000. The number average molecular weight of the silicone compound (B) can be measured using GPC.

[Unit]

The silicone compound (B) is composed of a combination of at least one or more units selected from the group consisting of an M unit, a D unit, a T unit, and a Q unit.

An M unit represents a $(R^M)_3SiO_{0.5}$ unit. In the silicone compound (B), $R^M$ is each independently a hydrocarbon group having 1 to 40 carbon atoms or a reactive group.

The ratio of M units contained in the silicone compound (B) of the present disclosure may be 0 mol% or more, 10 mol% or more, 20 mol% or more, 30 mol% or more, 40 mol% or more, or 50 mol% or more, and may be 50 mol% or less, 40 mol% or less, 30 mol% or less, 20 mol% or less, or 10 mol% or less, in the molecule or in the silicone compound (B).

Based on the amount of D units, T units, or Q units, the amount of M units is 0 mol% or more, 10 mol% or more, 20 mol% or more, 30 mol% or more, 40 mol% or more, or 50 mol% or more, and may be 150 mol% or less, 130 mol% or less, 100 mol% or less, 80 mol% or less, 60 mol% or less, 50 mol% or less, 40 mol% or less, 30 mol% or less, 20 mol% or less, or 10 mol% or less.

A D unit represents a $(R^D)_2SiO$ unit. In the silicone compound (B), $R^D$ is each independently a hydrocarbon group having 1 to 40 carbon atoms or a reactive group.

The ratio of D units contained in the silicone compound (B) of the present disclosure may be 0 mol% or more, 10 mol% or more, 20 mol% or more, 30 mol% or more, 40 mol% or more, or 50 mol% or more, and may be 95 mol% or less, 90 mol% or less, 80 mol% or less, 70 mol% or less, 60 mol% or less, 50 mol% or less, 40 mol% or less, 30 mol% or less, 20 mol% or less, or 10 mol% or less, in the molecule or in the silicone compound (B). The silicone compound (B) of the present disclosure may be free of D units.

A T unit represents a $R^TSiO_{1.5}$ unit. In the silicone compound (B), $R^T$ is each independently a hydrocarbon group having 1 to 40 carbon atoms or a reactive group.

The ratio of T units contained in the silicone compound (B) of the present disclosure may be 0 mol% or more, 10 mol% or more, 20 mol% or more, 30 mol% or more, 40 mol% or more, or 50 mol% or more, and may be 95 mol% or less, 90 mol% or less, 80 mol% or less, 70 mol% or less, 60 mol% or less, 50 mol% or less, 40 mol% or less, 30 mol% or less, 20 mol% or less, or 10 mol% or less, in the molecule or in the silicone compound (B). The silicone compound (B) of the present disclosure may be free of T units.

A Q unit represents a $SiO_2$ unit.

The ratio of Q units contained in the silicone compound (B) of the present disclosure may be 0 mol% or more, 10 mol% or more, 20 mol% or more, 30 mol% or more, 40 mol% or more, or 50 mol% or more, and may be 95 mol% or less, 90 mol% or less, 80 mol% or less, 70 mol% or less, 60 mol% or less, 50 mol% or less, 40 mol% or less, 30 mol% or less, 20 mol% or less, or 10 mol% or less, in the molecule or in the silicone compound (B). The silicone compound (B) of the present

disclosure may be free of Q units.

Examples of hydrocarbon groups having 1 to 40 carbon atoms include a hydrocarbon group having 1 to 5 carbon atoms and a hydrocarbon group having 6 to 40 carbon atoms.

Examples of hydrocarbon groups having 1 to 5 carbon atoms include a hydrocarbon group having 1 to 5 carbon atoms such as a methyl group, an ethyl group, a propyl group, a butyl group and a pentyl group (in particular an aliphatic hydrocarbon group, in particular an alkyl group, for example, a methyl group or an ethyl group, and in particular a methyl group).

The hydrocarbon group having 2 to 40 carbon atoms may be an aromatic hydrocarbon group or an aliphatic hydrocarbon group, and is preferably an aliphatic hydrocarbon group, and in particular a saturated aliphatic hydrocarbon group (an alkyl group). The hydrocarbon group may be cyclic, linear or branched, and preferably linear. The hydrocarbon group may have 6 or more, 8 or more, 10 or more, 12 or more, 14 or more, 16 or more, 18 or more, preferably 10 or more, more preferably 12 or more carbon atoms, and 40 or less, 35 or less, 30 or less, 25 or less, 20 or less, 15 or less, or 10 or less, preferably 30 or less, and more preferably 25 or less carbon atoms. Examples of aromatic hydrocarbon groups include a phenyl group.

Examples of reactive groups include a group having a functional group (for example, a hydroxy group, an amino group, a mercapto group, an epoxy group, a carboxyl group, a halogen-substituted alkyl group, a vinyl group, a (meth) acrylic group, a (meth)acryloyloxy group, an oxyalkylene group, an isocyanate group, a (meth)acrylamide group, and a hydrogen atom directly bonded to a silicon atom). These functional groups may be directly bonded to a silicon atom, or may be bonded to an organic group directly bonded to a silicon atom. The organic group may be a hydrocarbon group, and for example, an alkylene group or a divalent aromatic group. The hydrocarbon group may have 2 or more and 12 or less carbon atoms. An alkylene group having 2 or more and 10 or less carbon atoms is preferred. A divalent aromatic group having 6 or more and 12 or less carbon atoms is preferred. The reactive group may be a group selected from the group consisting of a hydroxy group, an epoxy ring, a carboxyl group, a (meth)acrylic group and an amino group, and for example, may be at least one selected from the group consisting of an epoxy ring, a hydroxy group, a (meth)acrylic group and a carboxyl group.

The silicone compound (B) may be a non-modified silicone in which the reactive group is not modified (e.g., polyalkylsiloxane, polyalkylphenylsiloxane, polydimethylsiloxane), or a modified silicone (e.g., amino-modified, polyether-modified, epoxy-modified silicone, carboxy-modified silicone, methylhydrogen silicone, carbinol-modified silicone, carboxyl-modified silicone, mercapto-modified silicone).

[Amount of Silicone Compound]

The amount of the silicone compound (B) is 1 to 49% by weight, and may be 5% by weight or more, 10% by weight or more, 15% by weight or more, 20% by weight or more, 30% by weight or more, or 40% by weight or more, and 45% by weight or less, 40% by weight or less, 35% by weight or less, 30% by weight or less, 25% by weight or less, 20% by weight or less, 15% by weight or less, 10% by weight or less, or 5% by weight or less, and 15 to 45% by weight, based on the sum of the amount of the polymer (A) and the amount of the silicone compound (B).

[Ratio of resin-type silicone to non-resin-type silicone]

The amount of resin-type silicone may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and 500 parts by weight or less, 300 parts by weight or less, 200 parts by weight or less, 100 parts by weight or less, 30 parts by weight or less, 20 parts by weight or less, 10 parts by weight or less, 5 parts by weight or less, 3 parts by weight or less, or 1 part by weight or less based on 100 parts by weight of the non-resin-type silicone.

[Resin-Type Silicone]

The resin-type silicone is an organopolysiloxane having a three-dimensional structure in its molecule.

The organopolysiloxane having a three-dimensional structure in its molecule is an organopolysiloxane having siloxane bonds that branch in a three-dimensional manner.

The above three-dimensional structure may be a three-dimensional crosslinked structure in which a main chain composed of siloxane bonds is linked within the main chain and/or to another main chain composed of siloxane bonds. Such a three-dimensional structure can be achieved by including, in the silicone, a T unit capable of branching in three directions and/or a Q unit capable of branching in four directions, as will be described in detail below. The resin-type silicone is also referred to as a silicone resin, as it includes a three-dimensional structure composed of siloxane bonds that branch in a three-dimensional manner.

The state at 25°C of the resin-type silicone is not limited as long as the resin-type silicone has a three-dimensional structure in its molecule. The resin-type silicone can assume a state such as solid, liquid, or gel. As a preferred embodiment, the resin-type silicone may be a silicone that is solid at 25°C.

The silicone compound (B) may be a resin-type silicone. The resin-type silicone may be a resin in which the main chain has siloxane bonds. The resin-type silicone may be an organopolysiloxane having a three-dimensional structure.

The resin-type silicone may be a resin composed of one or more units selected from MQ, MT, MDT, MDQ, MTQ, DT, and MDTQ.

The molar ratio of M units to D units, T units, or Q units (M units/D units, M units/T units, or M units/Q units) may be 0.5 or more, 0.6 or more, 0.7 or more, 0.8 or more, 0.9 or more, or 1.0 or more, it may be 1.8 or less, 1.7 or less, 1.6 or less, 1.5 or less, 1.4 or less, 1.3 or less, 1.2 or less, or 1.1 or less, and may be 0.6 or more and 1.7 or less, preferably 0.8 or more and 1.5 or less.

The molar ratio of D units to M units, T units, or Q units (D units/M units, D units/T units, or D units/Q units) may be 0.5 or more, 0.6 or more, 0.7 or more, 0.8 or more, 0.9 or more, or 1.0 or more, it may be 1.8 or less, 1.7 or less, 1.6 or less, 1.5 or less, 1.4 or less, 1.3 or less, 1.2 or less, or 1.1 or less, and may be 0.6 or more and 1.7 or less, preferably 0.8 or more and 1.5 or less.

The ratio of M units contained in the resin-type silicone may be 0 mol% or more, 10 mol% or more, 20 mol% or more, 30 mol% or more, 40 mol% or more, or 50 mol% or more, and may be 50 mol% or less, 40 mol% or less, 30 mol% or less, 20 mol% or less, or 10 mol% or less, in the resin-type silicone.

Based on the amount of D units, T units, or Q units, the amount of M units is 0 mol% or more, 10 mol% or more, 20 mol% or more, 30 mol% or more, 40 mol% or more, or 50 mol% or more, and may be 150 mol% or less, 130 mol% or less, 100 mol% or less, 80 mol% or less, 60 mol% or less, 50 mol% or less, 40 mol% or less, 30 mol% or less, 20 mol% or less, or 10 mol% or less.

The ratio of D units contained in the resin-type silicone may be 0 mol% or more, 10 mol% or more, 20 mol% or more, 30 mol% or more, 40 mol% or more, or 50 mol% or more, and may be 95 mol% or less, 90 mol% or less, 80 mol% or less, 70 mol% or less, 60 mol% or less, 50 mol% or less, 40 mol% or less, 30 mol% or less, 20 mol% or less, or 10 mol% or less, in the resin-type silicone.

The ratio of T units contained in the resin-type silicone may be 0 mol% or more, 10 mol% or more, 20 mol% or more, 30 mol% or more, 40 mol% or more, or 50 mol% or more, and may be 95 mol% or less, 90 mol% or less, 80 mol% or less, 70 mol% or less, 60 mol% or less, 50 mol% or less, 40 mol% or less, 30 mol% or less, 20 mol% or less, or 10 mol% or less, in the resin-type silicone.

The ratio of Q units contained in the resin-type silicone may be 0 mol% or more, 10 mol% or more, 20 mol% or more, 30 mol% or more, 40 mol% or more, or 50 mol% or more, and may be 95 mol% or less, 90 mol% or less, 80 mol% or less, 70 mol% or less, 60 mol% or less, 50 mol% or less, 40 mol% or less, 30 mol% or less, 20 mol% or less, or 10 mol% or less, in the resin-type silicone.

The definitions of the M unit, D unit, T unit, and Q unit in the resin-type silicone are as described in the silicone compound (B).

The resin-type silicone may also be obtained as a solution in which the resin-type silicone is dissolved in an alkyl polysiloxane or in a liquid medium other than an alkyl polysiloxane. Examples of solvents other than alkyl polysiloxanes include n-hexane, isopropyl alcohol, methylene chloride, 1,1,1-trichloroethane, and mixtures of these solvents.

Examples of solutions in which the resin-type silicone is dissolved in an alkyl polysiloxane include KF7312J (50:50 mixture of trimethylsilyl group-containing polysiloxane and decamethylcyclopentasiloxane), KF7312F (50:50 mixture of trimethylsilyl group-containing polysiloxane and octamethylcyclotetrasiloxane), KF9021L (50:50 mixture of trimethylsilyl group-containing polysiloxane and low-viscosity methylpolysiloxane), and KF7312L (50:50 mixture of trimethylsilyl group-containing polysiloxane and low-viscosity methylpolysiloxane), which are commercially available from Shin-Etsu Chemical Co., Ltd.

The resin-type silicone alone may be a commercially available product. Examples of commercially available products include:

MQ-1600 and MQ-1640 (each manufactured by Dow Chemical Japan Limited);
KR-220L, KR-251, KR-311, and X-40-2406M (each manufactured by Shin-Etsu Chemical Co., Ltd.);
R2701 (manufactured by Wacker Asahikasei Silicone Co., Ltd.);
Silmer HQ20 (manufactured by Siltech Corporation); and
SILDFORM FLEXIBLE RESIN (manufactured by Momentive Performance Materials, Inc.).

The resin-type silicone may have 3 or more, 5 or more, 6 or more, 10 or more, 30 or more, 50 or more, 100 or more, 500 or more, 1,000 or more, 2,000 or more, or 3,000 or more, preferably 10 or more silicon atoms, and 50,000 or less, 25,000 or less, 10,000 or less, 7,500 or less, 5,000 or less, 3,000 or less, 1,500 or less, 1,000 or less, 500 or less, 300 or less, 200 or less, 100 or less, or 50 or less, and for example, 500 or less silicon atoms.

The resin-type silicone may be used as an emulsion of a resin-type silicone. Examples of emulsions of a resin-type silicone include:

X-52-8005, X-52-8432, X-52-8407, X-52-8407, X-52-8499DA, X-52-8500DA, and KR-4000GE (each manufactured by Shin-Etsu Chemical Co., Ltd.);
R2701 (manufactured by Wacker Asahikasei Silicone Co., Ltd.); and
Siltech E-2199 (manufactured by Siltech Corporation).

The above commercially available products may contain MQ, MDQ, MT, MTQ, MDT, or MDTQ.

(Molecular weight)

The number average molecular weight Mn of the resin-type silicone may be 200 or more, 300 or more, 500 or more, 700 or more, 1,000 or more, 1,500 or more, 2,000 or more, 2,500 or more, 3,000 or more, 4,000 or more, 5,000 or more, 6,000 or more, 8,000 or more, or 10,000 or more, and 100,000 or less, 80,000 or less, 60,000 or less, 50,000 or less, 40,000 or less, 30,000 or less, 25,000 or less, 20,000 or less, 15,000 or less, or 10,000 or less.
The number average molecular weight Mn of the resin-type silicone can be obtained by GPC (gel permeation chromatography) (in terms of polystyrene).
For the gel permeation chromatography, an HLC-8420GPC EcoSEC Elite-WS (manufactured by Tosoh Corporation) was used. The column used was a set of two connected TSKgel SuperMultiporeHZ-M columns. An RI detector was used as the detector. The standard substance used was standard polystyrene (SRM 706a NIST).
The analytical sample was prepared by dissolving the resin-type silicone in tetrahydrofuran to obtain a 0.1% by weight solution, which was then passed through a 0.5 μm filter. For the measurement of the average molecular weight, the columns were maintained at 40°C, tetrahydrofuran was used as the eluent, the flow rate was set to 0.35 mL/min, and 10 μL of the analytical sample was injected.
The resin-type silicone may be a commercially available product. Examples of commercially available products include MQ-1600 Solid Resin (manufactured by Dow Corning Toray Co., Ltd.) and MQ-1640 Flake Resin (manufactured by Dow Corning Toray Co., Ltd.). These commercially available products contain trimethylsilyl group-containing polysiloxanes, and may contain MQ, MDQ, MT, MTQ, MDT, or MDTQ.

[Non-Resin-Type Silicone]

The non-resin-type silicone is a silicone other than a resin-type silicone. The non-resin-type silicone is a silicone mainly composed of two-dimensional siloxane bonds, and is, for example, a silicone mainly composed of a linear and/or cyclic structure. In addition to linear and/or cyclic siloxane bonds, the non-resin-type silicone may also contain a branched chain that does not form a three-dimensional crosslinked structure (for example, a branched chain that branches in a Y-shape, X-shape, or the like).
The state at 25°C of the non-resin-type silicone is not limited, and the non-resin-type silicone can assume a state such as solid, liquid, or gel. As a preferred embodiment, the non-resin-type silicone is a silicone that is liquid at 25°C.
The non-resin-type silicone is also referred to as a silicone oil, as it is a silicone mainly composed of two-dimensional siloxane bonds. Even as a silicone oil, the silicone oil is not necessarily in a liquid state at 25°C, and can exist in a solid state depending on the size of its molecular weight and the presence or absence of substituents such as an alkyl group.
The silicone compound (B) or the non-resin-type silicone may be a silicone oil. The silicone oil may be, for example, either a linear or cyclic silicone oil. The silicone oil may be liquid at 25°C.
The non-resin-type silicone can be composed of M units and D units as the main components, but may also contain T units and/or Q units. Preferably, the non-resin-type silicone is free of T units and/or Q units. Examples of the non-resin-type silicone include dimethyl silicone oil.
The ratio of M units contained in the resin-type silicone may be 0 mol% or more, 10 mol% or more, 20 mol% or more, 30 mol% or more, 40 mol% or more, or 50 mol% or more, and may be 50 mol% or less, 40 mol% or less, 30 mol% or less, 20 mol% or less, or 10 mol% or less, in the non-resin-type silicone.
Based on the amount of D units, T units, or Q units, the amount of M units is 0 mol% or more, 10 mol% or more, 20 mol% or more, 30 mol% or more, 40 mol% or more, or 50 mol% or more, and may be 150 mol% or less, 130 mol% or less, 100 mol% or less, 80 mol% or less, 60 mol% or less, 50 mol% or less, 40 mol% or less, 30 mol% or less, 20 mol% or less, or 10 mol% or less.
The ratio of D units contained in the non-resin-type silicone may be 10 mol% or more, 30 mol% or more, 40 mol% or more, 50 mol% or more, 60 mol% or more, or 70 mol% or more, and may be 100 mol% or less, 90 mol% or less, 80 mol% or less, or 70 mol% or less, in the non-resin-type silicone.

The ratio of T units contained in the non-resin-type silicone may be 0 mol% or more, 10 mol% or more, 20 mol% or more, 30 mol% or more, 40 mol% or more, or 50 mol% or more, and may be 50 mol% or less, 40 mol% or less, 30 mol% or less, 20 mol% or less, or 10 mol% or less, in the non-resin-type silicone. The non-resin-type silicone may be free of T units.
The ratio of Q units contained in the non-resin-type silicone may be 0 mol% or more, 10 mol% or more, 20 mol% or more, 30 mol% or more, 40 mol% or more, or 50 mol% or more, and may be 50 mol% or less, 40 mol% or less, 30 mol% or less, 20 mol% or less, or 10 mol% or less, in the non-resin-type silicone. The non-resin-type silicone may be free of Q units.
The definitions of the M unit, D unit, T unit, and Q unit in the non-resin-type silicone are as described in the silicone compound (B).
The viscosity of the non-resin-type silicone is 0.1 $mm^2/s$ or more, 1.0 $mm^2/s$ or more, 5.0 $mm^2/s$ or more, 10 $mm^2/s$ or more, 50 $mm^2/s$ or more, 100 $mm^2/s$ or more, 300 $mm^2/s$ or more, 500 $mm^2/s$ or more, 1,000 $mm^2/s$ or more, 3,000 $mm^2/s$ or more, 5,000 $mm^2/s$ or more, 10,000 $mm^2/s$ or more, 30,000 $mm^2/s$ or more, 50,000 $mm^2/s$ or more, 100,000 $mm^2/s$ or more, 300,000 $mm^2/s$ or more, or 500,000 $mm^2/s$ or more, and may be 1,000,000 $mm^2/s$ or less, 500,000 $mm^2/s$ or less, 300,000 $mm^2/s$ or less, 100,000 $mm^2/s$ or less, 50,000 $mm^2/s$ or less, 30,000 $mm^2/s$ or less, 10,000 $mm^2/s$ or less, 5,000 $mm^2/s$ or less, 3,000 $mm^2/s$ or less, or 1,000 $mm^2/s$ or less.
The above linear non-resin-type silicone may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, carbinol, mercapto, or the like. Examples of the cyclic silicone oil include cyclic dimethylsiloxane oil.
The non-resin-type silicone may have 3 or more, 5 or more, 6 or more, 10 or more, 30 or more, 50 or more, 100 or more, 500 or more, 1,000 or more, 2,000 or more, or 3,000 or more, preferably 10 or more silicon atoms, and 50,000 or less, 25,000 or less, 10,000 or less, 7,500 or less, 5,000 or less, 3,000 or less, 1,500 or less, 1,000 or less, 500 or less, 300 or less, 200 or less, 100 or less, or 50 or less, and for example, 500 or less silicon atoms.
The linear non-resin-type silicone (in other words, the linear polyorganosiloxane) may be a compound in which the side chains and ends are saturated hydrocarbon groups. The non-resin-type silicone may be, for example, a compound represented by the following formula (1):
[Formula 1]

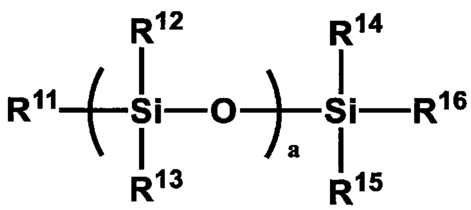

(1)

wherein

$R^{11}$, $R^{12}$, $R^{13}$, $R^{14}$, $R^{15}$, and $R^{16}$ are each independently a monovalent saturated hydrocarbon group having 1 to 18 carbon atoms, and
a is an integer of 1 or more.

$R^{11}$, $R^{12}$, $R^{13}$, $R^{14}$, $R^{15}$, and $R^{16}$ are each independently a monovalent saturated hydrocarbon group having 1 to 18 carbon atoms. Such a monovalent saturated hydrocarbon group may have 1 or more, 2 or more, 3 or more, 4 or more, 5 or more, 6 or more, 8 or more, 10 or more, or 12 or more, and 18 or less, 16 or less, 14 or less, 12 or less, 10 or less, 8 or less, 6 or less, 4 or less, or 2 or less carbon atoms.
The monovalent saturated hydrocarbon group of $R^{11}$, $R^{12}$, $R^{13}$, $R^{14}$, $R^{15}$, and $R^{16}$ may each independently be linear or branched, with a linear group being preferred, and a linear alkyl group being more preferred.
In an embodiment, the monovalent saturated hydrocarbon group of $R^{11}$, $R^{12}$, $R^{13}$, $R^{14}$, $R^{15}$, and $R^{16}$ is preferably a methyl group or an ethyl group, and more preferably a methyl group.
In an embodiment, at least one or more of $R^{11}$, $R^{12}$, $R^{13}$, $R^{14}$, $R^{15}$, and $R^{16}$ may be modified with a reactive group. Examples of the reactive group may be the reactive groups exemplified above, and include, for example, -OR', $-N(R')_2$, -COOR', an epoxy group, a mercapto group, and a halogen atom, wherein R' is independently at each occurrence a hydrogen atom, an amino group, a hydrocarbon group having 1 to 30, 1 to 20, 1 to 10, or 1 to 4 carbon atoms. The reactive group may or may not have active hydrogen.
a is an integer of 1 or more. The value of a may be selected such that the kinematic viscosity of the non-resin-type silicone represented by formula (1) falls within the range of the kinematic viscosity of the non-resin-type silicone described below.

In an embodiment, a is 3 or more, 5 or more, 6 or more, 10 or more, 30 or more, 50 or more, 100 or more, 500 or more, 1,000 or more, 2,000 or more, or 3,000 or more, and preferably 10 or more, and 10,000 or less, 7,500 or less, 5,000 or less, 3,000 or less, 1,500 or less, 1,000 or less, 500 or less, 300 or less, 200 or less, 100 or less, or 50 or less, and preferably 1,000 or less.

Examples of the non-resin-type silicone represented by formula (1) include dimethylpolysiloxane and diethylpolysiloxane.

The cyclic non-resin-type silicone (in other words, the cyclic organopolysiloxane) may be a compound in which the side chains are saturated hydrocarbon groups. The non-resin-type silicone may be, for example, a compound represented by the following formula (2):

[Formula 2]

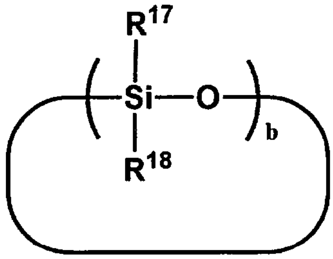

(2)

wherein

$R^{17}$ and $R^{18}$ are each independently a monovalent saturated hydrocarbon group having 1 to 18 carbon atoms, and w is an integer of 2 to 20.

$R^{17}$ and $R^{18}$ are each independently a monovalent saturated hydrocarbon group having 1 to 18 carbon atoms. Such a saturated hydrocarbon group may have 1 or more, 2 or more, 3 or more, 4 or more, 5 or more, 6 or more, 8 or more, 10 or more, or 12 or more, and 18 or less, 16 or less, 14 or less, 12 or less, 10 or less, 8 or less, 6 or less, 4 or less, or 2 or less carbon atoms, and has preferably 1 to 10 carbon atoms.

The saturated hydrocarbon group of $R^{17}$ and $R^{18}$ may each independently be linear or branched, with a linear group being preferred, and a linear alkyl group being more preferred.

In an embodiment, the saturated hydrocarbon group of $R^{17}$ and $R^{18}$ is preferably a methyl group or an ethyl group, and more preferably a methyl group.

In an embodiment, at least one or more of $R^{17}$ and $R^{18}$ may be modified with a reactive group. Examples of the reactive group may be the reactive groups exemplified above, and include, for example, -OR', $-N(R')_2$, -COOR', an epoxy group, a mercapto group, and a halogen atom, wherein R' is independently at each occurrence a hydrogen atom, an amino group, a hydrocarbon group having 1 to 30, 1 to 20, 1 to 10, or 1 to 4 carbon atoms. The reactive group may or may not have active hydrogen.

b is an integer of 2 to 20. b is preferably 3 to 10, and more preferably 4 or 5.

Examples of the compound represented by formula (2) include decamethylcyclopentasiloxane and octamethylcyclotetrasiloxane.

One non-resin-type silicone may be used singly, or two or more may be used in combination.

(Molecular weight)

The non-resin-type silicone may have a peak top in the region of molecular weight of 1,500 or more in the GPC chart obtained by GPC measurement. In addition, the non-resin-type silicone may include at least a non-resin-type silicone other than an amino-modified silicone. The non-resin-type silicone having a peak top in the region of molecular weight of 1,500 or more may be a non-resin-type silicone other than an amino-modified silicone, and may be, for example, the straight non-resin-type silicone or modified non-resin-type silicone (excluding amino-modified silicones) exemplified above.

The non-resin-type silicone in the silicone compound (B) may be a non-resin-type silicone with a molecular weight of 1,500 or more other than an amino-modified silicone. The non-resin-type silicone with a molecular weight of 1,500 or more means a non-resin-type silicone whose molecular weight per molecule is 1,500 or more. The presence of a non-resin-type silicone with a molecular weight of 1,500 or more can be confirmed by GPC or the like.

The number average molecular weight Mn of the non-resin-type silicone may be 200 or more, 300 or more, 500 or more, 700 or more, 1,000 or more, 1,500 or more, 2,000 or more, 2,500 or more, 3,000 or more, 4,000 or more, 5,000 or

more, 6,000 or more, 8,000 or more, or 10,000 or more, and 100,000 or less, 80,000 or less, 60,000 or less, 50,000 or less, 40,000 or less, 30,000 or less, 25,000 or less, 20,000 or less, 15,000 or less, or 10,000 or less.

The number average molecular weight Mn of the non-resin-type silicone can be obtained by GPC (gel permeation chromatography) (in terms of polystyrene).

For the gel permeation chromatography, an HLC-8420GPC EcoSEC Elite-WS (manufactured by Tosoh Corporation) was used. The column used was a set of two connected TSKgel SuperMultiporeHZ-M columns. An RI detector was used as the detector. The standard substance used was standard polystyrene (SRM 706a NIST).

The analytical sample was prepared by dissolving the resin-type silicone (or non-resin-type silicone) in tetrahydrofuran to obtain a 0.1% by weight solution, which was then passed through a 0.5 μm filter. For the measurement of the average molecular weight, the columns were maintained at 40°C, tetrahydrofuran was used as the eluent, the flow rate was set to 0.35 mL/min, and 10 μL of the analytical sample was injected.

The non-resin-type silicone may be a commercially available product. Examples of commercially available products include KF-96-30CS (manufactured by Shin-Etsu Chemical Co., Ltd.), KF-96-50CS (manufactured by Shin-Etsu Chemical Co., Ltd.), KF-96-300CS (manufactured by Shin-Etsu Chemical Co., Ltd.), and KF-96-1000CS (manufactured by Shin-Etsu Chemical Co., Ltd.).

[Silicone Emulsion]

The silicone compound (B) may be a silicone emulsion emulsified with a dispersant, surfactant, or the like. That is, the silicone compound (B) may be combined with a dispersant, a surfactant, or the like, and incorporated in the water-repellent composition in an emulsified state.

The dispersant and surfactant may be the {Dispersant} of the present disclosure. The emulsification of the silicone compound (B) may be performed by a known method. When the silicone compound (B) is emulsified, it is more easily dispersed uniformly in the water-repellent composition, making it easier to suitably impart liquid repellency.

The silicone emulsion may be either an oil-in-water (O/W) emulsion or a water-in-oil (W/O) emulsion. The liquid medium used in the silicone emulsion may be the liquid medium described in {Liquid medium} of the present disclosure.

The silicone emulsion contained in the water-repellent composition of the present disclosure may be anionic, cationic, or nonionic, and a nonionic surfactant is preferred.

The water-repellent composition of the present disclosure may further comprise the resin-type silicone and/or non-resin-type silicone exemplified above.

The water-repellent composition of the present disclosure may not include amino-modified silicones.

The water-repellent composition of the present disclosure may be a water dispersion.

The pH of the water-repellent composition of the present disclosure is not limited, but may be 3.0 to 11.0.

{Wax}

The water-repellent composition of the present disclosure may comprise wax, in particular hydrocarbon wax. The wax may be an organic material that is solid at room temperature and liquid when heated. For example, the wax may be a hydrocarbon compound or a compound having a hydrocarbon group having 6 or more and 40 or less carbon atoms (e.g., an alkyl group).

The wax in the present disclosure adheres to a substrate (in particular, a pulp substrate) and imparts liquid repellency such as water resistance, oil resistance, water-repellency, oil-repellency and/or antifouling properties to the substrate.

[Characteristics of wax]

Characteristics of the wax will be described below.

The wax may be in the form of particles (powder). The wax may have an average particle size of 0.01 μm or more, 0.05 μm or more, 0.1 μm or more, 0.2 μm or more, 0.3 μm or more, 0.4 μm or more, 0.5 μm or more, or 0.6 μm or more, and 10 μm or less, 5 μm or less, 3 μm or less, 1 μm or less, 0.9 μm or less, 0.8 μm or less, 0.7 μm or less, 0.6 μm or less, 0.5 μm or less, 0.4 μm or less, 0.3 μm or less, or 0.2 μm or less, preferably 1 μm or less. The above particle size is the primary particle size. The average particle size in the above range provides excellent particle stability and may improve liquid repellency. The average particle size may be measured by a microscope (scanning electron microscope). Specifically, a sample of wax particles is observed under a microscope at any magnification. Next, when particles are spherical, the diameter is considered as the particle size, and when particles are non-spherical, the average of the major axis and the minor axis is regarded as the particle size. By repeating measuring the particle size of all particles present in a field of view and moving to a different field of view and measuring the particle size again, 100 or more particle sizes are measured, and the average of those is defined as the average particle size.

The wax may have a HD (n-hexadecane) contact angle of 10° or more, 20° or more, 25° or more, 30° or more, 35° or more, 40° or more, 45° or more, 50° or more, 55° or more, 60° or more, or 65° or more, preferably 25° or more, further preferably 30° or more, and 100° or less, 90° or less, or 75° or less. A HD contact angle of the wax of the lower limit or more can impart good liquid-repellency (in particular oil-repellency) to a substrate. The HD contact angle is a static contact angle of the wax to a spin-coated film, which is obtained by dropping 2 μL of HD on a spin-coated film and measuring the contact angle one second after the droplet reaches the film.

The wax may have a water contact angle of 35° or more, 40° or more, 45° or more, 50° or more, 55° or more, 65° or more, 75° or more, 85° or more, 90° or more, or 100° or more, and 160° or less, 140° or less, 130° or less, 120° or less, 110° or less, 100° or less, or 90° or less. A water contact angle of the wax of the lower limit or more can impart good liquid-repellency (in particular water-repellency) to a substrate. The water contact angle is a static contact angle of the wax to a spin-coated film, which is obtained by dropping 2 μL of water on a spin-coated film and measuring the contact angle one second after the droplet reaches the film.

The wax may be of low molecular weight (with a molecular weight of, for example, 1,000 or less, or 500 or less) or of high molecular weight. When the wax is a high molecular weight compound, the wax may have a weight average molecular weight of 1,000 or more, 3,000 or more, 5,000 or more, 7,500 or more, 10,000 or more, 30,000 or more, 100,000 or more, 300,000 or more, or 500,000 or more, and 10,000,000 or less, 7,500,000 or less, 5,000,000 or less, 3,000,000 or less, 1,000,000 or less, 750,000 or less, 500,000 or less, 300,000 or less, 100,000 or less, 75,000 or less, 50,000 or less, 30,000 or less, 10,000 or less, 7,500 or less, 5,000 or less, or 3,000 or less.

The wax may have a melting point of 30°C or more, 40°C or more, 50°C or more, 60°C or more, 80°C or more, 100°C or more, or 120°C or more, preferably 40°C or more, particularly preferably 55°C or more, and 250°C or less, 225°C or less, 200°C or less, 150°C or less, 130°C or less, 120°C or less, 110°C or less, 100°C or less, 80°C or less, or 50°C or less, preferably 120°C or less. The melting point of wax may be measured according to JIS K 2235-1991. Usually, the peak top temperature of the endothermic peak at the maximum temperature before melting observed in DSC (differential scanning calorimetry) corresponds to the melting point.

[Type of wax]

Examples of wax include mineral wax (petroleum wax) such as paraffin wax, microcrystalline wax, montan wax, ozokerite wax, ceresin wax and petrolatum wax; and synthetic wax such as Fischer-Tropsch wax, polyethylene wax and polypropylene wax. Paraffin wax and microcrystalline wax are preferred. The wax in the present disclosure may be hydrocarbon wax, and is preferably chain aliphatic hydrocarbon and, for example, linear or branched hydrocarbon, and in particular linear hydrocarbon.

[Amount of Wax]

The amount of wax may be 0.1 parts by weight or more, 1 part by weight or more, 3 parts by weight or more, 5 parts by weight or more, 10 parts by weight or more, 15 parts by weight or more, or 20 parts by weight or more, relative to 100 parts by weight of the polymer (A), and may be 50 parts by weight or less, 40 parts by weight or less, 30 parts by weight or less, 20 parts by weight or less, 10 parts by weight or less, or 5 parts by weight or less.

{Isocyanate derivative}

The water-repellent composition of the present disclosure may comprise an isocyanate derivative. The isocyanate derivative has a hydrocarbon group having 2 or more and 40 or less carbon atoms, in particular a monovalent hydrocarbon group having 2 or more and 40 or less carbon atoms.

The isocyanate derivative is a compound obtained by the reaction between an active hydrogen compound and a raw material isocyanate, and has a moiety derived from the active hydrogen-containing compound and a moiety derived from the raw material isocyanate. The isocyanate derivative usually has no isocyanate group unlike isocyanate curing agents.

The isocyanate derivative has -NHCO- which is formed by the reaction between an active hydrogen compound and a raw material isocyanate (in this regard, - NHCO- may be a moiety of a urethane group or a urea group). -NHCO- is a group formed by reacting an active hydrogen-containing group (typically a hydroxy group) of the active hydrogen compound and an active hydrogen-reactive group (typically an isocyanate group) of the raw material isocyanate. The isocyanate derivative is typically urethane (in particular, polyurethane).

The hydrocarbon group having 2 or more and 40 or less carbon atoms in the isocyanate derivative is preferably a monovalent hydrocarbon group. The hydrocarbon group having 2 or more and 40 or less carbon atoms is as described in the above (Hydrocarbon group having 2 or more and 40 or less carbon atoms).

The hydrocarbon group may be an aromatic hydrocarbon group or an aliphatic hydrocarbon group, and is

preferably an aliphatic hydrocarbon group, and in particular a saturated aliphatic hydrocarbon group (an alkyl group). The hydrocarbon group may be branched, cyclic or linear, preferably in the form of chain, and in particular, linear. The hydrocarbon group may have 6 or more, 8 or more, 10 or more, 12 or more, 14 or more, 16 or more, 18 or more, 20 or more, or 22 or more, and preferably 10 or more, 12 or more, or 16 or more carbon atoms, and may have 40 or less, 35 or less, 30 or less, 25 or less, 20 or less, 15 or less, or 10 or less, and preferably 30 or less, 25 or less, or 20 or less carbon atoms.

The isocyanate derivative may have a weight average molecular weight of 3,000 or more, 5,000 or more, 10,000 or more, 30,000 or more, 100,000 or more, 300,000 or more, or 500,000 or more, and 1,000,000 or less, 750,000 or less, 500,000 or less, 300,000 or less, 100,000 or less, 75,000 or less, 50,000 or less, 30,000 or less, 10,000 or less, or 5,000 or less.

[Active hydrogen compound]

The active hydrogen compound comprises an active hydrogen group which reacts with an isocyanate group.

Examples of active hydrogen groups include a hydroxy group, an amino group and a carboxyl group, and the active hydrogen group is typically a hydroxy group.

($\alpha$1) Hydrocarbon alcohol

The active hydrogen compound may be an active hydrogen compound ($\alpha$1) composed of a hydrocarbon group and hydroxy.

The hydrocarbon group in the active hydrogen compound ($\alpha$1) is the hydrocarbon group having 2 or more and 40 or less carbon atoms described above, and is as described above.

Furthermore, the active hydrogen compound ($\alpha$1) preferably has one hydroxy group per molecule.

Examples of active hydrogen compounds ($\alpha$1) include a linear saturated hydrocarbon group-containing alcohol such as n-tridecanol, n-tetradecanol, n-pentadecanol, n-hexadecanol, n-heptadecanol, n-octadecanol (stearyl alcohol), n-nonadecanol and eicosanol; branched saturated hydrocarbon group-containing alcohol such as isomyristyl alcohol, isocetyl alcohol, isostearyl alcohol and isoicosyl alcohol; a linear unsaturated hydrocarbon group-containing alcohol such as tetradecenyl alcohol, hexadecenyl alcohol, oleyl alcohol, icosenyl alcohol, docosenyl alcohol, tetracosenyl alcohol, hexacosenyl alcohol and octacosenyl alcohol; and branched unsaturated hydrocarbon group-containing active hydrogen compound such as phytol.

Herein, the linear saturated hydrocarbon group-containing alcohol and the linear unsaturated hydrocarbon group-containing alcohol may be used together. When the linear saturated hydrocarbon group-containing alcohol and the linear unsaturated hydrocarbon group-containing alcohol are used together, the mixing ratio of the linear saturated hydrocarbon group-containing alcohol is for example, 40 parts by mass or more, preferably 55 parts by mass or more, more preferably 70 parts by mass or more, and for example 90 parts by mass or less, and preferably 80 parts by mass or less based on 100 parts by mass of the total amount of the linear saturated hydrocarbon group-containing alcohol and the linear unsaturated hydrocarbon group-containing alcohol. Furthermore, the mixing ratio of the linear unsaturated hydrocarbon group-containing alcohol is, for example, 10 parts by mass or more, and preferably 20 parts by mass or more, and for example 60 parts by mass or less, preferably 45 parts by mass or less, and more preferably 30 parts by mass or less based on 100 parts by mass of the total amount of the linear saturated hydrocarbon group-containing alcohol and the linear unsaturated hydrocarbon group-containing alcohol. When the mixing ratio of the linear saturated hydrocarbon group-containing alcohol is the lower limit or more, the crystallinity of hydrocarbon groups is improved, and as a result the liquid-repellency of the object to be treated with the water-repellent composition may be improved.

($\alpha$2) Modified body of sugar alcohol/ hydroxy acid

The active hydrogen compound may be a modified body of sugar alcohol/ hydroxy acid ($\alpha$2), which is sugar alcohol/ hydroxy acid (sugar alcohol and/or hydroxy acid) modified with a hydrocarbon group having 2 or more and 40 or less carbon atoms. The type of sugar alcohol/ hydroxy acid is not limited, and may be cyclic or acyclic. Examples of sugar alcohols include monosaccharide, reducing sugar, amino sugar, aldonic acid and aldonolactone. Examples of hydroxy acids include hydroxy polyvalent carboxylic acid. Sugar alcohol/ hydroxy acid may be a substance existing in a living body. Examples of sugar alcohols/ hydroxy acids include, but are not limited to, a compound derived from aldose and ketose, such as tetrose, pentose, hexose and heptose. Specific examples thereof include glucose, glyceraldehyde, erythrose, arabinose, ribose, arabinose, allose, altrose, mannose, xylose, lyxose, gulose, galactose, talose, fructose, ribulose, mannoheptulose, sedoheptulose, threose, erythritol, threitol, glucopyranose, mannopyranose, talopyranose, allopyranose, altropyranose, idopyranose, gulopyranose, glucitol, mannitol, erythritol, sorbitol, arabitol, xylitol, ribitol, galactitol, fucitol, iditol, inositol, pentaerythritol, dipentaerythritol, volemitol, gluconic acid, glyceric acid, xylonic acid, galactaric acid, ascorbic acid, citric acid, gluconolactone, glyceric acid lactone, xylonic acid lactone, glucosamine, galactosamine and a

mixture thereof. Sugar alcohol/ hydroxy acid may have 2 or more, 4 or more, or 6 or more, and 30 or less, 20 or less, or 10 or less carbon atoms. The compound ($\alpha$2) has an average OH value of more than 0 to about 230, preferably about 10 to about 175, and most preferably about 25 to about 140.

The modified body of sugar alcohol/ hydroxy acid ($\alpha$2) may have 1 or more, 2 or more, 3 or more, 4 or more, or 5 or more, and 12 or less, 9 or less, 6 or less, or 3 or less hydrocarbon groups having 2 or more and 40 or less carbon atoms.

In the modified body of sugar alcohol/ hydroxy acid ($\alpha$2), at least one active hydrogen (for example, hydrogen in the OH group and the carboxyl group) of the sugar alcohol and/or hydroxy acid may be replaced with an active hydrogen-substituting group selected from $-R^{\alpha2}$, $-C(O)R^{\alpha2}$, $-(CH_2CH_2O)_n(CH(CH_3)CH_2O)_mR^{\alpha2}$, $-(CH_2CH_2O)_n(CH(CH_3)CH_2O)_m-C(O)R^{\alpha2}$ and a mixture thereof. Here $R^{\alpha2}$ is a hydrogen atom or a hydrocarbon group having 2 or more and 40 or less carbon atoms, n is each independently 0 to 20, m is each independently 0 to 20, and m + n may be more than 0. The compound ($\alpha$2) has at least one active hydrogen. In the modified body of sugar alcohol/ hydroxy acid, at least one (one or more) active hydrogens in sugar alcohol/ hydroxy acid may be unmodified. These active hydrogens (for example, an -OH group) may be allowed to react with the active hydrogen reactive group (in particular, an isocyanate group) in the compound (b) to form -NHCO-.

($\alpha$21) Modified body of sorbitan

The modified body of sugar alcohol/ hydroxy acid may be a modified body of sorbitan ($\alpha$21), which is sorbitan modified with a hydrocarbon group having 2 or more and 40 or less carbon atoms, and may be in particular alkyl sorbitan. The modified body of sorbitan may be a sorbitan substituted with $-R^{\alpha2}$, $-C(O)R^{\alpha2}$, $-(CH_2CH_2O)_n(CH(CH_3)CH_2O)_mR^{\alpha2}$, $-(CH_2CH_2O)_n(CH(CH_3)CH_2O)_nC(O)R^{\alpha2}$ or a mixture thereof (wherein $R^{\alpha2}$ is a hydrocarbon group having 6 or more and 40 carbon atoms). The modified body of sorbitan may be, for example, sorbitan monosubstituted, disubstituted, or trisubstituted with $-C(O)R^{\alpha2}$. In this regard, sorbitan may include sorbitol, isosorbide, or other intermediate products or by-products thereof. A commercially available sorbitan such as SPAN may be used as the above alkyl sorbitan.

In an embodiment, at least one active hydrogen-substituting group may be $-C(O)R^{\alpha2}$, and $R^{\alpha2}$ may be a linear · branched alkyl group having 6 to 40, more preferably 7 to 21, and most preferably 11 to 21 carbon atoms. Preferred compounds include a monosubstituted, disubstituted, or trisubstituted sorbitan derived from caprylic acid, capric acid, lauric acid, myristic acid, palmitic acid, stearic acid, arachidic acid, behenic acid, lignoceric acid and a mixture thereof. More preferred compounds include monosubstituted, disubstituted or trisubstituted sorbitan stearate and sorbitan behenin.

In an embodiment, $R^{\alpha2}$ may have at least one unsaturated bond. Examples of such compounds (in which at least one active hydrogen-substituting group is selected from $-C(O)R^{\alpha2}$ and $R^{\alpha2}$ has at least one unsaturated bond) include, but are not limited to, sorbitan trioleate (in which $R^{\alpha2}$ is $-C_7H_{14}CH=CHC_8H_{17}$). Other examples include, but are not limited to, a monosubstituted, disubstituted or trisubstituted sorbitan derived from palmitoleic acid, linoleic acid, arachidonic acid and erucic acid.

In an embodiment, the modified body of sorbitan ($\alpha$21) has at least one active hydrogen-substituting group. The active hydrogen-substituting group may be independently $-(CH_2CH_2O)_n(CH(CH_3)CH_2O)_mR^{\alpha2}$ or $-(CH_2CH_2O)_n(CH(CH_3)CH_2O)_mC(O)R^{\alpha2}$, and m is each independently 0 to 20, n is each independently 0 to 20, and m+n is more than 0). This compound is known as polysorbate and sold under the tradename TWEEN. Those sorbitans may be monosubstituted, disubstituted or trisubstituted by $R^{\alpha2}$. Commercially available polysorbates are known to include a wide variety of compounds such as polysorbate in which each $R^2$ is H (non-substituted) and polysorbate in which each $R^{\alpha2}$ is a linear or branched alkyl group having 6 to 40 carbon atoms (fully substituted), and a mixture of those substituted compounds. Examples of such modified bodies of sorbitan ($\alpha$21) include polysorbate such as polysorbate tristearate and polysorbate monostearate. Examples of modified bodies of sorbitan ($\alpha$21) in which m+n is more than 0 and $R^{\alpha2}$ has at least one unsaturated bond include, but are not limited to, polysorbate trioleate (in which $R^{\alpha2}$ is $C_7H_{14}CH=CHC_8H_{17}$) which is sold under the name polysorbate 80. The modified body of sorbitan ($\alpha$21) may include a mixture of compounds having various active hydrogen-substituting groups, and may also include a mixture of a compound in which $R^{\alpha2}$ has at least one unsaturated bond and a compound in which $R^{\alpha2}$ is fully saturated.

($\alpha$22) Modified body of citric acid

The modified body of sugar alcohol/ hydroxy acid ($\alpha$2) may be a modified body of citric acid ($\alpha$22), which is citric acid modified with a hydrocarbon group having 6 or more and 40 or less carbon atoms, and in particular, may be alkyl citrate. For example, the modified body of citric acid ($\alpha$22) may exist in the form of a monosubstituted, disubstituted or trisubstituted body having an alkyl group. A mixture of citrates which have a different number of active hydrogen-substituting groups may be used, and a mixture of a compound comprising a hydrocarbon group in which $R^{\alpha2}$ has at least one unsaturated bond and a compound in which $R^{\alpha2}$ is a fully saturated hydrocarbon may also be included. The modified body of citric acid ($\alpha$22) may have an active hydrogen-substituting group selected from $-(CH_2CH_2O)_n(CH(CH_3)$

$CH_2O)_nR^{\alpha 2}$ and $-(CH_2CH_2O)_n(CH(CH_3)CH_2O)_nC(O)R^{\alpha 2}$ (in which $R^{\alpha 2}$ is a hydrocarbon group having 6 or more and 40 or less carbon atoms). Examples of modified bodies of citric acid (α22) include, but are not limited to, trialkyl citrate.

(α23) Modified body of pentaerythritol

The modified product of sugar alcohol/ hydroxy acid (α21) may be a modified body of pentaerythritol (α23), which is pentaerythritol modified with a hydrocarbon group having 6 or more and 40 or less carbon atoms, and may be a monosubstituted, disubstituted or trisubstituted pentaerythritol comprising a hydrocarbon group having 6 or more and 40 or less carbon atoms (in particular, an alkyl group), and is, for example, dipentaerythritol ester. The active hydrogen-substituting group may include $-CH_2C[CH_2OR^{\alpha 2}]_3$ (wherein $R^{\alpha 2}$ is a hydrocarbon group having 6 or more and 40 or less carbon atoms). Furthermore, the modified body of pentaerythritol (α23) may include a mixture of compounds having hydrocarbon groups with a different chain length, or a mixture of a compound in which $R^{\alpha 2}$ has at least one unsaturated bond and a compound in which $R^{\alpha 2}$ is fully saturated.

(α3) Cationic active hydrogen compound

The active hydrogen compound may be a cationic active hydrogen compound (α3) having an active hydrogen group and a cationic group.

Furthermore, the cationic active hydrogen compound (α3) preferably has two or more hydroxy groups per molecule.

Examples of cationic groups include a tertiary amino group.

In other words, the cationic active hydrogen compound (α3) preferably has two or more hydroxy groups per molecule as an active hydrogen group and a tertiary amino group as a cationic group in combination.

This cationic active hydrogen compound can impart good dispersibility in liquid medium (for example, water) and can introduce a cationic group compatible to textile products (described later) into resin and thus can improve wash durability.

More preferably, the cationic active hydrogen compound has two hydroxy groups per molecule as an active hydrogen group and a tertiary amino group as a cationic group in combination.

Examples of cationic active hydrogen compounds include alkyl dialkanolamine such as N-methyl diethanolamine, N-ethyl diethanolamine, N-propyl diethanolamine, N-butyl diethanolamine, N-methyl dipropanolamine and propanolamine and trialkanolamine such as N-triethanolamine and N-triisopropanolamine, and preferably N-methyl diethanolamine.

The cationic active hydrogen compound (or a portion of the water-repellent compound which is derived from a cationic active hydrogen compound) may form a salt with an acid compound.

Examples of acid compounds include organic acid and inorganic acid. Examples of organic acids include acetic acid, lactic acid, tartaric acid and malic acid, and acetic acid and lactic acid are preferred, and acetic acid is more preferred. Examples of inorganic acids include hydrochloric acid, sulfuric acid and phosphoric acid, and hydrochloric acid is preferred. The acid compound is preferably an organic acid. When the acid compound includes an organic acid, acid is evaporated by heat treatment, and liquid-repellency of the object to be treated with the water-repellent composition can be improved. Furthermore, evaporation of acid by heat treatment facilitates adsorption of cationic groups to textile products, and thus wash durability of the textile product may be improved.

(α4) Other active hydrogen-containing compounds

The active hydrogen compound (α) may include other active hydrogen-containing compounds (α4).

(α41) Compound

The active hydrogen compound (α4) may be a compound (α41) represented by the formula:

$$R^{\alpha 41}-X^{\alpha 41}$$

wherein

$R^{\alpha 41}$ is
a $C_1$ to $C_{30}$ linear or branched alkyl optionally having at least one unsaturated group, a hydroxy functional $C_1$ to $C_{30}$ linear or branched alkyl, hydroxy functional linear or branched $C_1$ to $C_{30}$ polyether, hydroxy functional linear or branched polyester, hydroxy functional linear or branched organosiloxane, thiol functional $C_1$ to $C_{30}$ linear or

branched alkyl, amine functional $C_1$ to $C_{30}$ linear or branched alkyl, Y-$R^{\alpha 41}1R^{\alpha 412}R^{\alpha 413}N^+$-$R^{\alpha 414}$- wherein Y is a halide ion such as $Cl^-$, HOS(=O)$_2$-$R^{\alpha 414}$-, or $R^{\alpha 411}R^{\alpha 412}$C=N-wherein $R^{\alpha 411}$, $R^{\alpha 412}$, $R^{\alpha 413}$ are each independently -H or $C_1$ to $C_6$ alkyl and $R^{\alpha 414}$ is a divalent alkyl group having 1 to 20 carbon atoms, and

$X^{\alpha 41}$ is an isocyanate reactive functional group such as -OH, -C(O)OH, -SH, -NH(R'), -O-$(CH_2CH_2O)_s(CH(CH_3)CH_2O)_t$-H or -C(O)-O-$(CH_2CH_2O)_s(CH(CH_3)CH_2O)_t$-H wherein R' is -H or a monovalent organic group, s is an integer of 0 to 50, t is an integer of 0 to 50 and s+t is more than 0.

The compound ($\alpha$41) may be a hydrophilic water-soluble material having at least one hydroxy terminated polyether. In the formula, $X^{\alpha 41}$ is -O-$(CH_2CH_2O)_s(CH(CH_3)CH_2O)_t$-H or -C(O)-O-$(CH_2CH_2O)_s(CH(CH_3)CH_2O)_t$-H. -($CH_2CH_2O$)- represents an oxyethylene group (EO) and -($CH(CH_3)CH_2O$)- represents an oxypropylene group (PO). These polyethers may include only the EO group, only the PO group or a mixture thereof. Furthermore, these polyethers may be in the form of a specified PEG-PPG-PEG (polyethylene glycol-polypropylene glycol-polyethylene glycol) triblock copolymer.

In an embodiment, $X^{\alpha 41}$ is -OH, -C(O)OH, -SH or - NH(R'), and $R^{\alpha 41}$ is selected from a $C_1$ to $C_{30}$ linear or branched alkyl optionally having at least one unsaturated group, a hydroxy functional $C_1$ to $C_{30}$ linear or branched alkyl, a hydroxy functional linear or branched $C_1$ to $C_{30}$ polyether, a hydroxy functional linear or branched polyester, hydroxy or amine functional linear or branched organosiloxane, thiol functional $C_1$ to $C_{30}$ linear or branched alkyl, and an amine functional $C_1$ to $C_{30}$ linear or branched alkyl.

$X^{\alpha 41}$ may be -OH, and examples of such compounds ($\alpha$41) include, but are not limited to, an alkyl alcohol such as propanol and butanol, an aliphatic alcohol including stearyl alcohol (in which $R^{\alpha 41}$ is a $C_1$ to $C_{30}$ linear or branched alkyl optionally having at least one unsaturated group), alkyldiol or polyol such as ethanediol, propanediol, butanediol and hexanediol (in which $R^{\alpha 41}$ is a hydroxy functional $C_1$ to $C_{30}$ linear or branched alkyl), alkylene glycol ether such as triethylene glycol, tetraethylene glycol, poly(ethylene glycol) (PEG), poly(propylene glycol) (PPG) and poly(tetrahydrofuran), glycol ether containing a mixture of PEG, PPG or THF units (in which $R^{\alpha 41}$ is hydroxy functional linear or branched $C_1$ to $C_{30}$ polyether), polyester polyol (in which $R^{\alpha 41}$ is hydroxy functional linear or branched polyester), silicone prepolymer polyol (in which $R^{\alpha 41}$ is hydroxy functional linear or branched organosiloxane), N,N-dimethylaminoethanol (in which $R^{\alpha 41}$ is amine functional $C_1$ to $C_{30}$ linear or branched alkyl), choline chloride or betaine HCl (in which $R^{\alpha 41}$ is Y-$R^{\alpha 411}R^{\alpha 412}R^{\alpha 413}N^+$-$R^{\alpha 414}$-) and butanone oxime (in which $R^{\alpha 41}$ is $R^{\alpha 411}R^{\alpha 412}$C=N-). Polyether polyol may include only the EO group, only the PO group, only the THF group, or a mixture thereof. These polyethers may be in the form of a block copolymer which is specified with PEG-PPG-PEG (polyethylene glycol-polypropylene glycol-polyethylene glycol). Polyether glycol has an average molecular weight of preferably about 200 or more, and most preferably 350 to 2,000.

$X^{\alpha 41}$ may be -C(O)OH, and examples of such compounds ($\alpha$41) include, but are not limited to, fatty acid such as caprylic acid, capric acid, lauric acid, myristic acid, palmitic acid, stearic acid, arachidic acid, behenic acid, lignoceric acid, palmitoleic acid, linoleic acid, arachidonic acid, oleic acid and erucic aid (in which $R^{\alpha 41}$ is a $C_1$ to $C_{30}$ linear or branched alkyl optionally having at least one unsaturated group), hydroxy-containing acid such as hydroxycaprylic acid, hydroxycapric acid, hydroxylauric acid, hydroxymyristic acid, hydroxypalmitic acid, hydroxystearic acid, hydroxyarachidic acid, hydroxybehenic acid, hydroxylignoceric acid, hydroxypalmitoleic acid, hydroxylinoleic acid, hydroxyarachidonic acid, hydroxyoleic acid and hydroxyerucic acid (in which $R^{\alpha 41}$ is hydroxy functional $C_1$ to $C_{30}$ linear or branched alkyl), and mercaptoalkanoic acid such as mercaptopropionic acid (in which $R^{\alpha 41}$ is thiol functional $C_1$ to $C_{30}$ linear or branched alkyl).

$X^{\alpha 41}$ may be -SH, and examples of such compounds ($\alpha$41) include, but are not limited to, alkylthiol such as lauryl mercaptan and dodecyl mercaptan (in which $R^{\alpha 41}$ is a $C_1$ to $C_{30}$ linear or branched alkyl optionally having at least one unsaturated group).

$X^{\alpha 41}$ may be -NH(R'), and examples of such compounds ($\alpha$41) include, but are not limited to, alkylamine such as diisopropylamine, propylamine, hexylamine and laurylamine (in which $R^{\alpha 41}$ is a $C_1$ to $C_{30}$ linear or branched alkyl optionally having at least one unsaturated group), alkanolamine such as ethanolamine and propanolamine (in which $R^{\alpha 41}$ is a hydroxy functional $C_1$ to $C_{30}$ linear or branched alkyl), silicone prepolymer polyamine (in which $R^{\alpha 41}$ is amine functional linear or branched organosiloxane), alkyldiamine (in which $R^{\alpha 41}$ is an amine functional $C^1$ to $C^{30}$ linear or branched alkyl), and aminoalkanesulfonic acid such as 2-aminoethanesulfonic acid (in which $R^{\alpha 41}$ is HO-S(O)$_2R^{\alpha 414-}$)

($\alpha$42) Compound

The compound ($\alpha$42) may be a compound represented by the formula:

$$R^{\alpha 421}\text{-}(OCH_2CH(OR^{\alpha 422})CH_2)_z\text{-}OR^{\alpha 423}$$

wherein

at least one of $R^{\alpha 421}$, $R^{a422}$ and $R^{\alpha 423}$ is -H, and $R^{\alpha 421}$, $R^{\alpha 422}$ and $R^{\alpha 423}$ are each independently -H, -$R^{\alpha 424}$ or -C(O)$R^{\alpha 424}$, $R^{\alpha 424}$ is independently a linear or branched alkyl group having 5 to 29 carbon atoms and optionally having at least one

unsaturated bond, and z is 1 to 15.

The compound (α42) may be a compound commonly referred to as polyglycerol. Other specific examples include, but are not limited to, triglycerol monostearate, triglycerol distearate, hexaglycerol monostearate, hexaglycerol distearate, decaglyceryl mono(caprylate/caprate), decaglyceryl di(caprylate/caprate), decaglycerol, polyglycerol-3 and C18 diglyceride.

(α43) Chain extender

The compound (α4) may be a chain extender (α43). The chain extender (α43) has two or more (for example, two) functional groups having active hydrogen in the molecule. The chain extender may be a known chain extender, and examples thereof include an aliphatic or aromatic diol or polyol such as ethylene glycol, diethylene glycol, triethylene glycol, propylene glycol, dipropylene glycol, tripropylene glycol, 1,4-butanediol, 1,6-hexanediol and cyclohexanedimethanol; an aliphatic or aromatic diamine or polyamine such as ethylenediamine, piperazine, aminoethylpiperazine, phenylenediamine and diethyltoluenediamine; a phenol hydroxyl group-containing compound such as resorcinol, catechol, hydroquinone, bisphenol, bisphenol A, bisphenol AP (1,1-bis(4-hydroxylphenyl)-1-phenylethane), bisphenol F, bisphenol K, bisphenol M, tetramethylbiphenol and o,o'-diallylbisphenol A; and alcohol amine such as aminoethylethanolamine, aminopropylethanolamine, aminohexylethanolamine, aminoethylpropanolamine, aminopropylpropanolamine and aminohexylpropanolamine.

[Raw material isocyanate]

The fluorine-containing compound comprises a moiety derived from a raw material isocyanate.

The raw material isocyanate may be an aromatic polyisocyanate, an acyclic aliphatic polyisocyanate, an alicyclic polyisocyanate, or a bridged alicyclic polyisocyanate.

The aromatic polyisocyanate is a compound having an aromatic ring and an isocyanate group. The aromatic polyisocyanate may have 1 or more, 2 or more, or 3 or more aromatic rings, and 5 or less, 4 or less, or 3 or less aromatic rings.

The acyclic aliphatic polyisocyanate is an aliphatic polyisocyanate that does not have a ring structure. The acyclic aliphatic polyisocyanate may have an aliphatic hydrocarbon group having 2 or more and 20 or less carbon atoms. The aliphatic hydrocarbon group having 2 or more and 20 or less carbon atoms may be a divalent aliphatic hydrocarbon group. The aliphatic hydrocarbon group may have 2 or more, 4 or more, 6 or more, 8 or more, 10 or more, 12 or more, or 14 or more, preferably 4 or more, 6 or more, or 8 or more carbon atoms. The aliphatic hydrocarbon group may have 20 or less, 18 or less, 16 or less, 14 or less, 12 or less, or 10 or less, preferably 14 or less, 12 or less, or 10 or less carbon atoms. In one embodiment, the acyclic aliphatic polyisocyanate may be a polyisocyanate compound having an isocyanate group at an end of an alkylene group.

The alicyclic polyisocyanate is an aliphatic polyisocyanate having a ring structure. The alicyclic polyisocyanate has a carbocycle that is not an aromatic ring. The alicyclic polyisocyanate may have an aliphatic hydrocarbon group having 2 or more and 20 or less carbon atoms. The aliphatic hydrocarbon group having 2 or more and 20 or less carbon atoms is as described for the above acyclic aliphatic polyisocyanate.

The bridged alicyclic polyisocyanate is a polycyclic compound having a crosslinked structure via a methylene group or the like in the ring structure. The bridged alicyclic polyisocyanate may have an aliphatic hydrocarbon group having 2 or more and 20 or less carbon atoms. The aliphatic hydrocarbon group having 2 or more and 20 or less carbon atoms is as described for the above acyclic aliphatic polyisocyanate.

The raw material isocyanate may be a derivative of a raw material isocyanate. Here, examples of the derivative include an isocyanurate derivative, an allophanate derivative, a polyol derivative, a biuret derivative, a urea derivative, an oxadiazinetrione derivative, a carbodiimide derivative, a uretdione derivative, and a uretonimine derivative.

The raw material isocyanate may be a derivative of a polyisocyanate selected from the group consisting of an aromatic polyisocyanate, an acyclic aliphatic polyisocyanate, an alicyclic polyisocyanate, and a bridged alicyclic polyisocyanate.

In one embodiment, the raw material isocyanate may be an isocyanurate derivative or a biuret derivative.

In one embodiment, the raw material isocyanate may be an acyclic aliphatic polyisocyanate.

Examples of raw material isocyanates include a compound selected from: an aromatic polyisocyanate selected from tolylene diisocyanate (2,4- or 2,6-tolylene diisocyanate or a mixture thereof) (TDI), phenylene diisocyanate (m-, p-phenylene diisocyanate or a mixture thereof, 4,4'-diphenyl diisocyanate, diphenylmethane diisocyanate (4,4'-, 2,4 or 2,2'-diphenylmethane diisocyanate or a mixture thereof) (MDI), 4,4'-toluidine isocyanate (TODI), 4,4'-diphenyl ether diisocyanate, xylylene diisocyanate (1,3- or 1,4-xylylene diisocyanate or a mixture thereof) (XDI), tetramethyl xylylene diisocyanate (1,3- or 1,4-tetramethylxylylene diisocyanate or a mixture thereof) (TMXDI), ω,ω'-diisocyanate-1,4-diethylbenzene, naphthalene diisocyanate (1,5-, 1,4- or 1,8-naphthalene diisocyanate or a mixture thereof) (NDI), triphenylmethane triisocyanate, tris(isocyanate phenyl)thiophosphate, polymethylene polyphenylene polyisocyanate, nitrodiphenyl-4,4'-diisocyanate, 3,3'-dimethyldiphenylmethane-4,4'-diisocyanate, 4,4'-diphenylpropane diisocyanate and 3,3'-dimethoxydiphenyl-4,4'-diisocyanate;

an acyclic aliphatic polyisocyanate selected from trimethylene diisocyanate, 1,2-propylene diisocyanate, butylene diisocyanate (tetramethylene diisocyanate, 1,2-butylene diisocyanate, 2,3-butylene diisocyanate, 1,3-butylene diisocyanate), hexamethylene diisocyanate, pentamethylene diisocyanate, 2,2,4-trimethylhexamethylene diisocyanate, 2,4,4-trimethylhexamethylene diisocyanate, 2,6-diisocyanatomethylcaproate, lysine diisocyanate, lysine ester triisocyanate, 1,6,11-undecane triisocyanate, 1,3,6-hexamethylene triisocyanate, trimethyl hexamethylene diisocyanate and decamethylene diisocyanate;
an alicyclic polyisocyanate selected from 1,3-cyclopentane diisocyanate, 1,3-cyclopentene diisocyanate, cyclohexane diisocyanate (1,4-cyclohexane diisocyanate, 1,3-cyclohexane diisocyanate), 3-isocyanatomethyl-3,5,5-trimethylcyclohexyl isocyanate (isophorone diisocyanate, IPDI), methylene bis(cyclohexyl isocyanate (4,4'-, 2,4'-or 2,2'-methylene bis(cyclohexyl isocyanate or a mixture thereof) (hydrogenated MDI), methyl cyclohexane diisocyanate (methyl-2,4-cyclohexane diisocyanate, methyl-2,6-cyclohexane diisocyanate, bis(isocyanatomethyl)cyclohexane (1,3- or 1,4-bis(isocyanatomethyl)cyclohexane or a mixture thereof) (hydrogenated XDI), dimer acid diisocyanate, transcyclohexane 1,4-diisocyanate, hydrogenated tolylene diisocyanate (hydrogenated TDI) and hydrogenated tetramethylxylylene diisocyanate (hydrogenated TMXDI);
a bridged alicyclic isocyanate selected from norbornene diisocyanate, norbornane diisocyanatomethyl, bicycloheptane triisocyanate, diisocyanatomethyl bicycloheptane and di(diisocyanatomethyl)tricyclodecane;

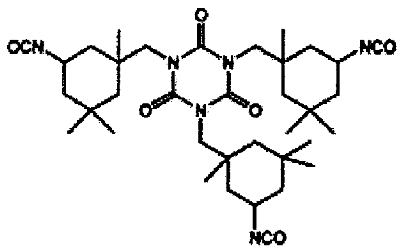

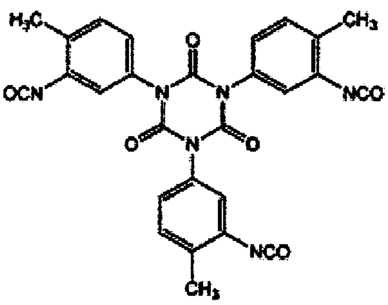

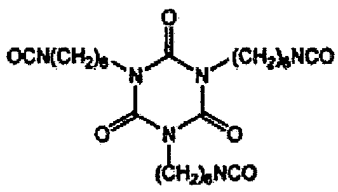

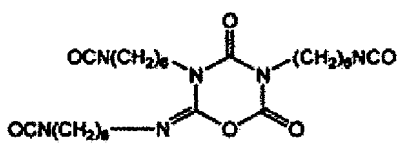

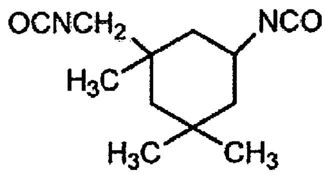

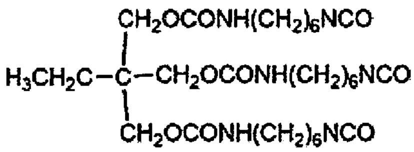

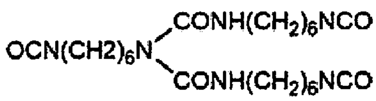

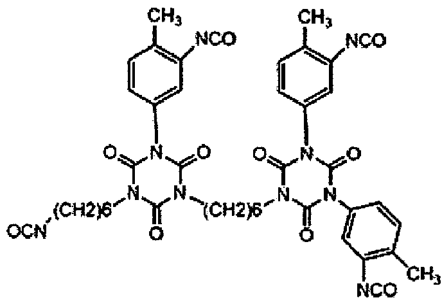

a biuret modified product of the above isocyanate, a multimer (such as dimer, trimer (e.g., an isocyanurate derivative, an iminooxadiazindion derivative), pentamer, heptamer) of polyisocyanate, an allophanate derivative (e.g., an allophanate derivative formed by the reaction between the above polyisocyanate and a monohydric alcohol or dihydric alcohol), a polyol derivative (e.g., a polyol derivative formed by the reaction between the above polyisocyanate and trihydric alcohol (e.g., trimethylolpropane) (alcohol adduct, preferably trimethylolpropane adduct and the like)), a biuret derivative (e.g., a biuret derivative formed by the reaction between the above polyisocyanate and water or amine), a urea derivative (e.g., a urea derivative formed by the reaction between the above polyisocyanate and diamine), an oxadiazinetrione derivative (e.g., oxadiazinetrione formed by the reaction between the above polyisocyanate and carbon dioxide gas), a carbodiimide derivative (e.g., a carbodiimide derivative formed by decarboxylation condensation reaction of the above polyisocyanate), a uretdione derivative and a uretonimine derivative.

The raw material isocyanate has an average number of isocyanate groups of 2 or more, preferably 2.5, and more preferably 2.9, and for example 3.8 or less. The raw material isocyanate may be polyisocyanate having a plurality of isocyanate groups.

[Method for synthesizing isocyanate derivative]

To obtain the isocyanate derivative, the active hydrogen compound is reacted with the raw material isocyanate. The reaction may be performed in a single step or sequentially in multiple steps. For example, when unreacted active hydrogen groups or active hydrogen reactive groups are present in the product, synthesis may be sequentially performed. Sequential reaction is useful when substituted sugar alcohol having a large number of OH groups is used. The reaction conditions such as the concentration in the reaction and reaction temperature are not limited, and may be determined by those skilled in the art. More specifically, the active hydrogen compound and the raw material isocyanate may be mixed so that the equivalent ratio of the active hydrogen reactive group (an isocyanate group) to the active hydrogen group (active hydrogen reactive group/ active hydrogen group) is for example, 1.2 or more, preferably 1.5 or more, and for example, 2.0 or less.

[Composition of isocyanate derivative]

The amount of the moiety derived from the active hydrogen compound may be 10% by weight or more, 20% by weight or more, 30% by weight or more, 40% by weight or more, 50% by weight or more, 60% by weight or more, or 70% by

weight or more, and 75% by weight or less, 65% by weight or less, 55% by weight or less, 45% by weight or less, 35% by weight or less, 25% by weight or less, or 15% by weight or less based on the isocyanate derivative.

The amount of the moiety derived from the hydrocarbon alcohol ($\alpha$1) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less based on the moiety derived from the active hydrogen compound.

The amount of the moiety derived from the modified body of sugar alcohol/ hydroxy acid ($\alpha$2) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less based on the moiety derived from the active hydrogen compound.

The amount of the moiety derived from the cationic active hydrogen compound ($\alpha$3) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less based on the moiety derived from the active hydrogen compound.

The amount of the moiety derived from another active hydrogen-containing compound ($\alpha$4) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less based on the moiety derived from the active hydrogen compound.

The amount of the moiety derived from the raw material isocyanate may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less based on the isocyanate derivative.

[Amount of isocyanate derivative]

The amount of the isocyanate derivative may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the polymer (A), and may be 50 parts by weight or less, 40 parts by weight or less, 30 parts by weight or less, 20 parts by weight or less, 10 parts by weight or less, or 5 parts by weight or less.

{Dispersant}

The water-repellent composition in the present disclosure may comprise a dispersant. The dispersant may be at least one selected from an organic dispersant and an inorganic dispersant. The dispersant may be at least one selected from an anionic dispersant, a nonionic dispersant, a cationic dispersant, an amphoteric dispersant and an inorganic dispersant. In particular, the water-repellent composition of the present disclosure may comprise a nonionic dispersant, or a combination of a nonionic dispersant and a cationic dispersant. The inclusion of a dispersant allows to achieve good water-repellency, slip resistance, and storage stability.

An organic dispersant and an inorganic dispersant may be used as the dispersant, respectively, or an organic dispersant and an inorganic dispersant may be used in combination.

An organic dispersant may be used as the dispersant. The organic dispersant may be classified into a nonionic dispersant, an anionic dispersant, a cationic dispersant and an amphoteric dispersant. The organic dispersant may mean a surfactant.

The dispersant does not need to have a fluorine atom.

[Nonionic dispersant]

The dispersant may comprise a nonionic dispersant. The nonionic dispersant may be a nonionic surfactant.

The nonionic dispersant may be of low molecular weight (with a molecular weight of, for example, 2,000 or less, in particular, 10,000 or less) or of high molecular weight (with a molecular weight of, for example, 2,000 or more). The nonionic dispersant may have a molecular weight of 100 or more, 500 or more, 1,000 or more, 2,000 or more, 4,000 or more, or 6,000 or more, and 1,000,000 or less, 750,000 or less, 500,000 or less, 250,000 or less, 100,000 or less, 50,000 or less, 10,000 or less, 7,500 or less, 5,000 or less, 2,500 or less, 750 or less, or 250 or less.

Examples of nonionic dispersant include ether, ester, ester ether, alkanolamide, polyol and amine oxide.

The ether is, for example, a compound having an oxyalkylene group (preferably a polyoxyethylene group).

The ester is, for example, an ester of an alcohol and a fatty acid. The alcohol is, for example, an alcohol which is 1 to 30 hydric (particularly dihydric to decahydric) and has 1 to 50 carbon atoms (particularly 10 to 30 carbon atoms) (for example, an aliphatic alcohol). Examples of the fatty acids are saturated or unsaturated fatty acids having 2 to 50 carbon atoms, particularly 5 to 30 carbon atoms.

The ester ether is, for example, a compound in which an alkylene oxide (particularly ethylene oxide) is added to an ester of an alcohol and a fatty acid. The alcohol is, for example, an alcohol which is 1 to 30 hydric (particularly dihydric to decahydric) and has 1 to 50 carbon atoms (particularly 3 to 30 carbon atoms) (for example, an aliphatic alcohol). Examples of the fatty acids are saturated or unsaturated fatty acids having 2 to 50 carbon atoms, particularly 5 to 30 carbon atoms.

The alkanolamide is formed of for example, a fatty acid and an alkanolamine. The alkanolamide may be a monoalkanolamide or a dialkanolamide. Examples of the fatty acids are saturated or unsaturated fatty acids having 2 to 50 carbon atoms, particularly 5 to 30 carbon atoms. The alkanolamine may be an alkanol with 1 to 3 amino groups and 1 to 5 hydroxyl groups, having 2 to 50, particularly 5 to 30 carbon atoms.

The polyol may be, for example, a dihydric to pentahydric alcohol having 10 to 30 carbon atoms.

The amine oxide may be an oxide (for example, having 5 to 50 carbon atoms) of an amine (secondary amine or preferably tertiary amine).

The nonionic dispersant is preferably a nonionic dispersant having an oxyalkylene group (preferably a polyoxyethylene group). The alkylene group in the oxyalkylene group preferably has 2 to 10 carbon atoms. The number of oxyalkylene groups in the molecule of the nonionic dispersant is generally preferably 2 to 100.

The nonionic dispersant is selected from the group consisting of an ether, an ester, an ester ether, an alkanolamide, a polyol and an amine oxide, and is preferably a nonionic dispersant having an oxyalkylene group.

The nonionic dispersant may be, for example, an alkylene oxide adduct of a linear and/or branched aliphatic (saturated and/or unsaturated) group, a polyalkylene glycol ester of a linear and/or branched fatty acid (saturated and/or unsaturated), a sorbitan ester of a linear and/or branched fatty acid (saturated and/or unsaturated), a glycerin ester of a linear and/or branched fatty acid (saturated and/or unsaturated), a polyglycerol ester of a linear and/or branched fatty acid (saturated and/or unsaturated), a sucrose ester of a linear and/or branched fatty acid (saturated and/or unsaturated), a polyoxyethylene (POE)/polyoxypropylene (POP) copolymer (random copolymer or block copolymer), and an alkylene oxide adduct of acetylene glycol. Among them, the nonionic dispersant is preferably a dispersant such that the structures of the alkylene oxide addition moiety and polyalkylene glycol moiety are polyoxyethylene (POE) or polyoxypropylene (POP) or POE/POP copolymer (which may be a random or block copolymer, for example).

Furthermore, the nonionic dispersant may not include an aromatic group.

The nonionic dispersant may be the compound represented by the formula:

$$R^1O-(CH_2CH_2O)_p-(R^2O)_q-R^3$$

wherein $R^1$ is an alkyl group having 1 to 22 carbon atoms, an alkenyl group or an acyl group, having 2 to 22 carbon atoms,

$R^2$ is each independently the same or different and is an alkylene group having 3 or more carbon atoms (for example, 3 to 10),

$R^3$ is a hydrogen atom, an alkyl group having 1 to 22 carbon atoms, or an alkenyl group having 2 to 22 carbon atoms,

p is a number of 2 or more, and

q is 0 or a number of 1 or more.

$R^1$ preferably has 8 to 20 carbon atoms, particularly 10 to 18 carbon atoms. Preferred specific examples of $R^1$ include an octyl group, a nonyl group, a trimethylnonyl group, a lauryl group, a tridecyl group, an oleyl group and a stearyl group.

$R^2$ is, for example, a propylene group and a butylene group.

In the nonionic dispersant, for example, p may be a number of 3 or more (for example, 5 to 200). q may be a number of 2 or more (for example, 5 to 200). Namely, $-(R^2O)_q-$ may form, for example, a polyoxyalkylene chain.

The nonionic dispersant may be, for example, a polyoxyethylene alkylene alkyl ether comprising a hydrophilic polyoxyethylene chain and a hydrophobic oxyalkylene chain (particularly a polyoxyalkylene chain) in the center. The hydrophobic oxyalkylene chain includes, for example, an oxypropylene chain, an oxybutylene chain, and a styrene chain. The oxypropylene chain is preferred among them.

Specific examples of the nonionic dispersants include a condensation product of ethylene oxide with hexylphenol, isooctatylphenol, hexadecanol, oleic acid, an alkane ($C_{12}$-$C_{16}$) thiol, a sorbitan monofatty acid ($C_7$-$C_{19}$), an alkyl($C_{12}$-$C_{18}$)amine, or the like, and a sorbitan fatty acid ester, a glycerin fatty acid ester, a polyglycerin fatty acid ester, a sucrose fatty acid ester, a propylene glycol fatty acid ester, a polyoxyethylene alkyl ether, a polyoxyethylene polyoxypropylene alkyl ether, a polyoxyethylene glycerin fatty acid ester, a polyoxyethylene sorbitan fatty acid ester, and a lecithin

derivative. Examples of nonionic dispersants include polyoxyethylene alkyl ether, polyoxyethylene polyoxypropylene alkyl ether, polyoxyethylene polyoxybutylene alkyl ether, polyoxyethylene polyoxypropylene glycol and polyethyleneimine ethoxylate.

The proportion of the polyoxyethylene block can be 5 to 80% by weight, for example, 30 to 75% by weight, particularly 40 to 70% by weight, based on a molecular weight of the nonionic dispersant (copolymer).

The average molecular weight of the nonionic dispersant is generally 300 to 5,000, for example, 500 to 3,000.

For example, the nonionic dispersant may be used singly or in admixture of two or more. The nonionic dispersant may comprise a compound with an HLB (hydrophilic-hydrophobic balance) of 10 or less, or may be a mixture of a compound with an HLB of less than 15 (particularly 5 or less) and a compound with an HLB of 15 or more. More specifically, it is preferable to select the nonionic dispersant from polyoxyethylene alkyl ether, polyoxyethylene polyoxypropylene alkyl ether, polyoxyethylene and polyoxypropylene having an HLB of 1 to 18, sorbitan fatty acid ester, glycerol fatty acid ester, polyglycerol fatty acid ester, sucrose fatty acid ester, propylene glycol fatty acid ester, polyoxyethylene glycerol fatty acid ester and polyoxyethylene sorbitan fatty acid ester having an HLB of less than 7.

[Cationic dispersant]

The dispersant may comprise a cationic dispersant. The cationic dispersant may be a cationic surfactant. The cationic dispersant may be a compound not having an amide group.

The cationic dispersant may be of low molecular weight (with a molecular weight of 2,000 or less, in particular, 10,000 or less) or of high molecular weight (with a molecular weight of, for example, 2,000 or more). The cationic dispersant may have a molecular weight of 100 or more, 500 or more, 1,000 or more, 2,000 or more, 4,000 or more, or 6,000 or more, and 1,000,000 or less, 750,000 or less, 500,000 or less, 250,000 or less, 100,000 or less, 50,000 or less, 10,000 or less, 7,500 or less, 5,000 or less, 2,500 or less, 750 or less, or 250 or less.

The cationic dispersant may be aliphatic or aromatic, and examples thereof include an ammonium salt (e.g., quaternary ammonium salt). The cationic dispersant may be oxyethylene-added ammonium salt. Specific examples thereof include an amine salt dispersant such as alkylamine salt, an amino alcohol fatty acid derivative, a polyamine fatty acid derivative and imidazoline; a quaternary ammonium salt dispersant such as alkyl trimethyl ammonium salt, dialkyl dimethyl ammonium salt, alkyl dimethyl benzyl ammonium salt, pyridinium salt, alkyl isoquinolinium salt, benzalkonium chloride and benzethonium chloride; and a polymer cationic dispersant such as polyquaternium-1 to 47. Examples of cationic dispersants include alkyl amine salt and quaternary ammonium salt.

The low molecular weight cationic dispersant may be a compound represented by the formula:

$$R^{21}\text{-}N^{+}(\text{-}R^{22})(\text{-}R^{23})(\text{-}R^{24})X^{-}$$

wherein $R^{21}$, $R^{22}$, $R^{23}$ and $R^{24}$ are a hydrogen or a hydrocarbon group having 1 to 40 carbon atoms, and X is an anionic group.

Specific examples of $R^{21}$, $R^{22}$, $R^{23}$ and $-R^{24}$ include an alkyl group (e.g., a methyl group, a butyl group, a stearyl group, a palmityl group) and an aromatic group (e.g., a benzyl group, phenyl group). Specific examples of X include a halogen (e.g., chlorine) and an acid (e.g., hydrochloric acid and acetic acid). The cationic dispersant may be monoalkyltrimethylammonium salt (in which alkyl has 4 to 40 carbon atoms) and benzalkonium chloride.

More specifically, the low molecular weight cationic dispersant may be an ammonium salt represented by the formula:

$$R^1_p\text{-}N^+\text{-}R^2_qX^-$$

wherein $R^1$ is a C12 or higher (e.g., $C_{12}$ to $C_{50}$) linear and/or branched aliphatic (saturated and/or unsaturated) group,
$R^2$ is H or a $C_1$ to 4 alkyl group, a benzyl group, a polyoxyethylene group (in which the number of oxyethylene groups is for example, 1 (in particular 2, and especially 3) to 50) (particularly preferably $CH_3$, $C_2H_5$),
X is a halogen atom (e.g., chlorine) or a $C_1$ to $C_4$ fatty acid salt or a $C_1$ to $C_4$ sulfonate,
p is 1 or 2, q is 2 or 3, and p + q=4.

The number of carbon atoms of $R^1$ may be 12 to 50, for example, 12 to 30.

Examples of the low molecular weight cationic dispersants may include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyl di(hydropolyoxyethylene) ammonium chloride, benzyldodecyl di(hydropolyoxyethylene) ammonium chloride, and N-[2-(diethylamino)ethyl]oleamide hydrochloride.

The high molecular weight cationic dispersant may be a polymer having a cationic group (for example, an ammonium group, a quaternary ammonium group) (for example, polypolyquaternium-1 to 47). Examples of high molecular weight cationic dispersants include a cationic natural product (in particular, cationic sugar) such as cationic starch, cationic cellulose (e.g., O-(2-hydroxy-3-(trimethylammonio)propylhydroxyethyl cellulose chloride), cationic guar gum, cationic xanthan gum and chitosan; a polymer of a cationic group-containing monomer such as aziridine, vinyl imidazole, aminoalkyl methacrylate, N,N,N',N'-tetramethyl-2-butene-1,4-diamine, quaternary dimethyl ammonium ethyl methacrylic acid, diallyldimethylammonium chloride, dimethylaminopropylamine and quaternary vinyl imidazole.

[Anionic dispersant]

The dispersant may comprise an anionic dispersant. The anionic dispersant may be an anionic surfactant. The dispersant may not include an anionic dispersant.

The anionic dispersant may be of low molecular weight (with a molecular weight of, for example, 2,000 or less, in particular, 10,000 or less) or of high molecular weight (with a molecular weight of, for example, 2,000 or more). The anionic dispersant may have a molecular weight of 100 or more, 500 or more, 1,000 or more, 2,000 or more, 4,000 or more, or 6,000 or more, and 1,000,000 or less, 750,000 or less, 500,000 or less, 250,000 or less, 100,000 or less, 50,000 or less, 10,000 or less, 7,500 or less, 5,000 or less, 2,500 or less, 750 or less, or 250 or less.

Examples of the anionic dispersant include an alkyl ether sulfate, an alkyl sulfate, an alkenyl ether sulfate, an alkenyl sulfate, an olefin sulfonate, an alkanesulfonate, a saturated or unsaturated fatty acid salt, an alkyl or alkenyl ether carbonate, an $\alpha$-sulfone fatty acid salt, a N-acylamino acid dispersant, a phosphate mono- or diester dispersant, and a sulfosuccinic acid ester. Examples of anionic dispersants include a carboxylic acid salt (e.g., fatty acid salt).

[Amphoteric dispersant]

The dispersant may comprise an amphoteric dispersant. The amphoteric dispersant may be an amphoteric surfactant.

The amphoteric dispersant may be of low molecular weight (with a molecular weight of, for example, 2,000 or less, in particular, 10,000 or less) or of high molecular weight (with a molecular weight of, for example, 2,000 or more). The amphoteric dispersant may have a molecular weight of 100 or more, 500 or more, 1,000 or more, 2,000 or more, 4,000 or more, or 6,000 or more, and 1,000,000 or less, 750,000 or less, 500,000 or less, 250,000 or less, 100,000 or less, 50,000 or less, 10,000 or less, 7,500 or less, 5,000 or less, 2,500 or less, 750 or less, or 250 or less.

Examples of the amphoteric dispersants include, for example, alanines, imidazolinium betaines, amidobetaines, and acetic acid betaine, and specific examples of the amphoteric dispersants include, for example, lauryl betaine, stearyl betaine, lauryl carboxymethyl hydroxyethyl imidazolinium betaine, lauryl dimethylamino acetic acid betaine, and fatty acid amidopropyldimethylaminoacetic acid betaine.

[Inorganic dispersant]

The dispersant may comprise an inorganic dispersant.

The inorganic dispersant has an average primary particle size of 5 nm or larger, 30 nm or larger, 100 nm or larger, 1 $\mu$m or larger, 10 $\mu$m or larger, or 25 $\mu$m or larger, and 100 $\mu$m or smaller, 50 $\mu$m or smaller, 10 $\mu$m or smaller, 1 $\mu$m or smaller, 500 nm or smaller, or 300 nm or smaller. The average primary particle size may be measured by a microscope, for example, a scanning electron microscope or a transmission electron microscope. The inorganic dispersant may be hydrophilic particles.

Examples of inorganic dispersants include polyvalent metal phosphate such as tricalcium phosphate, magnesium phosphate, aluminum phosphate, zinc phosphate and hydroxyapatite; carbonate such as calcium carbonate and magnesium carbonate; silicate such as calcium metasilicate; sulfate such as calcium sulfate and barium sulfate; and hydroxide such as calcium hydroxide, magnesium hydroxide and aluminum hydroxide.

[Amount of dispersant]

The amount of dispersant may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the polymer (A), and may be 500 parts by weight or less, 300 parts by weight or less, 200 parts by weight or less, 100 parts by weight or less 30 parts by weight or less, 20 parts by weight or less, 10 parts by weight or less, 5 parts by weight or less, 3 parts by weight or less, or 1 part by weight or less.

{Liquid medium}

The water-repellent composition in the present disclosure may comprise a liquid medium. The liquid medium may be water, an organic solvent, or a mixture of water and an organic solvent. The water-repellent composition may be a dispersion or a solution. The water-repellent composition in the present disclosure is preferably a water dispersion body or a water dispersion.

Examples of the organic solvents include esters (for example, esters having 2 to 40 carbon atoms, specifically ethyl acetate and butyl acetate), ketones (for example, ketones having 2 to 40 carbon atoms, specifically methyl ethyl ketone and diisobutyl ketone), alcohols (for example, alcohols having 1 to 40 carbon atoms, specifically isopropyl alcohol), aromatic solvents (for example, toluene and xylene), petroleum-based solvents (for example, alkanes having 5 to 10 carbon atoms, specifically, naphtha and kerosene). The organic solvent is preferably a water-soluble organic solvent. The water-soluble organic solvent may include a compound having at least one hydroxy group (for example, polyol such as alcohol and glycol solvent, and an ether form of polyol (for example, a monoether form)). These may be used singly or in combination of two or more thereof.

[Amount of liquid medium]

The amount of liquid medium may be 1 part by weight or more, 3 parts by weight or more, 5 parts by weight or more, 10 parts by weight or more, 20 parts by weight or more, 30 parts by weight or more, 40 parts by weight or more, or 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the polymer (A).

The amount of water may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less based on 1 part by weight of the polymer (A).

The amount of organic solvent may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the polymer (A).

{Organic Acid}

The water-repellent composition of the present disclosure may comprise an organic acid. As the organic acid, a known organic acid can be used. Examples of the organic acid preferably include, for example, a carboxylic acid, a sulfonic acid, and a sulfinic acid, with the carboxylic acid being particularly preferred. Examples of the carboxylic acid include, for example, formic acid, acetic acid, propionic acid, butyric acid, oxalic acid, succinic acid, glutaric acid, adipic acid, malic acid, and citric acid, with the formic acid or acetic acid being particularly preferred. In the present disclosure, one type of organic acid may be used, or two or more thereof may be combined for use. For example, formic acid and acetic acid may be combined for use.

[Amount of Organic Acid]

The amount of organic acid is 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the polymer (A), and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by

weight or less, or 5 parts by weight or less. The amount of organic acid may be adjusted so that a pH of the water-repellent composition is 3 to 10, for example 5 to 9, particularly 6 to 8. For example, the water-repellent composition may be acidic (pH of 7 or less, for example 6 or less).

{Inorganic acid}

The water-repellent composition of the present disclosure may comprise an inorganic acid. The inorganic acid may be a known inorganic acid. Examples of inorganic acids include hydrogen chloride, hydrogen bromide, hydrogen iodide, nitric acid, boric acid, sulfuric acid and phosphoric acid. In the present disclosure, one inorganic acid may be used, or two or more of them may be used in combination. The addition of inorganic acid can improve the stability of the water dispersion body.

[Amount of inorganic acid]

The amount of inorganic acid is 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the polymer (A), and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less. The amount of inorganic acid may be adjusted so that a pH of the water-repellent composition is 3 to 10, for example 5 to 9, particularly 6 to 8. For example, the water-repellent composition may be acidic (pH of 7 or less, for example 6 or less).

{Curing Agent}

The water-repellent composition of the present disclosure may contain a curing agent (active hydrogen-reactive compound or active hydrogen-containing compound). The water-repellent composition does not need to contain a curing agent when the repellent is for paper (e.g., an oil-resistant agent for paper).

The curing agent (cross-linking agent) in the water-repellent composition can effectively cure the water-repellent composition. The curing agent may be an active hydrogen-reactive compound or an active hydrogen-containing compound, which reacts with an active hydrogen or an active hydrogen-reactive group. Examples of the active hydrogen-reactive compound include an isocyanate compound, epoxy compound, chloromethyl group-containing compound, carboxyl group-containing compound, and hydrazide compound. Examples of the active hydrogen-containing compound include a hydroxyl group-containing compound, an amino group-containing compound and a carboxyl group-containing compound, a ketone group-containing compound, a hydrazide compound, a melamine compound, and a urea-based compound.

The curing agent may contain an isocyanate compound. The isocyanate compound may be a polyisocyanate compound. The polyisocyanate compound is a compound having two or more isocyanate groups in one molecule. The polyisocyanate compound serves as a cross-linking agent. Examples of the polyisocyanate compound include, for example, an aliphatic polyisocyanate, an alicyclic polyisocyanate, an araliphatic polyisocyanate, an aromatic polyisocyanate, and derivatives of these polyisocyanates. The isocyanate compound may be a blocked isocyanate compound (for example, a blocked polyisocyanate compound). The blocked isocyanate compound is a compound in which an isocyanate group of an isocyanate compound is masked with a blocking agent to inhibit reaction.

Examples of the aliphatic polyisocyanates are aliphatic triisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, an aliphatic diisocyanate of 2,6-diisocyanatomethylcaproate, and aliphatic triisocyanates such as lysine ester triisocyanate, 1,4,8-triisocyanateoctane, 1,6,11-triisocyanatoundecane, 1,8-diisocyanato-4-isocyanatomethyloctane, 1,3,6-triisocyanatohexane, 2,5,7-trimethyl-1,8-diisocyanato-5-isocyanatomethyloctane. These may be used singly or in combination of two or more thereof.

Examples of the alicyclic polyisocyanates include, for example, an alicyclic diisocyanate and an alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), 1,3,5-triisocyanatocyclohexane, 4,4'-methylenebis(cyclohexyl isocyanate), and 1,3-bis(isocyanatomethyl)cyclohexane. These may be used singly or in combination of two or more thereof.

Examples of the aromatic-aliphatic polyisocyanate include an aromatic-aliphatic diisocyanate and aromatic-aliphatic triisocyanate. Specific examples of the araliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture

thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of the aromatic polyisocyanate include, for example, m-phenylene diisocyanate, p-phenylene diisocyanate, 4,4'-diphenyl diisocyanate, 1,5-naphthalene diisocyanate, 2,4'- or 4,4'-diphenylmethane diisocyanate, or a mixture thereof, 2,4- or 2,6-tolylene diisocyanate or a mixture thereof, triphenylmethane-4,4',4''-triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds. These may be used singly or in combination of two or more thereof.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in solution and can be used in the same solution as solution of the water-repellent composition.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include, for example, a phenolic compound, lactam-based compound, aliphatic alcohol-based compound, oxime-based compound, and pyrazole-based compound. The polyisocyanate compound may be used singly or in combination of two or more thereof.

The epoxy compound is a compound having an epoxy group. Examples of the epoxy compound include epoxy compounds having a polyoxyalkylene group, such as a polyglycerol polyglycidyl ether and a polypropylene glycol diglycidyl ether; as well as a sorbitol polyglycidyl ether.

The chloromethyl group-containing compound is a compound having a chloromethyl group. Examples of the chloromethyl group-containing compound include, for example, a chloromethyl polystyrene.

The carboxyl group-containing compound is a compound having a carboxyl group. Examples of the carboxyl group-containing compound include, for example, a (poly)acrylic acid, and a (poly)methacrylic acid.

Specific examples of the ketone group-containing compound include, for example, a (poly)diacetone acrylamide, and diacetone alcohol.

Specific examples of the hydrazide compound include, for example, hydrazine, a carbohydrazide, and adipic acid hydrazide.

Specific examples of the melamine compound include, for example, a melamine resin and a methyl etherified melamine resin.

Specific examples of urea-based compounds include dimethylol dihydroxy ethylene urea (DMDHEU) and dimethyl dihydroxy ethylene urea.

[Amount of Curing Agent]

The amount of curing agent is 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the polymer (A), and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

{Other Component}

The water-repellent composition may contain a component other than the aforementioned components. Other components may be added after production of the polymer (A). Examples of other components include water- and/or oil-repellent agents, anti-slip agents, antistatic agents, antiseptic agents, antibacterial agents, deodorants, and penetrating agents. These may be used singly or in combination of two or more thereof. In addition to the above components, examples of other components include texture modifiers, softening agents, antibacterial agents, flame retarders, wrinkle-resistant agents, cross-linking agents, film formation agents, compatibilizers, ultraviolet absorbers, antioxidants, pH adjusters, insect repellents, antifoaming agents, anti-shrinkage agents, laundry wrinkle-resistant agents, shape retention agents, drape retention agents, ironing improving agents, polymer dispersants, scum dispersants, fluorescent brightening agents, dye fixing agents, and foam inhibitors, which may be used singly or in combination of two or more thereof.

(Antistatic agent)

Examples of the antistatic agent include, for example, cationic antistatic agents having cationic functional groups such as a quaternary ammonium salt, a pyridinium salt, and primary, secondary, and tertiary amino groups; anionic antistatic agents having anionic functional groups such as a sulfonate salt and a sulfate ester salt, a phosphonate and a phosphate ester salt; amphoteric antistatic agents such as an alkyl betaine and a derivative thereof, imidazoline and a derivative thereof, and alanine and a derivative thereof; and nonionic antistatic agents such an amino alcohol and a derivative thereof, glycerin and a derivative thereof, and a polyethylene glycol and a derivative thereof. For example, an ion conductive polymer obtained by polymerizing or copolymerizing a monomer having an ion conductive group of the cationic, anionic, or amphoteric antistatic agent, may be used. These may be used singly or in combination of two or more thereof.

(Antiseptic agent)

The antiseptic agent may be used mainly to enhance antisepsis power and bactericidal power to maintain antiseptic during long-term storage. Examples of the antiseptic agent include isothiazolone-based organosulfur compounds, benzisothiazolone-based organosulfur compounds, benzoic acids, and 2-bromo-2-nitro-1,3-propanediol. The content of antiseptic agent is preferably 0.0001 to 1% by weight relative to the total weight of the water-repellent composition. When the content of antiseptic agent is the lower limit value of the aforementioned range or more, a sufficient effect of antiseptic agent added is obtained, and when the content is the upper limit value or less, favorable storage stability of the water-repellent composition is obtained.

(Antibacterial agent)

The antibacterial agent is a component that exhibits the effect of inhibiting bacteria from growing on fibers and further exhibits the effect of inhibiting generation of unpleasant odors derived from decomposition products of microorganisms. Examples of the antibacterial agents include, for example, cationic antibacterial agents such as a quaternary ammonium salt, bis-(2-pyridylthio-1-oxide) zinc, a polyhexamethylene biguanidine hydrochloride salt, 8-oxyquinoline, and a polylysine.

(Deodorant)

Examples of the deodorant include cluster dextrin, methyl-β-cyclodextrin, 2-hydroxypropyl-β-cyclodextrin, monoacetyl-β-cyclodextrin, acylamidopropyl dimethylamine oxide, and an aminocarboxylic acid-based metal complex (the zinc complex of trisodium methylglycine diacetate described in WO2012/090580).

(Anti-slip agent)

An anti-slip agent is a component that exhibits the effect of suppressing fabric yarn slippage and seam misalignment during sewing and wearing. Examples of anti-slip agents include a polysiloxane compound, colloidal silica (or silica particle dispersion), a silicone resin derivative, a colloidal organic silicone system, and an amino-modified silicone.

(Softening agent)

A softening agent is a component that exhibits the effect of providing a soft and smooth texture to a fabric. Examples of softening agent components include cationic surfactants such as quaternary ammonium salt and amine salt; anionic surfactants such as soap, sulfated oils, higher alcohol sulfate ester salt, and sulfonate; nonionic surfactants such as polyhydric alcohol and polyethylene glycol; amphoteric surfactants such as betaine and amino acid; and siloxane-based resins.

[Amount of Other Component]

Each amount or the total amount of other components may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the polymer (A), and may be 500 parts by weight or less, 300 parts by weight or less, 200 parts by weight or less, 100 parts by weight or less, 50 parts by weight or less, 40 parts by weight or less, 30 parts by weight or less, 20 parts

by weight or less, 10 parts by weight or less, or 5 parts by weight or less.

<Applications of Water-Repellent Composition>

Examples of applications of the water-repellent composition in the present disclosure include an external treatment agent (surface-treating agent) or internal treatment agent, repellent (water-repellent agent, oil-repellent agent, water- and oil-repellent agent, etc., particularly water-repellent agent), antifouling agent, soil release agent, release agent, and mold release agent (external mold release agent or internal mold release agent).

<Production method of treated product>

The method for producing a treated product in the present disclosure includes treating a substrate with the water-repellent composition.

[Treated product]

Examples of substrates to be treated with the water-repellent composition according to the present disclosure include a fiber substrate, stone, a filter (e.g., an electrostatic filter), a dust mask, a fuel cell component (e.g., a gas diffusion electrode and a gas diffusion support), glass, paper, wood, leather, fur, asbestos, brick, cement, metal and oxide, a ceramic product, plastics, a painted surface, and plaster. Examples of the fiber substrates include various products. Examples thereof include flora and fauna natural fibers such as cotton, hemp, wool, and silk; synthetic fibers such as a polyamide, polyester, polyvinyl alcohol, polyacrylonitrile, polyvinyl chloride, and polypropylene; semisynthetic fibers such as rayon and acetate; inorganic fibers such as a glass fiber, carbon fiber, and asbestos fiber or a mixture of these fibers. As an example of a substrate to be treated with the water-repellent composition, a woven or knitted fabric will be described in detail.

(Woven or knitted fabric)

• Production method of woven or knitted fabric

A woven or knitted fabric can be obtained by weaving or knitting yarns of long fibers or short fibers composed of the aforementioned fibers to obtain a greige fabric and then subjecting it to post-processing and water-repellent treatment. The weaving or knitting may be carried out by using a known weaving machine or knitting machine, and the preparation process prior to weaving or knitting can also be carried out by using known equipment.

The woven or knitted fabric, which is obtained by weaving or knitting, can be subjected to post-processing using known scouring/dyeing methods and equipment adapted to the fiber material of the woven or knitted fabric.

After the post-processing, the woven or knitted fabric may undergo water-repellent treatment. In the water-repellent treatment, first, an aqueous solution containing a water-repellent agent (the aqueous solution may be the water-repellent composition in the present disclosure) is prepared. Then, by a padding method, spray method, kiss roll coater method, slit coater method, or the like, the aforementioned aqueous solution can be applied to the woven or knitted fabric after the above post-processing, and the resultant may undergo dry heat treatment after drying. The above aqueous solution may contain a cross-linking agent, softener, antistatic agent, and the others, as necessary. After the water-repellent treatment, the woven or knitted fabric may be subjected to calendering processing.

The woven or knitted fabric is suitably used for clothing applications requiring water-repellency, particularly for sportswear applications such as outdoor, ski, snowboard, and golf, as well as for uniform wear applications.

• Stacked fabric

The woven or knitted fabric of the present disclosure may be provided in the form of a stacked fabric having a moisture permeable and waterproof layer on one side of the woven or knitted fabric. The moisture permeable and waterproof layer may be stacked directly on the woven or knitted fabric, or it may be stacked above the woven or knitted fabric via an adhesive layer. When the stacked fabric of the present disclosure is used for apparel applications and the like, the woven or knitted fabric side is arranged on the side that repels rainwater and the like.

• Moisture permeable and waterproof layer

The moisture permeable and waterproof layer is a layer that covers one side of the woven or knitted fabric and is formed by a resin or a structural film having a waterproof property and moisture permeability.

The moisture permeable and waterproof layer may be formed by directly applying a resin (resin for forming the moisture permeable and waterproof layer) to a woven or knitted fabric, or the layer may be stacked above one side of the woven or knitted fabric via the adhesive layer described below.

The resin for forming the moisture permeable and waterproof layer is not limited, but non-porous resins and resins that form pores are used. The non-porous resin may be a polyurethane resin or a polyester elastomer resin having a hydrophilic component to provide moisture permeability. In addition to a polyurethane resin that forms a wet type porous membrane, or a polyurethane resin made porous by electrospinning, the porous resin may also be a porous membrane made of PTFE, or a porous membrane made of PE or PP.

As the polyurethane resin, a conventionally known polyurethane resin obtained by reacting a polyisocyanate component with a polyol component can be employed.

A moisture permeable and waterproof film having a microporous structure can be obtained by wet coagulation of a DMF solution of a polyurethane resin containing inorganic fine powder.

Examples of the inorganic fine powder include fine powder made of, for example, silicon dioxide, aluminum dioxide, or titanium dioxide. The average primary particle size of the inorganic fine powder is preferably about 7 to 40 nm. The content of inorganic fine powder is preferably 3 to 50% by weight relative to the total amount of moisture permeable and waterproof layer, and it is preferably 5 to 50% by weight.

The thickness of the moisture permeable and waterproof layer is preferably 5 $\mu$m or thicker and more preferably 10 to 30 $\mu$m. Within the above range of thickness, a waterproof property and moisture permeability are well-balanced, which is advantageous in terms of texture.

• Adhesive layer

The stacked fabric preferably includes an adhesive layer. In other words, the woven or knitted fabric and the moisture permeable and waterproof layer are preferably stacked via an adhesive layer. The adhesive layer is preferably a discontinuous layer, such as in a dot or lattice pattern, in terms of moisture permeability.

A type of the adhesive for forming the adhesive layer is not limited, but is preferably an adhesive excellent in adhesion to the moisture permeable and waterproof layer. For example, when a resin including a polyurethane resin as the main component is selected as a resin for forming the moisture permeable and waterproof layer, an adhesive layer composed of a polyurethane-based adhesive is preferably employed. The polyurethane-based adhesive may have any structure, including ether-based, ester-based, or polycarbonate-based structures.

The adhesive layer may be formed on the entire surface of one side of the woven or knitted fabric, or may be formed in pattern in view of moisture permeability, texture, or the like. The patterned form is not limited, and may be dotted, linear, lattice, checkered, tortoiseshell patterns, and the others, and any of these patterns is preferably uniformly distributed throughout the entire surface.

The thickness of the adhesive layer is preferably about 10 to 100 $\mu$m and more preferably 20 to 80 $\mu$m.

• Textile fabric for lining

In the stacked fabric of the present disclosure, a textile fabric for lining may be stacked on the moisture permeable and waterproof layer (the side of the moisture permeable and waterproof layer opposite from the side thereof on which the woven or knitted fabric of the present disclosure is stacked). The moisture permeable and waterproof layer can be protected by the textile fabric for lining, thereby rendering the layer further excellent in waterproof properties (water pressure resistance) and strength.

Examples of textile fabrics for lining include various types of woven fabrics and knitted fabrics. Among these, knitted fabrics are more suitable than woven fabrics because fiber yarns constituting the knitted fabrics easily protrude from their surfaces to create a less flat surface condition, and thus, the anchoring effect is more exhibited, thereby making it difficult for the fabric to peel from the moisture permeable and waterproof layer.

The tricot knitted fabric is also preferred for the following reason: a long greige tricot knitted fabric with fewer joints can be obtained upon knitting, which makes it possible for the fabric to be uniformly stacked on the moisture permeable and waterproof layer.

A material of fibers constituting the textile fabric for lining is not limited and can be appropriately selected; however, it is preferably a nylon fiber. The reason for this is as follows: a problem with polyester fibers and the like, for which disperse dyes are used, is migration and sublimation of the disperse dyes to the moisture permeable and waterproof layer, and acid dyes are generally used for nylon fibers, thereby hardly causing such a problem. The form (long fiber, staple fiber, or spun yarn) of the constituent fiber of the textile fabric for lining, or fineness thereof is not limited, and can be appropriately selected such that the effect of the present disclosure is not impaired.

• Characteristics of stacked fabric

The stacked fabric has an excellent waterproof property. As for a suitable example of the waterproof property of the stacked fabric of the present disclosure, the water level is, for example, 10,000 mm or more, preferably 15,000 mm or more, further preferably 16,000 mm or more, and particularly preferably 20,000 mm or more, as measured according to the water resistance test specified in the A method (low water pressure method) in JIS L 1092: 2009.

The stacked fabric has excellent moisture permeability. As for a suitable example of the moisture permeability of the stacked fabric of the present disclosure, the moisture permeability is, for example, 10,000 $g/m^2 \cdot 24h$ or more, preferably 15,000 $g/m^2 \cdot 24h$ or more, and further preferably 20,000 $g/m^2 \cdot 24h$ or more, as measured according to the B-1 method (potassium acetate method) in JIS L 1099: 2021. The upper limit value of the moisture permeability is not limited, and is, for example, 40,000 $g/m^2 \cdot 24h$ or 35,000 $g/m^2 \cdot 24h$. Also, the moisture permeability is, for example, 4,000 $g/m^2 \cdot 24h$ or more, preferably 8,000 $g/m^2 \cdot 24h$ or more, and further preferably 10,000 $g/m^2 \cdot 24h$ or more, as measured according to the A-1 method (calcium chloride method) in JIS L 1099: 2021. The upper limit value of the moisture permeability is about 13,000 to 15,000 $g/m^2 \cdot 24h$, due to the limitations of the measurement method.

In the stacked fabric of the present disclosure, a peel strength of 2.55 N/2.54 cm or more, as measured according to the method in JIS K 6404-2, between the woven or knitted fabric and the moisture permeable and waterproof layer is preferred for apparel applications; and depending on the use application, a peel strength of 5 N/2.54 cm or more may be preferred.

• Production method of stacked fabric

Methods for producing a stacked fabric are not limited, but include for example, the first production method and second production method described below.

The first production method: it comprises the step of applying a resin for forming the moisture permeable and waterproof layer to the surface of a woven or knitted fabric to form the moisture permeable and waterproof layer.

The second production method: it comprises the step of forming an adhesive layer on a woven or knitted fabric or a moisture permeable and waterproof layer, and the step of bonding the woven or knitted fabric and the moisture permeable and waterproof layer via an adhesive layer.

In the first production method, examples of methods for applying a resin for forming the moisture permeable and waterproof layer to the surface of the woven or knitted fabric include a coating method. In the coating method, a knife coater or comma coater can be used. In view of allowing a moisture permeable and waterproof layer to have excellent moisture permeability, it is preferably obtained by a wet method.

In the second production method, examples of methods for forming an adhesive layer on a woven or knitted fabric or a moisture permeable and waterproof layer include a lamination method. In the lamination method, a method involving use of a resin solution or a method involving hot melt can be employed to form the adhesive layer. First, a clearance is created on the surface of a release material (release paper, release fabric, or release film, and the like); a resin composition for forming a moisture permeable and waterproof layer (for example, a resin composition containing a resin and an organic solvent) is applied thereto while adjusting its thickness, to form a moisture permeable and waterproof layer; and the moisture permeable and waterproof layer is dried/heat treated to obtain a film. The release material can be appropriately removed after having bonded or aging. When bonding by a method involving hot melt, it is also possible to remove the release material and bond with the film alone.

The moisture permeable and waterproof film may also be bonded with a membrane formed by a solvent-free extrusion method such as T-die or inflation, a porous membrane formed by electrospinning, or a porous membrane made of PTFE, PE, PP, or the like.

An adhesive layer is then formed on the woven or knitted fabric or the moisture permeable and waterproof layer. For example, in the method involving use of a resin solution, a polyurethane resin solution may be applied to the entire surface of the layer or applied to the surface in a pattern, and the polyurethane resin solution may be a two-pack curable type and have an adjusted viscosity within a range of 500 to 5000 mPa·s. Thereafter, the applied solution may be dried to form the adhesive layer, the woven or knitted fabric and the moisture permeable and waterproof layer may be bonded to each other via the adhesive layer, and undergo compression bonding or thermal compression bonding, whereby the second production method can be implemented.

In the case of hot melt, on the other hand, a moisture-curable resin, which reacts with moisture in the air, is preferably used, and those that melt in a temperature range of about 80 to 150°C are more suitably used in practice. In this case, the hot melt resin is first melted while taking into consideration the melting point of the resin, its viscosity when melted and the others. Thereafter, the molten resin may be applied to the surface of the woven or knitted fabric or the moisture permeable and waterproof layer to form an adhesive layer, and the woven or knitted fabric and the moisture permeable and waterproof layer may be bonded to each other and undergo compression bonding, whereby the second production method can be implemented. Alternatively, when texture is prioritized, the molten resin may be applied to the moisture

permeable and waterproof film in a patterned manner, which may then be bonded to the woven or knitted fabric.

Thereafter, the textile fabric for lining can be stacked on the moisture permeable and waterproof layer using a known and appropriate method.

• Applications of stacked fabric

The stacked fabric has excellent water-repellency, and moisture permeability and a waterproof property, and the moisture permeable and waterproof layer does not peel off even in harsh environments. Accordingly, the stacked fabric is suitable in the fields such as uniform clothing, sportswear clothing, outdoor products, and the like, all of which are used outdoors.

[Treatment Method]

The water-repellent composition of the present disclosure can be applied to a substrate as a treatment agent (particularly a surface-treating agent) by a conventionally known method. A method for applying the water-repellent composition of the present disclosure may include dispersing the dispersion in an organic solvent or water to dilute it therewith, if necessary, and allowing the resulting dispersion to adhere to the surface of the substrate by any known methods such as dip coating, spray coating, foam coating, and the like, and then drying it. After drying, a textile product to which a solid component of the water-repellent composition has been adhered, is obtained. If necessary, the repellent of the present disclosure may be applied in combination with a suitable cross-linking agent, and curing may be carried out. Furthermore, the water-repellent composition of the present disclosure can be further combined for use with various additives such as water- and/or oil-repellent agents, an anti-slip agent, an antistatic agent, a texture modifier, a softening agent, an antibacterial agent, a flame retarder, a coating material fixing agent, a wrinkle-resistant agent, a drying rate adjuster, a cross-linking agent, a film formation agent, a compatibilizer, an antifreezing agent, a viscosity modifier, an ultraviolet absorber, an antioxidant, a pH adjuster, an insect repellent, and an antifoaming agent. Examples of the various additives may be the same as those explained in the section "Other Component" in the water-repellent composition described above. The concentration of the polymer (A) and the silicone compound (B) in the treatment agent to be brought into contact with a substrate may be each independently appropriately changed according to applications, but may be 0.01 to 10% by weight, for example, 0.05 to 5% by weight.

[Textile product]

A fiber substrate as a substrate may be any of various products, and examples thereof include fabric products and paper products.

Examples of the fabric product include: flora and fauna natural fibers such as cotton, hemp, wool, and silk; synthetic fibers such as a polyamide, polyester, polyvinyl alcohol, polyacrylonitrile, polyvinyl chloride, and polypropylene; semisynthetic fibers such as rayon and acetate; inorganic fibers such as a glass fiber, carbon fiber, and asbestos fiber or a mixture of these fibers. Fabric products include woven fabrics, knitted fabrics, and non-woven fabrics, fabrics in clothing form and carpets. Fibers, yarns and intermediate textile products (for example, slivers or coarse yarns) before being formed into fabrics may also undergo treatments.

Examples of the paper product include: papers made of bleached or unbleached chemical pulps such as kraft pulp or sulfite pulp; bleached or unbleached high-yield pulps such as crushed wood pulp, mechanical pulp, or thermomechanical pulp; waste paper pulps such as waste newspaper, waste magazines, waste cardboards, or deinked waste paper; containers made of paper, and formed articles made of paper. Specific examples of the paper product include food packaging paper, base paper for gypsum board, coated base paper, medium quality paper, general liner and core, neutral pure white roll paper, neutral liner, rust-proof liner and metal joined paper, kraft paper, neutral printing and writing paper, neutral coated base paper, neutral PPC paper, neutral thermal paper, neutral pressure sensitive base paper, neutral inkjet paper and neutral information paper, and molded paper (molded containers).

The water-repellent composition can be applied to the fiber substrates by any of the methods known for treating fiber substrates (for example, fabrics) with liquids. The fiber substrate may be immersed in the water-repellent composition, or the solution may be adhered to or sprayed on the fiber substrate. The treated fiber substrate is dried and subjected to curing, preferably by heating, in order to develop water- and oil-repellency. The heating temperature may be, for example, 100°C to 200°C, 100°C to 170°C, or 100°C to 120°C. Favorable performance can be obtained even by heating at lowered temperatures (for example, 100°C to 140°C) in the present disclosure. In the present disclosure, the heating time may be 5 seconds to 60 minutes, for example, 30 seconds to 3 minutes.

Alternatively, the polymer may be applied to the fiber substrate by a cleaning method, for example, in laundry application or dry cleaning methods.

The fiber substrates to be treated may be fabrics, including woven textiles (woven fabrics), knitted textiles (knitted

fabrics) and nonwoven fabrics, fabrics in clothing form and carpets. The textile products may also be fibers or yarns or intermediate textile products (for example, sliver or coarse yarn). The water-repellent composition of the present disclosure is particularly effective in rendering textile products (for example, synthetic fibers) water-repellent.

Fibers constituting the fiber substrate may be natural, synthetic, semi-synthetic, regenerated or inorganic fibers. Fibers may be used singly or in combination of two or more thereof.

Examples of the natural fibers include cellulosic fibers such as cotton, flax, and pulp, chitin, chitosan, wool, and silk. Specific examples of the wood pulp include mechanical pulp such as ground wood pulp (GP), pressurized ground wood pulp (PGW), and thermomechanical pulp (TMP), chemical pulp such as high-yield softwood unbleached kraft pulp (HNKP; N material), softwood bleached kraft pulp (NBKP; N material, NB material), hardwood unbleached kraft pulp (LUKP; L material), hardwood bleached kraft pulp (LBKP, L material), waste paper pulp such as deinking pulp (DIP) and waste pulp (WP), and semi-chemical pulp (CP).

Examples of the synthetic fibers include polyesters such as polyethylene terephthalate, polybutylene terephthalate, polytrimethylene terephthalate, and copolymerized polyesters; polyolefins such as linear low density polyethylene, low density polyethylene, high density polyethylene, and polypropylene; polyamides such as nylon 6, nylon 66, nylon 610, and nylon 46; and acrylic fibers such as polyacrylonitrile; polyvinyl alcohol, polyurethane, and polyvinyl chloride.

Examples of the semi-synthetic fibers include acetate and triacetate. Examples of the regenerated fibers include rayon, cupra, polynosic rayon, lyocell, and tencel. Examples of inorganic fibers are a glass fiber and carbon fiber.

Alternatively, the fiber substrate may be leather. In order to render the leather water- and oil-repellent, the polymeric product in the form of an aqueous solution or aqueous emulsion may be applied to the leather at various stages of leather processing, for example, during a wet processing of the leather or during a finishing of the leather.

Alternatively, the fiber substrate may be paper. The polymeric product may be applied to paper that has been produced, or may be applied at various stages of papermaking, for example, during drying the paper.

The "treatment" refers to applying the water-repellent composition to a substrate by dipping, spraying, coating, etc. The treatment allows the polymer (A) and the silicone compound (B) as an active ingredient of the water-repellent composition to penetrate inside of the substrate and/or to adhere to a front side of the substrate. In other words, the treatment allows to obtain a substrate (for example, a textile product) to which the polymer (A) and the silicone compound (B) in the water-repellent composition of the present disclosure are adhered.

[Pretreatment of fiber substrate]

The fiber substrate may be pretreated prior to treatment with the water-repellent composition of the present disclosure. When a pretreated fiber substrate is treated with the water-repellent composition, the fiber substrate after the treatment with the dispersion has excellent fastness.

Examples of pretreatment of fiber substrates include cationization treatments by reaction with reactive quaternary ammonium salts or the like, anionization treatments such as sulfonation, carboxylation and phosphorylation, acetylation treatment after anionization treatment, benzoylation treatment, carboxymethylation treatment, grafting treatment, tannin acid treatment, and polymer coating treatment.

The method for pretreating the fiber substrate is not limited, and the fiber substrate can be pretreated by any of conventionally known methods. The method for pretreatment may include dispersing a pretreatment liquid in an organic solvent or water to dilute it therewith, as necessary, and allowing the diluted pretreatment liquid to adhere to the surface of the fiber substrate by any known methods such as dip coating, spray coating, foam coating, and the like, and then drying the resultant. The pH, temperature, etc. of the pretreatment liquid may be adjusted according to an extent of treatment desired. As an example of the method for pretreating a fiber substrate, a method for pretreating a fiber substrate with a hydrocarbon-based water-repellent will be described in detail.

The pretreatment method of a fiber substrate may include imparting a fiber with at least one functional group (hereinafter sometimes referred to as "specific functional groups") selected from the group consisting of the monovalent group represented by $-SO_3M^1$, wherein $M^1$ represents a monovalent cation, the monovalent group represented by $-COOM^2$, wherein $M^2$ represents a monovalent cation, and the monovalent group represented by $-OP(O)(OX^1)(OX^2)$, wherein $X^1$ and $X^2$ each independently represent a hydrogen atom or an alkyl group having 1 to 22 carbon atoms.

Examples of $M^1$ include H, K, Na, or an ammonium ion which may have a substituent. Examples of $M^2$ include H, K, Na, or an ammonium ion which may have a substituent. When $X^1$ or $X^2$ is an alkyl group, it is preferably an alkyl group having 1 to 22 carbon atoms and more preferably an alkyl group having 4 to 12 carbon atoms.

Fibers containing the aforementioned specific functional groups (hereinafter, also referred to as "functional group-containing fibers") can be prepared, for example, by the following methods. (i) A compound having the above specific functional group is allowed to adhere to a fiber material. The adhesion of the compound may be in a condition such that a portion of the compound and a portion of the fibers are chemically bonded as long as the above specific functional groups remain in a sufficient amount. (ii) A fiber is provided in which the above specific functional group has been directly introduced into the material forming the fiber.

In the case of (i), for example, a functional group-containing fiber can be obtained by treating the fiber material with a pretreatment liquid containing one or more compounds having the above specific functional group, namely, by the step of introducing the functional group.

Materials used for the fiber material, are not particularly limited, and examples thereof include natural fibers such as cotton, linen, silk, and wool, semi-synthetic fibers such as rayon and acetate, synthetic fibers such as a polyamide (nylon, etc.), a polyester, a polyurethane, and a polypropylene, composite fibers thereof, blended fibers, and the like. The fiber material may be in any form of fibers (tows, slivers, and the like), yarns, knitted fabrics (including interknitted fabrics), woven fabrics (including interwoven fabrics), nonwoven fabrics, papers, and the like.

In the present embodiment, from the viewpoint of improving water-repellency of the obtained textile product, a fiber material containing a polyamide and a polyester as raw materials, is preferably used, and in particular, nylon such as nylon 6, or nylon 6,6, a polyester such as a polyethylene terephthalate (PET), a polytrimethyl terephthalate, or polylactic acid, and blended fibers containing these, are preferably used.

A Phenolic polymer can be used as the compound having $-SO_3M^1$ described above. Examples of such a phenolic polymer include those containing at least one compound represented by the following general formula:

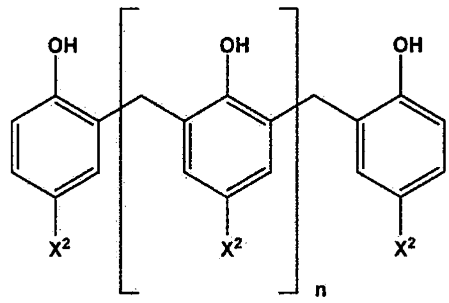

wherein $X^2$ represents $-SO_3M^3$, wherein $M^3$ represents a monovalent cation, or a group represented by the following general formula, and n is an integer of 20 to 3,000.

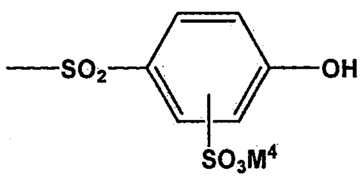

wherein $M^4$ represents a monovalent cation.

Examples of $M^3$ includes H, K, Na or an ammonium ion that may have a substituent.

Examples of $M^4$ includes H, K, Na or an ammonium ion which may have a substituent.

The compounds represented by the general formula above may be, for example, formalin condensates of phenol sulfonic acid and formalin condensates of sulfonated bisphenol S.

Examples of the compound having $-COOM^2$ above include a polycarboxylic acid-based polymer.

As the polycarboxylic acid-based polymer, for example, a polymer synthesized by a conventionally known radical polymerization method using acrylic acid, methacrylic acid, maleic acid, or the like as a monomer, or a commercially available polymer, can be used.

A method for producing the polycarboxylic acid-based polymers may include, for example, adding a radical polymerization initiator to an aqueous solution of the aforementioned monomer and/or salt thereof and heating and reacting the mixture at 30 to 150°C for 2 to 5 hours. At this time, an aqueous solution of the above monomer and/or salt thereof may be added with aqueous solvents such as alcohols such as methanol, ethanol, and isopropyl alcohol, and acetone. Examples of the radical polymerization initiator include persulfates such as potassium persulfate, sodium persulfate, and ammonium persulfate, redox polymerization initiators in combination of the persulfate and sodium bisulfite or the like, hydrogen peroxide, and a water-soluble azo-based polymerization initiator. These radical polymerization initiators may be used singly or in combination of two or more thereof. Furthermore, a chain transfer agent (for example, octyl thioglycolate) may be added upon radical polymerization for the purpose of adjusting the degree of polymerization.

In addition to the aforementioned monomers, a copolymerizable monomer can be used for radical polymerization. Examples of the copolymerizable monomer include vinyl-based monomers such as ethylene, vinyl chloride, and vinyl acetate, an acrylamide, acrylates, and methacrylates. The acrylates and methacrylates preferably have a hydrocarbon group having 1 to 3 carbon atoms, which may have a substituent such as a hydroxyl group. Examples of such acrylates or methacrylates include methyl acrylate, methyl methacrylate, ethyl acrylate, ethyl methacrylate, 2-hydroxyethyl acrylate, 2-hydroxyethyl methacrylate, propyl acrylate, propyl methacrylate, and the like. These copolymerizable monomers may be used singly or in combination of two or more thereof.

A carboxyl group in the polycarboxylic acid-based polymer may be free or may be neutralized with an alkali metal, an amine-based compound, or the like. Examples of the alkali metal include sodium, potassium, lithium, and the like, and examples of the amine-based compound include ammonia, monoethanolamine, diethanolamine, triethanolamine, and the like.

The weight-average molecular weight of the polycarboxylic acid-based polymer is preferably 1,000 to 20,000 and more preferably from 3,000 to 15,000, from the viewpoint of favorable water-repellency of the resulting textile product.

As the polycarboxylic acid-based polymer, commercially available products such as "Neocrystal 770" (trade name, manufactured by NICCA CHEMICAL CO., LTD.) and "Ceropol PC-300" (trade name, manufactured by Sanyo Chemical Industries, Ltd.) can be used.

Examples of the compound having -O-P(O)($OX^1$)($OX^2$) as described above include phosphoric acid ester compounds represented by the following general formula:

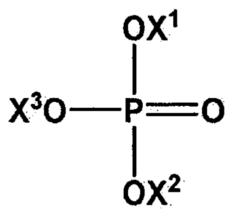

wherein, $X^1$ or $X^2$ is the same as defined above, and $X^3$ represents an alkyl group having 1 to 22 carbon atoms.

As the aforementioned phosphoric acid ester compound, phosphoric acid monoesters, diesters and triesters, and mixtures thereof can be used in which the alkyl ester moiety is an alkyl group having 1 to 22 carbon atoms.

In view of favorable water-repellency of the textile products to be obtained, lauryl phosphoric acid ester and decyl phosphoric acid ester are preferably used.

As the phosphoric acid ester compound, for example, a commercially available product such as "Phosphanol ML-200" (trade name, manufactured by TOHO Chemical Industry Co., Ltd.) can be used.

A pretreatment liquid containing one or more of the compounds having the aforementioned specific functional group can be, for example, an aqueous solution of the compound described above. The pretreatment liquid may also contain an acid, alkali, surfactant, chelating agent, and the others.

Examples of the method for treating a fiber material with the above pretreatment liquid include padding treatment, dip treatment, spray treatment, and coating treatment. Examples of padding treatment include the method involving using the padding apparatus as described on pages 396 to 397 of Seni Sensyoku Kako Jiten (in Japanese; Fiber-dyeing process dictionary) (published by THE NIKKAN KOGYO SHIMBUN, LTD., 1963) and pages 256 to 260 of Irozome Kagaku (in Japanese; dyeing chemistry) III (published by Jikkyo Shuppan Co., Ltd., 1975). Examples of the coating treatment include the method involving using a coating machine as described on pages 473 to 477 of Sensyoku Shiage Kiki Soran (in Japanese; Comprehensive guide to dyeing and finishing machines) (published by Fiber Japan CO., LTD., 1981). Examples of the dip treatment include the method involving using a batch type dyeing machine as described in pages 196 to 247 of Sensyoku Shiage Kiki Soran (in Japanese) (published by Fiber Japan CO., LTD., 1981), and for example, a jet dyeing machine, air flow dyeing machine, drum dyeing machine, wince dyeing machine, washer dyeing machine, and cheese dyeing machine can be used. Examples of the spray treatment includes a method involving using an air spray that nebulizes and sprays a treatment liquid by compressed air, or an air spray by hydraulic pressure nebulization system. In this case, the concentration of the treatment liquid and treatment conditions of heat treatment after application can be adjusted appropriately, taking into consideration various conditions such as their purposes and performance. Moreover, in a case in which the pretreatment liquid contains water, it is preferably dried to remove water after the pretreatment liquid has been allowed to adhere to the fiber material. The drying method are not limited, and either a dry heat method or a wet heat method may be employed. Drying temperatures are also not limited, and for example, drying may be carried out at room temperature to 200°C for 10 seconds to several days. Heat treatment at a temperature of 100 to 180°C for about 10 seconds to 5 minutes may be carried out after the drying, as necessary.

In a case in which a fiber material is such that it is to be dyed, treatment with the pretreatment liquid may be carried out before dyeing or in the same bath as in dyeing, but in the case of carrying out reduction soaping, a compound with the above specified functional group (for example, a phenolic polymer compound or the like) adsorbed in the process may fall off, and therefore the treatment with the pretreatment liquid is preferably carried out after the reduction soaping after dyeing.

The treatment temperature in the dip treatment can be 60 to 130°C. The treatment time can be 5 to 60 minutes.

The step of introducing a functional group by the pretreatment liquid is preferably carried out so that the amount of

compound having the above specified functional group adhered is 1.0 to 7.0 parts by weight relative to 100 parts by weight of a fiber material. Within this range, both durable water-repellency and texture can be achieved at a high level.

The pH of the pretreatment liquid is preferably adjusted to 3 to 5. The pH adjustment can be carried out by using a pH adjuster such as acetic acid or malic acid.

A salt can be used in combination with the pretreatment liquid to adsorb the compound having the aforementioned specific functional group effectively onto the fiber material by a salting effect. Examples of the salt that can be used include, for example, sodium chloride, sodium carbonate, ammonium sulfate, and sodium sulfate.

In the step of introducing the functional group by the pretreatment liquid, an excess amount of the compound having the aforementioned specific functional group, which has been given by the treatment, is preferably removed. Examples of the removal method include washing with water. Sufficient removal can avoid inhibition of development of water-repellency in the subsequent water-repellent treatment, and additionally, the textile product to be obtained has the favorable texture. The resulting functional group-containing fiber is preferably fully dried prior to contact with a hydrocarbon-based water-repellent.

Examples of (ii) the fiber in which the aforementioned specific functional group has been introduced directly into the material forming the fiber include a cation-dyeable polyester (CD-PET).

In view of favorable water-repellency of the textile products to be obtained, the functional group-containing fiber preferably has a zeta potential of its surface of -100 to -0.1 mV and more preferably -50 to -1 mV. The zeta potential of the fiber surface can be measured, for example, using a zeta potential and particle size measurement system, ELSZ-1000ZS (manufactured by Otsuka Electronics Co., Ltd.).

## Examples

Hereinafter, the present disclosure will be described in detail with reference to Examples, but the present disclosure is not limited to these Examples.

<Test Method>

The test procedures are as follows.

{Water-repellency test}

The water-repellency of the test fabrics was evaluated in accordance with the spray method of JIS-L-1092 (AATCC-22).

The water-repellency was evaluated according to the following criteria. A higher score indicates better water-repellency, and intermediate values (95, 85, 75) were assigned depending on the condition.

100: No wet or water droplets adhered was found on the surface.
90: No wet but small water droplets adhered was found on the surface.
80: Wet in the form of separate small water droplets was found on the surface.
70: Wet was found on half of the surface and the separate small wet penetrated the fabric.
50: Wet was found on the whole surface.
0: Wet was found on the whole surface and the whole back surface.

{Durable water-repellency}

The water repellency of the test fabrics dried with a tumbler (60°C for 30 minutes) after washing the test fabrics 20 times according to JIS L 1930, Annex F, C4M, was evaluated.

{Texture}

The test fabric was evaluated in five stages as shown below based on handling. Depending on the condition, intermediate scores (3-4 and 4-5) were assigned.
1: Hard to 5: Soft

{Chalk mark resistance}

A test fabric was placed on a flat place, the surface of the test fabric was slightly scratched with a fingernail, and the remaining chalk-like scratch mark by the fingernail was visually assessed and evaluated.

◦: Scratch mark is barely visible;
◦Δ: Thin scratch mark is found;
Δ: Scratch mark is found;
Δ×: Slightly thick scratch mark is found;
×: Thick scratch mark is found

{Peel strength}

Using a thermocompression bonding device, a hot melt adhesive tape ("MELCO tape" manufactured by San Chemicals Ltd.) was thermally bonded to the test fabric at 160°C for 15 seconds, and the interlayer peel strength between the test fabric and the seam tape was measured by an autograph (AGS-J, manufactured by Shimadzu Corporation). The gripper was pulled at a moving speed of 200 mm/min, and the average stress value was used as the peel strength [N/inch].

[Preparation of raw material]

(Production Example of Water Dispersion Containing

Acrylic Polymer)

Production Example 1

A 500 ml plastic container was charged with 30 g of a water-soluble glycol solvent as the organic solvent, 120 g of pure water as the liquid medium, 48 g of stearyl acrylate as the long-chain aliphatic hydrocarbon group-containing (meth) acrylate, 2.0 g of cationic emulsifier as the surfactant, 2.0 g of sorbitan fatty acid ester, 6.0 g of a polyoxyethylene alkyl ether, and 0.1 g of acetic acid, and the mixture was heated to 60°C, then stirred with a homo-mixer at 2,000 rpm for 1 minute, followed by emulsifying and dispersing with ultrasound for 15 minutes.

Then, this emulsified dispersion was transferred to a 500-ml autoclave, followed by nitrogen purge, and then 0.2 g of lauryl mercaptan as a chain transfer agent and 12 g of vinyl chloride were added thereto. Furthermore, 1.0 g of an azo group-containing water-soluble initiator was added, the temperature of the mixture was raised to 60°C, and the mixture was subjected to a reaction for 4 hours to obtain an aqueous dispersion of the polymer. The dispersion was further diluted with pure water to prepare a water dispersion with a non-volatile concentration of 30%.

Production Examples 2, 3 and 5

Except for modifying the formulations according to Table 1, water dispersions containing an acrylic polymer, a surfactant, and a liquid medium were prepared in the same manner as in Production Example 1.

Production Example 4

A 500 ml plastic container was charged with 30 g of a water-soluble glycol solvent as the organic solvent, 120 g of pure water as the liquid medium, 60 g of stearyl acrylate, 2.0 g of cationic emulsifier as the surfactant, 2.0 g of sorbitan fatty acid ester, and 6.0 g of a polyoxyethylene alkyl ether, and the mixture was heated to 80°C, then stirred with a homo-mixer at 2,000 rpm for 1 minute, followed by emulsifying and dispersing with ultrasound for 15 minutes.

The emulsified dispersion was transferred to a 500 cc four-neck flask equipped with a nitrogen gas inlet, a thermometer, a stirring rod and a reflux tube. After nitrogen replacement, 0.2 g of lauryl mercaptan was added thereto and the mixture was stirred. Furthermore, 1.0 g of an azo group-containing water-soluble initiator was added, the temperature of the mixture was raised to 60°C, and the mixture was subjected to a reaction for 4 hours to obtain an aqueous dispersion of the polymer. Then pure water was added thereto to give a water dispersion body with a non-volatile concentration of 30%.

(Production Example of Urethane-Containing Water Dispersion)

Production Example 5

1. Synthesis of aliphatic polyisocyanate derivative

In a reactor equipped with a thermometer, stirring apparatus, nitrogen gas inlet, and cooling pipe, under a nitrogen atmosphere, 500 parts by mass of 1,6-hexamethylene diisocyanate (HDI, manufactured by Mitsui Chemicals,

Inc., trade name: Takenate 700), 0.25 parts by mass of 2,6-di(tert-butyl)-4-methylphenol (also known as dibutylhydroxytoluene or BHT, a hindered phenolic antioxidant), and 0.25 parts by mass of tetraphenyl dipropylene glycol diphosphite (an organic phosphite ester, co-catalyst) were mixed. Then, 10.7 parts by mass of 1,3-butanediol were added to this mixture, and nitrogen was introduced into the liquid phase for 1 hour. Thereafter, the mixture was heated to 80°C and allowed to react for 3 hours, followed by cooling to 60°C. Thereafter, 0.2 parts by mass of trimethyl-N-2-hydroxypropylammonium 2-ethylhexanoate was added as an isocyanurate-forming catalyst, and the mixture was reacted for 1.5 hours. Thereafter, 0.04 parts by mass of o-toluenesulfonamide was added per 100 parts by mass of HDI. Thereafter, this reaction mixture was passed through a thin-film distillation apparatus (temperature: 150°C, degree of vacuum: 93.3 Pa) and distilled until the residual HDI monomer content reached 0.5% or less to obtain an aliphatic polyisocyanate derivative (an isocyanurate derivative of hexamethylene diisocyanate). The obtained aliphatic polyisocyanate derivative had an isocyanate group content of 20.9% and an average number of isocyanate functional groups of 3.0.

2. Production of Hydrocarbon-Based Polyurethane

In a reactor equipped with a stirrer, thermometer, condenser, and nitrogen gas inlet was mixed 100.20 g of the above aliphatic polyisocyanate derivative, 67.60 g of KALCOL 8098 (stearyl alcohol, manufactured by Kao Corporation) as a long-chain active hydrogen compound, and 22.30 g of oleyl alcohol, and the mixture was reacted under a nitrogen atmosphere at 110°C for 4 hours until the isocyanate group concentration reached 3.67%.

Then, the reaction solution was cooled to 80°C, and 9.90 g of N-methyldiethanolamine was added as a cationic active hydrogen compound, followed by reaction at 80°C for 1 hour.

Then, 50.00 g of methyl ethyl ketone was added as a solvent, and the mixture was reacted at 80°C until the disappearance of the isocyanate groups was confirmed by infrared absorption spectroscopy.

Then, 57.69 g of methyl ethyl ketone was added to the reaction solution, the temperature was raised to 80°C, and the reaction solution was mixed until completely dissolved, and then cooled to 75°C.

Thereafter, 18.96 g of acetic acid was added as an acid compound for neutralization.

Then, while maintaining the reaction solution at 75°C, 800.0 g of ion-exchanged water heated to 70°C was gradually added to emulsify the solution (internal emulsification).

Then, the solvent was removed using an evaporator under reduced pressure at a water bath temperature of 60°C, until the solid concentration reached 20% by weight or more.

Then, a water dispersion containing polyurethane was obtained by adjusting with ion-exchanged water the solid concentration, excluding the acid compound (acetic acid), to 20% by weight.

<u>Production Example 6</u>

A 500 mL four-neck flask equipped with a stirrer, thermometer, and reflux tube was charged with 116 g of sorbitan tristearate and 150 g of 4-methyl-2-pentanone (MIBK). Then, in order to remove excess water vapor from this mixture, the mixture was stirred and refluxed for 1 hour while maintaining its temperature at 70°C, and then the mixture was allowed to cool to 50°C. While maintaining stirring, 30 g of Desmodur N-100 (a biuret derivative of hexamethylene diisocyanate, Covestro AG) was then added dropwise to the mixture using a dropping funnel. After completion of the dropwise addition, one drop of dibutyltin dilaurate was added as a catalyst, and the reaction was carried out at 80°C for 1 hour. Then, 25 g of sorbitan monostearate was added, and the reaction was further carried out at 80°C for 4 hours.

Then, after cooling to 60°C, the reaction solution was collected and slowly mixed with water at 60°C containing an arbitrary amount of cationic emulsifier and polyoxyethylene alkyl ether. The mixture was stirred using a homo-mixer at 6,000 rpm for 1 minute, followed by emulsification and dispersion with ultrasound for 15 minutes. Thereafter, the solvent (MIBK) was removed under reduced pressure, and pure water was added to adjust the concentration, thereby obtaining a water dispersion containing polyurethane with a solid concentration of 20%.

<u>Production Example 7</u>

A 500 mL four-neck flask equipped with a stirrer, thermometer, and reflux tube was charged with 150 g of methyl ethyl ketone (MEK) and 51 g of stearyl alcohol. Then, in order to remove excess water vapor from this mixture, the mixture was stirred and refluxed for 1 hour while maintaining its temperature at 70°C, and then the mixture was allowed to cool to 50°C. 30 g of Desmodur N3200A (a biuret derivative of hexamethylene diisocyanate, manufactured by Covestro AG) was then added, and the reaction was carried out at 80°C for 4 hours.

Then, after cooling to 60°C, the reaction solution was collected and slowly mixed with water at 60°C containing an arbitrary amount of polyoxyethylene alkyl ether. This mixture was stirred with a homo-mixer at 6,000 rpm for 1 minute, followed by emulsification and dispersion with ultrasound for 15 minutes.

Then, the solvent (MEK) was removed under reduced pressure, and pure water was added to adjust the

concentration, thereby obtaining a water dispersion containing polyurethane with a solid concentration of 20%.

(Production Example of Wax-Containing Water Dispersion)

Production Example 8

A pressure reaction vessel was charged with 150 g of paraffin wax (melting point: 75°C), 350 g of pure water, 4.5 g of polyoxyethylene alkyl ether, and 3 g of sorbitan fatty acid ester, sealed, and heated to 110 to 120°C with stirring. Then, high-pressure emulsification was performed for 30 minutes under high pressure to prepare a water dispersion of the wax. Then pure water was added thereto to give a water dispersion of wax with a solid content of 30% by weight.

Production Example 9

A reaction vessel was charged with 150 g of oxidized polypropylene wax with a melting point of 150°C, acid number of 44 mg KOH/g and density of 0.93, 325 g of ion-exchanged water, 25 g of a surfactant with an HLB of 15, and 5 g of a 48% potassium hydroxide aqueous solution, sealed, and heated to 160°C with stirring. After high-pressure emulsification for 1 hour under high pressure, the mixture was cooled to 90°C to obtain a water dispersion of the polypropylene wax. Then pure water was added thereto to give a water dispersion of polypropylene wax with a solid content of 30% by weight.

Production Example 10

1. Synthesis of Silicone Polymer

A 200 mL four-neck flask was charged with 12 g of methyl hydrogen silicone oil (with a SiH:$SiCH_3$ molar ratio of 60:40 as determined by $^1$H NMR) and 0.02 g of a hydrosilylation Pt catalyst. A stirring rod, thermometer, and reflux tube were set, and 36 g of $CH_2=CH-(CH_2CH_2)_n-CH_2CH_3$ (n=11) was charged into a dropping funnel. While maintaining the temperature at 70°C, $CH_2=CH-(CH_2CH_2)_n-CH_2CH_3$ (n=11) was added dropwise from the dropping funnel. After completion of the dropping, the reaction was carried out for another 3 hours at 70°C. The disappearance of the SiH peak was confirmed by infrared spectroscopy (IR), and a silicone polymer 1 was obtained.

2. Production of Silicone Dispersion

A 250 ml plastic container was charged with 1.28 g of silicone polymer, 5.6 g of a water-soluble glycol solvent, 60 g of pure water, 1.7 g of sorbitan fatty acid ester, 0.7 g of a polyoxyethylene alkyl ether, and 0.6 g of cationic emulsifier, and the mixture was heated to 75°C, then stirred with a homo-mixer at 2,000 rpm for 1 minute, followed by emulsifying and dispersing with ultrasound for 10 minutes to obtain an aqueous dispersion. Then pure water was added thereto to give a water dispersion body with a solid concentration of 30%.

(Preparation Example of Silicone Water Dispersion)

Preparation Example 1

9.0 g of MQ-1600 (manufactured by Dow Toray Co., Ltd.) as the resin-type silicone, 9.0 g of KF-96-6CS (polydimethylsiloxane, manufactured by Shin-Etsu Chemical Co., Ltd.) as the non-resin-type silicone, and 22 g of KF-96-50CS (polydimethylsiloxane, manufactured by Shin-Etsu Chemical Co., Ltd.) as the non-resin-type silicone with a number average molecular weight of less than 1,500 were mixed, and mixed until MQ-1600 was dissolved. 4.0 g of polyoxyethylene alkyl ether was added and mixed. Next, 89 g of pure water as an aqueous medium was added in small amounts to the mixture to obtain a dispersion containing a total of 30.0% by weight of the resin-type silicone and non-resin-type silicone.

Preparation Examples 2 to 8

Except for modifying the formulations according to Table 2, dispersions containing a total of 30.0% by weight of the resin-type silicone and non-resin-type silicone were obtained in the same manner as in Preparation Example 1.

Preparation Example 9

9.0 g of MQ-1600 (manufactured by Dow Toray Co., Ltd.) as the resin-type silicone, 9.0 g of KF-96-6CS

(polydimethylsiloxane, manufactured by Shin-Etsu Chemical Co., Ltd.) as the non-resin-type silicone, 22 g of KF-96-50CS (polydimethylsiloxane, manufactured by Shin-Etsu Chemical Co., Ltd.) as the non-resin-type silicone with a number average molecular weight of less than 1,500, and an alkyl-modified silicone (C18 side-chain modified) as the wax were mixed, and mixed until MQ-1600 and the wax were dissolved. 4.0 g of polyoxyethylene alkyl ether was added and mixed. Next, 89 g of pure water as an aqueous medium was added in small amounts to the mixture to obtain a dispersion containing a total of 30.0% by weight of the resin-type silicone, non-resin-type silicone, and wax.

Preparation Examples 10 to 13

Except for modifying the formulations according to Table 2, dispersions containing a total of 30.0% by weight of the resin-type silicone and non-resin-type silicone were obtained in the same manner as in Preparation Example 1.

Preparation Example 14

A carboxy-modified silicone emulsion DK-Q2-103-22 (manufactured by Dow Toray Co., Ltd.) was used as the silicone water dispersion.

Comparative Preparation Example 1

9.0 g of MQ-1600 (manufactured by Dow Toray Co., Ltd.) as the resin-type silicone, 9.0 g of KF-96-6CS (polydimethylsiloxane, manufactured by Shin-Etsu Chemical Co., Ltd.) as the non-resin-type silicone with a number average molecular weight of 1,500 or less, and 22 g of FZ-3710 (manufactured by Dow Toray Co., Ltd.) as the amino-modified non-resin-type silicone were mixed, and mixed until MQ-1600 was dissolved. 4.0 g of polyoxyethylene alkyl ether was added and mixed. Next, 89 g of pure water as an aqueous medium was added in small amounts to the mixture to obtain a dispersion containing a total of 30.0% by weight of the resin-type silicone and non-resin-type silicone.

Example 1

Treatment liquids of the water-repellent composition were obtained by mixing the fluorine-free acrylic polymer dispersion with the silicone compound dispersions and tap water so as to obtain the formulations shown in Table 3-1 and Table 3-2 (numerical values in the table represent (% by weight)). Polyester fabric, nylon fabric, polyester/polyurethane (PU) fabric, and cotton fabric were dipped in these treatment liquids, and then squeezed with a mangle. The treated fabrics were passed through a pin tenter at 170°C for 1 minute, dried and cured. The cotton fabric was passed through a pin tenter at 170°C for 3 minutes, dried and cured.

The test fabrics thus treated were used to carry out tests for water-repellency, durable water-repellency, texture, chalk mark resistance, and peel strength. The results are shown in Table 3-1 and Table 3-2.

Examples 2 to 45 and Comparative Examples 1 to 6

Except for modifying the formulations according to Tables 3-1 to 5-2, the fabrics were treated in the same manner as in Example 1 to carry out tests for water-repellency, durable water-repellency, texture, chalk mark resistance and peel strength. The results are shown in Tables 3-1 to 5-2.

[Table 1]

| | Production Example 1 | Production Example 2 | Production Example 3 | Production Example 4 | Production Example 5 |
|---|---|---|---|---|---|
| Stearyl acrylate | 48 | 24 | 57 | 60 | 57.6 |
| Glycidyl methacrylate | | | | | 2.4 |
| Stearyl group-containing amide acrylate | | 24 | | | |
| Vinyl chloride | 12 | 12 | 3.0 | | |
| Azo group-containing water-soluble initiator | 1.0 | 1.0 | 1.0 | 1.0 | 1.0 |
| Lauryl mercaptan | 0.2 | 0.2 | 0.2 | 0.2 | 0.2 |

(continued)

| | Production Example 1 | Production Example 2 | Production Example 3 | Production Example 4 | Production Example 5 |
|---|---|---|---|---|---|
| Water-soluble glycol solvent | 30 | 30 | 30 | 30 | 30 |
| Cationic emulsifier | 2.0 | 2.0 | 2.0 | 2.0 | 2.0 |
| Sorbitan fatty acid ester | 2.0 | 2.0 | 2.0 | 2.0 | 2.0 |
| Polyoxyethylene alkyl ether | 6.0 | 6.0 | 6.0 | 6.0 | 6.0 |
| Acetic acid | 0.1 | 0.1 | 0.1 | 0.1 | 0.1 |
| Pure water | 120 | 120 | 120 | 120 | 120 |

The numbers in the table indicate the charged amount (g)

[Table 2]

| | | Product Name | | Preparation Example 1 | Preparation Example 2 | Preparation Example 3 | Preparation Example 4 | Preparation Example 5 | Preparation Example 6 | Preparation Example 7 | Preparation Example 8 | Preparation Example 9 | Preparation Example 10 | Preparation Example 11 | Preparation Example 12 | Preparation Example 13 | Comparative Preparation Example 1 |
|---|---|---|---|---|---|---|---|---|---|---|---|---|---|---|---|---|---|
| Resin | Silicone resin | MQ1600 | Dow Toray Co., Ltd. | 9.0 | 9.0 | 4.0 | 9.0 | 9.0 | 6.0 | 13.0 | 16.0 | 12.8 | 9.6 | 12.8 | 9.6 | 6.4 | 9.0 |

(continued)

| | | Product Name | | Preparation Example 1 | Preparation Example 2 | Preparation Example 3 | Preparation Example 4 | Preparation Example 5 | Preparation Example 6 | Preparation Example 7 | Preparation Example 8 | Preparation Example 9 | Preparation Example 10 | Preparation Example 11 | Preparation Example 12 | Preparation Example 13 | Comparative Preparation Example 1 |
|---|---|---|---|---|---|---|---|---|---|---|---|---|---|---|---|---|---|
| Oil | Polydimethylsiloxane (Mn<1500) | KF-96-6CS | Shin-Etsu Chemical Co., Ltd. | 9.0 | 9.0 | 4.0 | 9.0 | 9.0 | 4.0 | 8.0 | 24.0 | 19.2 | 14.4 | 19.2 | 14.4 | 9.8 | 9.0 |
| | Polydimethylsiloxane (Mn≥1500) | KF-96-30CS | Shin-Etsu Chemical Co., Ltd. | | 22 | | | | | | | | | | | | |
| | Polydimethylsiloxane (Mn≥1500) | KF-96-50CS | Shin-Etsu Chemical Co., Ltd. | 22 | | 32 | | | 30 | 19 | | | | | | | |
| | Polydimethylsiloxane (Mn≥1500) | KF-96-300-CS | Shin-Etsu Chemical Co., Ltd. | | | | 22 | | | | | | | | | | |
| | Polydimethylsiloxane (Mn≥1500) | KF-96-1000-CS | Shin-Etsu Chemical Co., Ltd. | | | | | 22 | | | | | | | | | |
| | Amino-modified silicone (Mn≥1500) | FZ-3710 | Dow Toray Co., Ltd. | | | | | | | | | | | | | | 22 |

(continued)

| | | Product Name | | Preparation Example 1 | Preparation Example 2 | Preparation Example 3 | Preparation Example 4 | Preparation Example 5 | Preparation Example 6 | Preparation Example 7 | Preparation Example 8 | Preparation Example 9 | Preparation Example 10 | Preparation Example 11 | Preparation Example 12 | Preparation Example 13 | Comparative Preparation Example 1 |
|---|---|---|---|---|---|---|---|---|---|---|---|---|---|---|---|---|---|
| Wax | Alkyl-modified silicone (C18 side-chain modified) | | | | | | | | | | 0 | 8 | 16 | | | | |
| | Alkyl-modified silicone (C26 side-chain modified) | | | | | | | | | | | | | 8 | 16 | 24 | |
| Surfactant | Polyoxyethylene alkyl ether | | | 4.0 | 4.0 | 4.0 | 4.0 | 4.0 | 4.0 | 4.0 | 4.0 | 4.0 | 4.0 | 4.0 | 4.0 | 4.0 | 4.0 |
| Pure water | | | | 89 | 89 | 89 | 89 | 89 | 89 | 89 | 89 | 89 | 89 | 89 | 89 | 89 | 89 |

The numbers in the table indicate the charged amount (g)

[Table 3-1]

| | | Example 1 | Example 2 | Example 3 | Example 4 | Example 5 | Example 6 | Example 7 | Example 8 | Example 9 |
|---|---|---|---|---|---|---|---|---|---|---|
| Fluorine-free acrylic polymer dispersion | Production Example 1 | 4.5 | 4.0 | 3.5 | 3.25 | 3.0 | 3.25 | 3.25 | 3.25 | 3.25 |
| Silicone dispersion | Preparation Example 1 | 0.5 | 1.0 | 1.5 | 1.75 | 2.0 | | | | |
| | Preparation Example 2 | | | | | | 1.75 | | | |
| | Preparation Example 3 | | | | | | | 1.75 | | |
| | Preparation Example 4 | | | | | | | | 1.75 | |
| | Preparation Example 5 | | | | | | | | | 1.75 |
| | Preparation Example 6 | | | | | | | | | |
| | Preparation Example 7 | | | | | | | | | |
| | Preparation Example 8 | | | | | | | | | |
| | Preparation Example 9 | | | | | | | | | |
| | Preparation Example 10 | | | | | | | | | |
| | Preparation Example 11 | | | | | | | | | |
| | Preparation Example 12 | | | | | | | | | |
| | Preparation Example 13 | | | | | | | | | |
| | Preparation Example 14 | | | | | | | | | |
| | Acrylic/Silicone | 90/10 | 80/20 | 70/30 | 65/35 | 60/40 | 65/35 | 65/35 | 65/35 | 65/35 |

(continued)

| | | Example 1 | Example 2 | Example 3 | Example 4 | Example 5 | Example 6 | Example 7 | Example 8 | Example 9 |
|---|---|---|---|---|---|---|---|---|---|---|
| Water-repellency (polyester) | 0 washes | 100 | 100 | 100 | 95 | 95 | 95 | 90 | 95 | 95 |
| Durable water-repellency (polyester) | 20 washes | 90 | 90 | 90 | 90 | 95 | 90 | 90 | 90 | 90 |
| Water-repellency (nylon) | 0 washes | 100 | 100 | 100 | 95 | 95 | 95 | 90 | 95 | 95 |
| Durable water-repellency (nylon) | 20 washes | 90 | 90 | 90 | 90 | 90 | 90 | 90 | 90 | 90 |
| Water-repellency (polyester/PU) | 0 washes | 90 | 90 | 85 | 80 | 80 | 80 | 80 | 80 | 80 |
| Durable water-repellency (polyester/-PU) | 20 washes | 85 | 80 | 80 | 75 | 80 | 75 | 75 | 75 | 75 |
| Water-repellency (cotton) | 0 washes | 95 | 95 | 90 | 80 | 85 | 80 | 80 | 80 | 80 |
| Durable water-repellency (cotton) | 20 washes | 75 | 70 | 70 | 60 | 60 | 60 | 60 | 60 | 60 |
| Texture (polyester) | | 3-4 | 3-4 | 3-4 | 4 | 3-4 | 4 | 4 | 4 | 3-4 |
| Texture (nylon) | | 3 | 3 | 3-4 | 3-4 | 4 | 3-4 | 3-4 | 3-4 | 3-4 |
| Texture (polyester/-PU) | | 3 | 3 | 3-4 | 3-4 | 3-4 | 3-4 | 4 | 3-4 | 3 |
| Texture (cotton) | | 3 | 3 | 3 | 3-4 | 3-4 | 3-4 | 3-4 | 3-4 | 3 |
| Chalk mark (nylon) | | ○Δ | ○Δ | ○Δ | ○Δ | ○ | ○Δ | ○ | ○Δ | ○Δ |
| Chalk mark (polyester/PU) | | ○Δ | ○Δ | ○ | ○ | ○ | ○ | ○ | ○ | ○ |
| Peel strength (nylon) | | 10 | 10 | 10 | 10 | 11 | 10 | 10 | 9 | 9 |

[Table 3-2]

| | | Example 10 | Example 11 | Example 12 | Example 13 | Example 14 | Example 15 | Example 16 | Example 17 | Example 18 |
|---|---|---|---|---|---|---|---|---|---|---|
| Fluorine-free acrylic polymer dispersion | Production Example 1 | 3.25 | 3.25 | 3.25 | 3.25 | 3.25 | 3.25 | 3.25 | 3.25 | 3.25 |

(continued)

| | | Example 10 | Example 11 | Example 12 | Example 13 | Example 14 | Example 15 | Example 16 | Example 17 | Example 18 |
|---|---|---|---|---|---|---|---|---|---|---|
| Silicone dispersion | Preparation Example 1 | | | | | | | | | |
| | Preparation Example 2 | | | | | | | | | |
| | Preparation Example 3 | | | | | | | | | |
| | Preparation Example 4 | | | | | | | | | |
| | Preparation Example 5 | | | | | | | | | |
| | Preparation Example 6 | 1.75 | | | | | | | | |
| | Preparation Example 7 | | 1.75 | | | | | | | |
| | Preparation Example 8 | | | 1.75 | | | | | | |
| | Preparation Example 9 | | | | 1.75 | | | | | |
| | Preparation Example 10 | | | | | 1.75 | | | | |
| | Preparation Example 11 | | | | | | 1.75 | | | |
| | Preparation Example 12 | | | | | | | 1.75 | | |
| | Preparation Example 13 | | | | | | | | 1.75 | |
| | Preparation Example 14 | | | | | | | | | 1.75 |
| | Acrylic/Silicone | 65/35 | 65/35 | 65/35 | 65/35 | 65/35 | 65/35 | 65/35 | 65/35 | 65/35 |

(continued)

| | | Example 10 | Example 11 | Example 12 | Example 13 | Example 14 | Example 15 | Example 16 | Example 17 | Example 18 |
|---|---|---|---|---|---|---|---|---|---|---|
| Water-repellency (polyester) | 0 washes | 90 | 95 | 95 | 95 | 95 | 95 | 95 | 95 | 90 |
| Durable water-repellency (polyester) | 20 washes | 90 | 90 | 90 | 90 | 90 | 90 | 90 | 90 | 90 |
| Water-repellency (nylon) | 0 washes | 90 | 95 | 95 | 95 | 95 | 95 | 95 | 95 | 90 |
| Durable water-repellency (nylon) | 20 washes | 90 | 90 | 90 | 90 | 90 | 90 | 90 | 90 | 90 |
| Water-repellency (polyester/PU) | 0 washes | 80 | 85 | 85 | 80 | 85 | 80 | 85 | 85 | 80 |
| Durable water-repellency (polyester/PU) | 20 washes | 75 | 80 | 80 | 75 | 80 | 80 | 80 | 80 | 75 |
| Water-repellency (cotton) | 0 washes | 80 | 80 | 80 | 85 | 85 | 85 | 85 | 90 | 80 |
| Durable water-repellency (cotton) | 20 washes | 60 | 70 | 70 | 75 | 75 | 75 | 75 | 80 | 65 |
| Texture (polyester) | | 4 | 3-4 | 4 | 4 | 4 | 4 | 4 | 4 | 4 |
| Texture (nylon) | | 4 | 3-4 | 3-4 | 3-4 | 3-4 | 4 | 3-4 | 3-4 | 3-4 |
| Texture (polyester/PU) | | 4 | 3-4 | 3-4 | 4 | 4 | 4 | 3-4 | 4 | 4 |
| Texture (cotton) | | 3-4 | 3 | 3-4 | 3 | 3 | 3 | 3 | 3 | 3-4 |
| Chalk mark (nylon) | | ○ | ○Δ | ○ | ○ | ○Δ | ○ | ○ | ○Δ | ○ |

(continued)

| | | Example 10 | Example 11 | Example 12 | Example 13 | Example 14 | Example 15 | Example 16 | Example 17 | Example 18 |
|---|---|---|---|---|---|---|---|---|---|---|
| Chalk mark (polyester/PU) | | ○ | ○Δ | ○ | ○ | ○Δ | ○ | ○ | ○Δ | ○ |
| Peel strength (nylon) | | 9 | 10 | 11 | 10 | 10 | 10 | 9 | 10 | 10 |

[Table 4-1]

| | | Example 19 | Example 20 | Example 21 | Example 22 | Example 23 | Example 24 | Example 25 | Example 26 | **Example** 27 |
|---|---|---|---|---|---|---|---|---|---|---|
| Fluorine-free acrylic polymer dispersion | Production Example 1 | | | | | | | | | |
| | Production Example 2 | 2.7 | 3.00 | 2.6 | 2.28 | 2.00 | 1.71 | 3.00 | 3.00 | |
| | Production Example 3 | | | | | | | | | 1.63 |
| | Production Example 4 | | | | | | | | | |
| Silicone dispersion | Preparation Example 1 | 1.75 | 1.75 | 1.75 | 1.75 | 1.75 | 1.00 | 1.75 | 1.75 | 1.75 |
| | Comparative Preparation Example 1 | | | | | | | | | |
| Other components | Production Example 5 | | 0.25 | 0.65 | 0.97 | 1.25 | 1.54 | | | 1.14 |
| | Production Example 6 | | | | | | | 0.25 | | |
| | Production Example 7 | | | | | | | | 0.25 | |
| | Production Example 8 | | | | | | | | | 0.33 |
| | Production Example 9 | | | | | | | | | |
| | Production Example 10 | 0.55 | | | | | | | | |
| Silica particle dispersion (solid content 30%) | | | | | | | | | | 0.16 |
| Cross-linking agent | Blocked isocyanate | | | | | | | | | |
| | Acrylic/Silicone | 65/35 | 65/35 | 65/35 | 65/35 | 65/35 | 80/20 | 65/35 | 65/35 | 65/35 |
| Water-repellency (polyester) | 0 washes | 95 | 95 | 95 | 95 | 95 | 95 | 95 | 80 | 95 |
| Durable water-repellency (polyester) | 20 washes | 90 | 90 | 90 | 90 | 90 | 90 | 90 | 75 | 90 |
| Water-repellency (nylon) | 0 washes | 95 | 95 | 95 | 95 | 95 | 95 | 95 | 80 | 100 |
| Durable water-repellency (nylon) | 20 washes | 90 | 90 | 90 | 90 | 90 | 90 | 90 | 75 | 95 |

(continued)

| | | Example 19 | Example 20 | Example 21 | Example 22 | Example 23 | Example 24 | Example 25 | Example 26 | **Example 27** |
|---|---|---|---|---|---|---|---|---|---|---|
| Water-repellency (polyester/PU) | 0 washes | 90 | 95 | 95 | 95 | 95 | 95 | 95 | 85 | 95 |
| Durable water-repellency (polyester/PU) | 20 washes | 85 | 90 | 90 | 90 | 90 | 95 | 90 | 80 | 90 |
| Water-repellency (cotton) | 0 washes | 95 | 95 | 90 | 90 | 90 | 90 | 90 | 85 | 90 |
| Durable water-repellency (cotton) | 20 washes | 85 | 85 | 85 | 90 | 90 | 90 | 85 | 80 | 80 |
| Texture (polyester) | | 3-4 | 3-4 | 3-4 | 3 | 3 | 3 | 3-4 | 3 | 3-4 |
| Texture (nylon) | | 3-4 | 3-4 | 3-4 | 3 | 3 | 3 | 3-4 | 3 | 3-4 |
| Texture (polyester/PU) | | 3-4 | 3-4 | 3-4 | 3-4 | 3-4 | 3-4 | 3-4 | 3 | 3-4 |
| Texture (cotton) | | 3-4 | 3-4 | 3-4 | 3 | 3 | 3 | 3 | 3-4 | 3-4 |
| Chalk mark (nylon) | | ○ | ○Δ | ○Δ | ○Δ | ○Δ | ○Δ | ○ | ○Δ | ○ |
| Chalk mark (polyester/PU) | | ○ | ○ | ○ | ○Δ | ○Δ | ○Δ | ○ | ○ | ○ |
| Peel strength (nylon) | | 10 | 10 | 11 | 12 | 12 | 12 | 11 | 10 | 10 |

[Table 4-2]

| | | Example 28 | Example 29 | Example 30 | Example 31 | Comparative Example 1 | Comparative Example 2 | Comparative Example 3 | Comparative Example 4 |
|---|---|---|---|---|---|---|---|---|---|
| Fluorine-free acrylic polymer dispersion | Production Example 1 | | | | | 5.0 | 2.5 | | 3.25 |
| | Production Example 2 | | | 3.25 | 3.00 | | | | |
| | Production Example 3 | 1.63 | | | | | | | |
| | Production Example 4 | | 3.25 | | | | | | |
| Silicone dispersion | Preparation Example 1 | 1.75 | 1.75 | 1.75 | 1.75 | | 2.5 | 5.0 | |
| | Comparative Preparation Example 1 | | | | | | | | 1.75 |
| Other components | Production Example 5 | 1.14 | | | 0.25 | | | | |
| | Production Example 6 | | | | | | | | |
| | Production Example 7 | | | | | | | | |
| | Production Example 8 | | | | | | | | |
| | Production Example 9 | 0.33 | | | | | | | |
| | Production Example 10 | | | | | | | | |
| Silica particle dispersion (solid content 30%) | | | | | | | | | |
| Cross-linking agent | Blocked isocyanate | | | 1 | 1 | | | | |
| | Acrylic/Silicone | 65/35 | 65/35 | 65/35 | 65/35 | 100/0 | 50/50 | 0/100 | 65/35 |
| Water-repellency (polyester) | 0 washes | 85 | 95 | 95 | 95 | 100 | 90 | 90 | 95 |
| Durable water-repellency (polyester) | 20 washes | 80 | 80 | 95 | 95 | 90 | 90 | 0 | 90 |
| Water-repellency (nylon) | 0 washes | 85 | 95 | 95 | 95 | 100 | 95 | 90 | 95 |
| Durable water-repellency (nylon) | 20 washes | 85 | 80 | 95 | 95 | 90 | 90 | 50 | 90 |

(continued)

| | | Example 28 | Example 29 | Example 30 | Example 31 | Comparative Example 1 | Comparative Example 2 | Comparative Example 3 | Comparative Example 4 |
|---|---|---|---|---|---|---|---|---|---|
| Water-repellency (polyester/PU) | 0 washes | 80 | 80 | 90 | 95 | 95 | 75 | 50 | 85 |
| Durable water-repellency (polyester/PU) | 20 washes | 60 | 60 | 90 | 95 | 90 | 70 | 0 | 85 |
| Water-repellency (cotton) | 0 washes | 80 | 80 | 95 | 95 | 100 | 75 | 0 | 85 |
| Durable water-repellency (cotton) | 20 washes | 65 | 70 | 90 | 90 | 75 | 50 | 0 | 70 |
| Texture (polyester) | | 3-4 | 4 | 3-4 | 3-4 | 2-3 | 3-4 | 4-5 | 4 |
| Texture (nylon) | | 3-4 | 3-4 | 3-4 | 3-4 | 2-3 | 3-4 | 4 | 3-4 |
| Texture (polyester/PU) | | 3-4 | 3-4 | 3-4 | 3-4 | 2-3 | 3-4 | 4 | 3-4 |
| Texture (cotton) | | 3 | 3 | 3-4 | 3-4 | 2-3 | 3-4 | 3-4 | 3-4 |
| Chalk mark (nylon) | | ○Δ | ○Δ | ○ | ○ | Δ× | ○ | ○ | ○Δ |
| Chalk mark (polyester/PU) | | ○ | ○ | ○ | ○ | Δ | ○ | ○ | ○ |
| Peel strength (nylon) | | 9 | 9 | 10 | 9 | 9 | 11 | 12 | 7 |

[Table 5-1]

| | | Example 32 | Example 33 | Example 34 | Example 35 | Example 36 | Example 37 | Example 38 | Example 39 |
|---|---|---|---|---|---|---|---|---|---|
| Fluorine-free acrylic polymer dispersion | Production Example 1 | | | | | | | | |
| | Production Example 5 | 1.53 | 2.55 | 1.53 | 2.55 | 1.53 | 2.55 | 1.53 | 2.55 |
| Silicone dispersion | Preparation Example 8 | 1.47 | 2.45 | | | | | | |
| | Preparation Example 9 | | | 1.47 | 2.45 | | | | |
| | Preparation Example 10 | | | | | 1.47 | 2.45 | | |
| | Preparation Example 11 | | | | | | | 1.47 | 2.45 |
| | Preparation Example 12 | | | | | | | | |
| | Preparation Example 13 | | | | | | | | |
| Cross-linking agent | Blocked isocyanate | | 1.00 | | 1.00 | | 1.00 | | 1.00 |
| Water | | 97 | 94.0 | 97 | 94.0 | 97 | 94.0 | 97 | 94.0 |
| Total | | 100 | 100.0 | 100 | 100.0 | 100 | 100.0 | 100 | 100.0 |
| Acrylic/Silicone solid content ratio | | 51/49 | 51/49 | 51/49 | 51/49 | 51/49 | 51/49 | 51/49 | 51/49 |
| Water-repellency (polyester D-Taff) | 0 washes | 85 | 95 | 90 | 95 | 95 | 95 | 95 | 95 |
| Durable water-repellency (polyester D-Taff) | 5 washes | | 70 | | 90 | | 95 | | 90 |
| Water-repellency (polyester Haruabo) | 0 washes | 75 | 95 | 80 | 95 | 90 | 95 | 85 | 95 |
| Durable water-repellency (polyester Haruabo) | 5 washes | | 70 | | 95 | | 95 | | 95 |
| Water-repellency (nylon taffeta) | 0 washes | 75 | 95 | 75 | 95 | 80 | 95 | 75 | 95 |

(continued)

| | | Example 32 | Example 33 | Example 34 | Example 35 | Example 36 | Example 37 | Example 38 | Example 39 |
|---|---|---|---|---|---|---|---|---|---|
| Durable water-repellency (nylon taffeta) | 5 washes | | 60 | | 70 | | 85 | | 70 |
| Water-repellency (nylon Taslan) | 0 washes | 75 | 90 | 90 | 90 | 95 | 95 | 90 | 90 |
| Durable water-repellency (nylon Taslan) | 5 washes | | 70 | | 70 | | 80 | | 70 |
| Water-repellency (cotton) | 0 washes | | 75 | | 70 | | 75 | | 75 |
| Durable water-repellency (cotton) | 5 washes | | 60 | | 70 | | 70 | | 70 |
| Texture (nylon Taslan) | | 3-4 | 3 | 3-4 | 2-3 | 3-4 | 3 | 3-4 | 2-3 |
| Chalk mark (pink polyester Haruabo) | | ○ | ○Δ | ○ | ○Δ | ○Δ | ○Δ | ○ | ○Δ |
| Chalk mark (gray polyester Haruabo) | | ○ | ○Δ | ○ | ○Δ | ○ | ○Δ | ○ | ○Δ |

[Table 5-2]

| | | Example 40 | Example 41 | Example 42 | Example 43 | Example 44 | Example 45 | Comparative Example 5 | Comparative Example 6 |
|---|---|---|---|---|---|---|---|---|---|
| Fluorine-free acrylic polymer dispersion | Production Example 1 | | | | | 0.30 | 0.50 | | |
| | Production Example 5 | 1.53 | 2.55 | 1.53 | 2.55 | 1.23 | 2.05 | 3.00 | 5.00 |
| Silicone dispersion | Preparation Example 8 | | | | | | | | |
| | Preparation Example 9 | | | | | | | | |
| | Preparation Example 10 | | | | | | | | |
| | Preparation Example 11 | | | | | 1.47 | 2.45 | | |
| | Preparation Example 12 | 1.47 | 2.45 | | | | | | |
| | Preparation Example 13 | | | 1.47 | 2.45 | | | | |
| Cross-linking agent | Blocked isocyanate | | 1.00 | | 1.00 | | 1.00 | | 1.00 |
| Water | | 97 | 94.0 | 97 | 94.0 | 97 | 94.0 | 97.0 | 94.0 |
| Total | | 100 | 100.0 | 100 | 100.0 | 100 | 100.0 | 100.0 | 100.0 |
| Acrylic/Silicone solid content ratio | | 51/49 | 51/49 | 51/49 | 51/49 | 51/49 | 51/49 | 100/0 | 100/0 |
| Water-repellency (polyester D-Taff) | 0 washes | 95 | 95 | 95 | 95 | 95 | 95 | 95 | 100 |

(continued)

| | | Example 40 | Example 41 | Example 42 | Example 43 | Example 44 | Example 45 | Comparative Example 5 | Comparative Example 6 |
|---|---|---|---|---|---|---|---|---|---|
| Durable water-repellency (polyester D-Taff) | 5 washes | | 95 | | 95 | | 90+ | | 95 |
| Water-repellency (polyester Haruabo) | 0 washes | 95 | 95 | 90 | 95 | 85 | 95 | 95 | 95 |
| Durable water-repellency (polyester Haruabo) | 5 washes | | 95 | | 95 | | 95 | | 90 |
| Water-repellency (nylon taffeta) | 0 washes | 80 | 95 | 95 | 95 | 75 | 95 | 95 | 95 |
| Durable water-repellency (nylon taffeta) | 5 washes | | 90- | | 90 | | 75 | | 95 |
| Water-repellency (nylon Taslan) | 0 washes | 95 | 95 | 95 | 95 | 90 | 90 | 95 | 95 |
| Durable water-repellency (nylon Taslan) | 5 washes | | 85 | | 85 | | 75 | | 90 |

(continued)

| | | Example 40 | Example 41 | Example 42 | Example 43 | Example 44 | Example 45 | Comparative Example 5 | Comparative Example 6 |
|---|---|---|---|---|---|---|---|---|---|
| Water-repellency (cotton) | 0 washes | | 80 | | 85 | | 75 | | 95 |
| Durable water-repellency (cotton) | 5 washes | | 70 | | 70 | | 70 | | 70 |
| Texture (nylon Taslan) | | 3-4 | 2-3 | 3-4 | 3 | 3-4 | 2-3 | 2 | 2 |
| Chalk mark (pink polyester Haruabo) | | ○Δ | Δ | ○Δ | Δ | ○ | ○Δ | Δ | Δ× |
| Chalk mark (gray polyester Haruabo) | | ○ | ○Δ | ○Δ | ○Δ | ○ | ○Δ | Δ | Δ× |

## Claims

1. A water-repellent composition comprising a polymer (A) comprising a repeating unit derived from a hydrocarbon group-containing monomer (a) having a hydrocarbon group having 2 to 40 carbon atoms, and a silicone compound (B) composed of a non-resin-type silicone and a resin-type silicone,

   wherein in the GPC chart of the silicone compound (B), a peak top is present in the region of molecular weight of 1,500 or more,
   a component of the silicone compound with a molecular weight of 1,500 or more comprises a non-resin-type silicone other than an amino-modified silicone, and
   an amount of the silicone compound (B) is 1 to 49% by weight based on a sum of the amount of the polymer (A) and the amount of the silicone compound (B).

2. The water-repellent composition according to claim 1, wherein the hydrocarbon group in the hydrocarbon group-containing monomer (a) is a linear alkyl group having 10 or more carbon atoms.

3. The water-repellent composition according to claim 1 or 2, wherein the hydrocarbon group-containing monomer (a) is a monomer represented by the formula:

   $$CH_2=C(-X^a)-C(=O)-Y^a(R^a)_k$$

   wherein $R^a$ is each independently a hydrocarbon group having 2 or more and 40 or less carbon atoms,
   $X^a$ is a hydrogen atom, a monovalent organic group or a halogen atom,
   $Y^a$ is a group composed of at least one selected from a divalent to tetravalent hydrocarbon group having 1 carbon atom, $-C_6H_4-$, -O-, -C(=O)-, $-S(=O)_2-$ and -NH-, and
   k is 1 to 3.

4. The water-repellent composition according to any one of claims 1 to 3, wherein an amount of the silicone compound (B) is 15 to 45% by weight based on the sum of the amount of the polymer (A) and the amount of the silicone compound (B).

5. The water-repellent composition according to any one of claims 1 to 4, comprising a surfactant.

6. The water-repellent composition according to claim 5, wherein the surfactant comprises a nonionic surfactant.

7. The water-repellent composition according to any one of claims 1 to 6, further comprising an isocyanate derivative.

8. The water-repellent composition according to any one of claims 1 to 7, which is a water dispersion.

9. A method for producing a textile product, comprising applying the water-repellent composition according to any one of claims 1 to 8 to a fiber substrate.

10. The method for producing a textile product according to claim 9, comprising, prior to applying the water-repellent composition to the fiber substrate, imparting to the fiber one or more functional groups selected from the group consisting of:

    a monovalent group represented by $-SO_3M^1$, wherein $M^1$ represents a monovalent cation;
    a monovalent group represented by $-COOM^2$, wherein $M^2$ represents a monovalent cation; and
    a monovalent group represented by $-O-P(O)(OX^1)(OX^2)$,
    wherein $X^1$ and $X^2$ each independently represent a hydrogen atom or an alkyl group having 1 to 22 carbon atoms.

11. A textile product, wherein the polymer (A) and the silicone compound (B) in the water-repellent composition according to any one of claims 1 to 8 are adhered to a fiber substrate.

12. The textile product according to claim 11, to which a compound having one or more functional groups selected from the group consisting of:

a monovalent group represented by $-SO_3M^1$, wherein $M^1$ represents a monovalent cation;

a monovalent group represented by $-COOM^2$, wherein $M^2$ represents a monovalent cation; and
a monovalent group represented by $-O-P(O)(OX^1)(OX^2)$,
wherein $X^1$ and $X^2$ each independently represent a hydrogen atom or an alkyl group having 1 to 22 carbon atoms, is adhered.

## INTERNATIONAL SEARCH REPORT

International application No.
**PCT/JP2025/017094**

**A. CLASSIFICATION OF SUBJECT MATTER**

***D06M 15/263***(2006.01)i; ***C09D 133/00***(2006.01)i; ***C09D 183/04***(2006.01)i; ***C09K 3/18***(2006.01)i; ***D06M 13/17***(2006.01)i; ***D06M 13/224***(2006.01)i; ***D06M 15/53***(2006.01)i; ***D06M 15/643***(2006.01)i
FI: D06M15/263; C09D133/00; C09D183/04; C09K3/18 104; D06M13/17; D06M13/224; D06M15/53; D06M15/643

According to International Patent Classification (IPC) or to both national classification and IPC

**B. FIELDS SEARCHED**

Minimum documentation searched (classification system followed by classification symbols)

D06M15/263; C09D133/00; C09D183/04; C09K3/18; D06M13/17; D06M13/224; D06M15/53; D06M15/643

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/130002 A1 (NICCA CHEMICAL CO., LTD.) 25 June 2020 (2020-06-25) claims, paragraphs [0131]-[0139], [0159]-[0188], example 17 | 1-9, 11 |
| Y | | 10, 12 |
| Y | JP 2017-210704 A (NICCA CHEMICAL CO., LTD.) 30 November 2017 (2017-11-30) claims, paragraph [0008] | 10, 12 |
| Y | JP 2022-169275 A (DAIKIN INDUSTRIES, LTD.) 09 November 2022 (2022-11-09) claims, paragraphs [0004], [0174]-[0197] | 10, 12 |
| A | JP 48-050099 A (SHIN-ETSU CHEMICAL CO., LTD.) 14 July 1973 (1973-07-14) claims, examples | 1-12 |
| A | WO 2022/080243 A1 (SHIN-ETSU CHEMICAL CO., LTD.) 21 April 2022 (2022-04-21) claims, examples | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 July 2025** | **29 July 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2025/017094**

**C. DOCUMENTS CONSIDERED TO BE RELEVANT**

| Category* | Citation of document, with indication, where appropriate, of the relevant passages | Relevant to claim No. |
|---|---|---|
| A | JP 2000-256969 A (KABUSHIKI KAISHA SOFT 99 CORPORATION) 19 September 2000 (2000-09-19) claims, examples | 1-12 |
| A | WO 2021/132172 A1 (MITSUI CHEMICALS, INC.) 01 July 2021 (2021-07-01) claims, examples | 1-12 |

Form PCT/ISA/210 (second sheet) (July 2022)

**INTERNATIONAL SEARCH REPORT**
**Information on patent family members**

International application No.
**PCT/JP2025/017094**

| Patent document cited in search report | Publication date (day/month/year) | Patent family member(s) | Publication date (day/month/year) |
|---|---|---|---|
| WO 2020/130002 A1 | 25 June 2020 | US 2022/0074131 A1<br>claims, paragraphs [0122]-[0130], [0159]-[0188], example 17<br>EP 3901360 A1<br>CN 113227486 A<br>KR 10-2021-0096286 A<br>TW 202031860 A | |
| JP 2017-210704 A | 30 November 2017 | CN 107435245 A<br>KR 10-2017-0134227 A<br>TW 201809401 A | |
| JP 2022-169275 A | 09 November 2022 | US 2024/0060232 A1<br>claims, paragraphs [0010], [0218]-[0241]<br>JP 2023-178300 A<br>WO 2022/230617 A1<br>EP 4332134 A1<br>TW 202302670 A<br>CN 117222681 A<br>KR 10-2023-0145424 A | |
| JP 48-050099 A | 14 July 1973 | (Family: none) | |
| WO 2022/080243 A1 | 21 April 2022 | US 2024/0279484 A1<br>claims, examples<br>EP 4230688 A1<br>CN 116490551 A<br>KR 10-2023-0088385 A<br>TW 202223062 A | |
| JP 2000-256969 A | 19 September 2000 | US 6475934 B1<br>claims, examples<br>EP 1035200 A2<br>HK 1029555 A<br>CN 1265992 A | |
| WO 2021/132172 A1 | 01 July 2021 | US 2023/0037578 A1<br>claims, examples<br>JP 2024-120930 A<br>EP 4083078 A1<br>CN 114867815 A<br>KR 10-2022-0128612 A<br>TW 202134307 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020130002 A
- WO 2019131456 A
- JP 2017226946 A
- WO 2012090580 A


### Non-patent literature cited in the description


- Seni Sensyoku Kako Jiten. THE NIKKAN KOGYO SHIMBUN, LTD., 1963, 396-397
- Irozome Kagaku. Jikkyo Shuppan Co., Ltd., 1975, vol. III, 256-260
- Sensyoku Shiage Kiki Soran. Fiber Japan CO., LTD., 1981
- Sensyoku Shiage Kiki Soran. Fiber Japan CO., LTD., 1981, 196-247